(19) Europäisches Patentamt
European Patent Office
Office européen des brevets

(11) EP 3 107 204 B1

(12) **EUROPEAN PATENT SPECIFICATION**

(45) Date of publication and mention of the grant of the patent:
**05.05.2021 Bulletin 2021/18**

(21) Application number: **14882088.9**

(22) Date of filing: **10.02.2014**

(51) Int Cl.:
***H02P 29/00*** *(2016.01)* ***H02P 29/60*** *(2016.01)*

(86) International application number:
**PCT/JP2014/052994**

(87) International publication number:
**WO 2015/118678 (13.08.2015 Gazette 2015/32)**

(54) **MOTOR POWER CONVERSION DEVICE**

MOTORLEISTUNGSWANDLER

DISPOSITIF DE CONVERSION DE PUISSANCE POUR MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.12.2016 Bulletin 2016/51**

(73) Proprietor: **Hitachi Industrial Equipment Systems Co., Ltd.**
**Tokyo 101-0022 (JP)**

(72) Inventors:
- **KOBAYASHI, Sumio**
**Chiba 275-0001 (JP)**
- **TAKASE, Makoto**
**Tokyo 101-0022 (JP)**

(74) Representative: **Mewburn Ellis LLP**
**Aurora Building**
**Counterslip**
**Bristol BS1 6BX (GB)**

(56) References cited:
**CN-A- 101 820 167**
**DE-A1-102009 001 258**
**DE-A1-102012 200 199**
**JP-A- H1 118 470**
**JP-A- H1 189 083**
**JP-A- 2007 043 835**
**JP-A- 2007 104 778**
**US-A1- 2012 249 039**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 107 204 B1

## Description

TECHNICAL FIELD

The present invention relates to a motor power conversion device, and more particularly to a motor power conversion device which detects loss of a motor to perform overload protection of the motor.

BACKGROUND ART

In a fan, an air conditioner, a pump, a food processing machine, a packaging machine, a conveyance machine, and the like, in various production plants in the general industry, an inverter driven general-purpose induction-type motor and an inverter driven permanent magnet-type brushless DC motor are used for application of speed control of a power source. Further, in a semiconductor, liquid crystal manufacturing apparatus, an electronic component manufacturing assembling machine, an industrial robot, a metal working machine, a forging machine, other production sites, and the like, and also in an amusement apparatus, a medical apparatus, an electronic automatic toll collection system, an elevator, a vehicle simulator, and the like, a permanent magnet-type AC servo motor, and an induction-type motor dedicated for vector control inverter drive are used, by taking advantage of excellent servo control, for application of speed and torque control, position control in acceleration and constant speed operation, deceleration and positioning stop control, and the like.

In the forging machine, in which, to form a body, or the like, of an automobile, a plate is die-cut and then the die-cut plate is drawn by a pressing machine, an AC servo motor having excellent low-speed high-torque characteristics is used as a drive motor. In an example of the pressing machine using the AC servo motor, since a slide can be moved up and down at rapid acceleration and deceleration repeatedly many times, a die drawing process is performed in such a manner that the slide at high speed operation is rapidly slowed down immediately before a material. Thereby, it is possible to perform processes, such as a process for preventing seizure due to the temperature rise of the die, a process for improving the accuracy of the outer diameter of a formed article, a process in which a hydraulic apparatus can be operated by temporally stopping the slide during pressurization, and the like, which processes are difficult to perform with conventional pressing machines.

In the AC servo motor, a high-performance permanent magnet using rare earth (for example, neodymium (Nd)) is used as the rotor to correspond to these required performances, and the inside of the motor is placed in a high-temperature environment in operation. For this reason, in order to further improve the heat resistance of the permanent magnet, dysprosium (Dy) as an additive is partly used, and thereby the moment of inertia is reduced to obtain high response. Further, the AC servo motor for the servo press machine is exclusively designed so that the highest efficiency is set in the low-speed high-torque region in which the AC servo motor is most frequently used.

However, in the servo press machine, it is required to increase the rotation speed, and also it is required that rotational energy is stored in a high speed region in no-load operation, and in the next operation, processing for forming a hole in a steel material, or the like, is performed by using the stored energy.

It is difficult to design an AC servo motor in which the efficiency is maximized in both the low-speed high-torque region and the new high-speed region. Therefore, on the basis of the specification of the pressing machine, it is determined whether the emphasis is placed on the design in which the efficiency is maximized in the low-speed high-torque region as in the conventional manner, or on an intermediate design in which there is a balance between the efficiency in the low-speed high-torque region and the efficiency in the high-speed region.

In the above-described situation, it has been found that, in the AC servo motor using the high-performance permanent magnet for the rotor thereof, a phenomenon that the temperature rise of the motor is large when the load torque is not the rated torque occurs in the high speed region to affect the iron loss of the motor. The iron loss is a loss generated in the iron core and is caused by magnetic flux passing through the iron core. In order to reduce the iron loss, the iron core of the motor is formed by stacking thin silicon steel plates. Further, overload of the iron loss cannot be effectively reduced by electronic thermal based on motor current. The influence of the iron loss, which is not a problem in a common permanent magnet used in a conventional AC servo motors, is more remarkable in a higher-performance permanent magnet.

Also, in an induction-type motor, when the voltage applied to the motor is increased and when the motor is thereby over-excited, there is a case where the motor is burned even when the motor current is the rated current or less.

CITATION LIST

PATENT LITERATURE

PATENT LITERATURE 1: JP-A-2008-172949
PATENT LITERATURE 2: JP-A-10-174276
PATENT LITERATURE 3: JP-A-2008-220002

US 2012/249039 A1 describes a temperature estimating unit including an energy calculating unit that calculates a heat generation energy rate of a motor on the basis of a difference between power input to the motor and power output from the motor, a heat radiation energy calculating unit that calculates a heat radiation energy rate from a target member on the basis of a difference between a previous temperature estimation value Tm of the target member and an ambient temperature, and a thermal coefficient of the target member, and an amount calculating unit that calculates a temperature increase rate of the target member on the basis of a difference between the heat generation energy rate and the heat radiation energy rate,; and an estimation value calculating unit that calculates a current temperature estimation value of the target member on the basis of the temperature increase rate and the previous temperature estimation value.

JP 2007 104778 A describes a torque instruction being inputted from the external apparatus to a current instruction table and a target operating point calculating means.

DE 10 2012 200 199 A1 describes a method for operating electromotor i.e. direct current-electromotor, for driver assistance system in vehicle, involves determining temperature and taking action for controlling electromotor when detected temperature exceeds threshold.

NON PATENT LITERATURE

NON PATENT LITERATURE 1: "Hitachi review, vol. 83, No. 3, Feature 2: Recent industrial motor drive appliances and their applications" issued by Hitachi Hyoronsha on March, 2001

SUMMARY OF INVENTION

TECHNICAL PROBLEM

Since, in a motor drive system using a motor drive power conversion device, it is required to improve the response by reducing the inertia of the rotator of the motor, a high-performance magnet is adopted in a permanent magnet-type motor (referred to as PM motor). On the other hand, it is required to increase the rotation speed of the motor. In this case, in spite of that the current of the motor is the rated current or less in a high speed region, the temperature of the motor is increased due to an increase in iron loss, and hence it is required to protect the motor by a temperature detector incorporated in the motor winding. This results in a problem that the cost is increased when a temperature detector is provided. Further, as a method for detecting overload of the motor, an electronic thermal protection detection method is used, in which the current of the motor is detected and in which, when the currentsquared-time value is integrated to reach a constant value, the operation of the motor is stopped to protect the burning of the motor. However, the iron loss cannot be protected by the detection of motor current. Also in the induction-type motor, when the voltage applied to the motor is increased, the motor is overexcited, so that the motor may be burned even in the case where the motor current is the rated current or less.

The types of loss of a motor are represented in Table 2 of page 45 shown in Non Patent Literature 1 about the methods for reducing loss of the motor. In the loss column in the table, there are shown five types of loss of mechanical loss, iron loss, primary copper loss, secondary copper loss, and stray load loss. It should be noted that the secondary copper loss is generated in the induction-type motor and is excluded in the case of an AC servo motor and a DCBL motor, the rotor of each of which is made of a permanent magnet. Further, FIG. 3 of page 45 shown in Non Patent Literature 1 illustrates a relationship between the loss of the motor and the load factor, and describes that the iron loss and the mechanical loss are not affected by variations of the load factor.

Patent Literature 1 describes that, when the motor is an induction motor and operated in the overexcited state, the electronic thermal, which performs the usual overload protection of the motor, cannot surely perform overload protection in view of increasing iron loss. For this reason, a method is disclosed in which the ratio between the ratio of rated voltage/rated frequency serving as a reference of the motor, and the ratio of output voltage command/frequency command obtained after correction in a frequency voltage calculation section, is calculated as the magnetic flux ratio, and in which, when the motor is determined to be overexcited on the basis of the magnetic flux ratio, overheat protection is performed by correcting the detected current value of the motor according to the overexcited state of the motor. In this method, in order to determine the degree of correction of the detected current value, it is necessary to grasp the total loss of the motor, the amount of loss due to iron loss. However, in Patent Literature 1, only copper loss and iron loss are described, but the total power is not described. Further, in order to grasp the amount of each type of loss of the motor, it is necessary to perform magnetic field analysis simulation of the motor. However, when the power converter (inverter) is a voltage/frequency control device, it is considered that the manufacturer of the motor may be different from the manufacturer of the voltage/frequency control device, and hence, in many cases, the data used in the magnetic field analysis simulation cannot be obtained.

In the induction motor of Patent Literature 2, a temperature detector, as a device for protecting the motor, is provided near the stator winding to protect the stator winding from being burned. However, this causes a problem that the cost is increased due to installation of the temperature detector.

In Patent Literature 3, it is described that, in the conventional overload protection of the motor, only copper loss is considered, but mechanical loss and iron loss are considered, and hence overload detection is performed when it is determined that an estimation value of the sum of copper loss and rotation loss exceeds a predetermined value. However, in Patent Literature 3, the value of each of the types of loss of the motor is not discussed. Further, in Patent Literature 3, after the average value of current detection values of the motor and the average value of speed detection values of the motor are respectively obtained, ratios are obtained by respectively dividing the average values by the rated current and the rated rotation speed, so that the total value of the ratios is obtained and discussed. Therefore, Patent Literature 3 does not refer to the types of loss of each individual motor and the amount of each of the types of loss.

The overload protection cannot be performed by an electronic thermal monitoring based on motor current, and hence, instead of the overload protection based on the motor current detection, overload protection based on the motor temperature rise, which is influenced by iron loss, mechanical loss, and stray load loss, is proposed as an accurate overload protection method.

Further, when the types of loss of the motor are classified into no-load loss and load loss, the no-load loss includes iron loss and mechanical loss, and the iron loss is further classified into hysteresis loss and eddy current loss. Further, the load loss includes copper loss and stray load loss, and the copper loss is further classified into primary copper loss, and secondary copper loss in an induction-type motor. In general, the loss obtained by subtracting copper loss, iron loss, and machine loss from the total loss is regarded as stray load loss which is difficult to be quantitatively estimated. As hysteresis loss and eddy current loss of iron loss, Steinmetz’s empirical formula is conventionally known, and hysteresis loss Ph is obtained by the following relationship (MATH. 1), and overcurrent disadvantage Pe is obtained by the following relationship (MATH. 2).

[MATH. 1]

$$\text{(MATH. 1)} \qquad Ph = Kh \times f \times Bm^{1.6}$$

Here, Kh: proportional constant, f: frequency, Bm: maximum magnetic flux

[MATH. 2]

$$\text{(MATH. 2)} \qquad Pe = Ke \times (t \times f \times Bm)^2/\rho$$

Here, Ke: proportional constant, t: iron plate thickness, f: frequency, Bm: maximum magnetic flux, p: resistivity of magnetic body

The hysteresis loss is proportional to the frequency (motor rotation speed), and the eddy current loss is proportional to the square of frequency (motor rotation speed) and becomes large at high speed. The iron loss can be obtained by magnetic field analysis simulation because the magnetic circuit is formed by the material, the plate thickness of the rotor core, and a hole shape of the core cross-section.

It is important that the total amount of various loss can be accurately detected, so that, on the basis of the detected total loss, the burning of the coil, and the like, is prevented to protect the motor.

SOLUTION TO PROBLEM

In order to solve the above-described problem, for example, the configurations defined by the appended claims 1, 4, 5, 7 or 8 is applied. Further embodiments are defined by dependent claims 2, 3 and 6.

Further, in the motor power conversion device, the total-loss time-integration counter is operated when time integration of the total loss of the motor, which total loss including the loss of a reverse converter of the motor power conversion device, reaches a constant value.

Further, any of an AC motor, a DC motor, a permanent magnet-type motor, or an induction-type motor serves to convert electrical energy to work energy. However, all of input power Pin inputted into the motor is not used as the work energy, and a part of the input power Pin is wastefully consumed to generate heat and sound. The electric power used as the work energy is output power Pout, which gives torque T and rotation speed Nf to a load connected to the motor. Input and output are represented by unit of watts (W). Relational expressions of input Pin, output Pout, loss Ploss, and efficiency η are shown by the following (MATH. 3) and (MATH. 4).
[MATH. 3]

$$\text{(MATH. 3)} \quad \eta = \text{Pout/Pin} \times 100 \quad (\%)$$

[MATH. 4]

$$\text{(MATH. 4)} \quad P_{LOSS} = \text{Pin} - \text{Pout} \quad (\text{W})$$

Most of the loss of the motor is conducted, as heat, through a metal solid, such as an installation jig, to be discharged to the atmosphere from cooling fins on the surface of the motor by nature or forced convection and radiation. A part of the loss of the motor emitted as sound to the surroundings. When the temperature of the motor is increased, copper loss is generated by (square of current flowing into winding) x (winding resistance), so that magnetic flux generated in the iron core is changed and thereby the stator-side core and the rotator-side core having a magnet embedded therein generate heat. The stator-side core is provided with a motor winding, and when the core generates heat due to iron loss, the temperature of the winding is also increased through the core. Further, the loss due to friction of bearings, and the loss due to ventilation resistance of a fan act as machine loss to also increase the temperature of the motor winding. Other than the loss described above, there is stray load loss which occurs due to a decrease, and the like, of magnetic flux density in the gap between the rotator and the stator.

It should be noted that, when the motor and the motor drive power conversion device are both installed in a user's machine, and when the temperature of the motor is increased, and thereby, the temperature of the motor drive power conversion device in the same room as the motor is also increased under the influence of the temperature of the motor, the protection is performed on the basis of the total loss obtained from the sum of the motor loss and the loss of the motor drive power conversion device (inverse converter).

In this way, the motor protection is realized in such a manner that: the total loss including iron loss which cannot be detected by the current square time integration based on current detection, stray load loss which cannot be quantitatively estimated, and machine loss is set as total loss $P_{LOSS}$ (W) obtained by subtracting the output power Pout (W) from the input power Pin (W) as represented by (MATH. 4); that (MATH. 4) is always calculated when the motor performs power-running operation in a low-speed steady state, and in acceleration and deceleration states, and further when the motor performs regenerative operation in which energy flows from the output side to the input side; and that the product (J: joule) of the calculated total loss (W) and time (s) is added or subtracted, and when the resultant value reaches a pre-set threshold value based on an overload protection characteristic curve, the motor is determined to be overloaded, and the operation of the motor is stopped for protection of the motor.

It should be noted that, since joule is a unit of energy, the amount of heat is converted as 1J = 0.24 calorie, and here, heat is represented in joule.

ADVANTAGEOUS EFFECTS OF INVENTION

According to a surface of the present invention, the amount of total loss as the sum of various losses accurately detected, and on the basis of the detected results, the burning of the motor, and the like, can be prevented, and thereby, the motor can be protected.

Other objects and advantages of the present invention will become apparent from the following description.

BRIEF DESCRIPTION OF DRAWINGS

[FIG. 1A] FIG. 1A is a view explaining the loss of a motor of a motor drive power conversion device in an embodiment to which the present invention is applied.
[FIG. 1B] FIG. 1B is a view explaining the loss of the motor at the time of regeneration in a motor drive power conversion system provided with a power supply regenerative function in the present embodiment.
[FIG. 2] FIG. 2 is a view explaining the loss of the motor and the reverse converter in the motor drive power conversion system.

[FIG. 3A] FIG. 3A is a view explaining overload protection of an AC servo motor drive power conversion system with a permanent magnet type sensor in FIG. 1A.

[FIG. 3B] FIG. 3B is a view explaining overload protection of an AC servo motor drive power conversion system with a permanent magnet type sensor in FIG. 2.

[FIG. 4A] FIG. 4A is a view explaining overload protection of a vector control motor drive power conversion system with an induction type sensor in FIG. 1A.

[FIG. 4B] FIG. 4B is a view explaining overload protection of a vector control motor drive power conversion system with an induction type sensor in FIG. 2.

[FIG. 5A] FIG. 5A is a view explaining overload protection of a permanent magnet type sensorless DCBL motor drive power conversion system in FIG. 1A.

[FIG. 5B] FIG. 5B is a view explaining overload protection of a permanent magnet type sensorless DCBL motor drive power conversion system in FIG. 2.

[FIG. 6A] FIG. 6A is a view explaining overload protection of an induction type sensorless vector control motor drive power conversion system in FIG. 1A.

[FIG. 6B] FIG. 6B is a view explaining overload protection of an induction type sensorless vector control motor drive power conversion system in FIG. 2.

[FIG. 7A] FIG. 7A is a view explaining overload protection of an induction type VF inverter control general-purpose motor drive power conversion system in FIG. 1A.

[FIG. 7B] FIG. 7B is a view explaining overload protection of an induction type VF inverter control general-purpose motor drive power conversion system in FIG. 2.

[FIG. 8] FIG. 8 shows time charts explaining speed, torque, outputs at the time of forward/reverse and acceleration/deceleration operations in the present embodiment.

[FIG. 9] FIG. 9 is a view explaining the rotation speed - torque characteristics with output polarity codes in four-quadrant regions in the present embodiment.

[FIG. 10] FIG. 10 is a view explaining an equivalent circuit of a phase of a permanent-magnet type synchronous motor of the present embodiment.

[FIG. 11] FIG. 11 is a view explaining a vector diagram at the time of power running of the permanent-magnet synchronous motor in the present embodiment.

[FIG. 12] FIG. 12 is a view explaining a vector diagram at the time of regeneration of the permanent-magnet synchronous motor in the present embodiment.

[FIG. 13] FIG. 13 is a view explaining the maximum torque of the VF control inverter in the present embodiment.

[FIG. 14] FIG. 14 is a view explaining input, loss, and output power in the rotation speed - torque characteristics of the motor at the time of power running in the present embodiment.

[FIG. 15] FIG. 15 is a view explaining input, loss, and output power in the rotation speed - torque characteristics of the motor at the time of regeneration in the present embodiment.

[FIG. 16] FIG. 16 is a view explaining the electronic thermal operation time at the time of addition and subtraction in the present embodiment.

[FIG. 17] FIG. 17 is a view explaining the weight value when the maximum total loss is applied in the present embodiment.

[FIG. 18] FIG. 18 is a view explaining a weight value at the time of total loss time integration of the electronic thermal in the present embodiment.

[FIG. 19] FIG. 19 is a view explaining an overload protection characteristic curve (b) different from FIG. 14 in the present embodiment.

[FIG. 20] FIG. 20 is a view explaining an operation in which the winding temperature is increased form an upper limit value in a use temperature range of a motor of each motor heat-resistant class, to a heat-resistant limit value under application of overload.

[FIG. 21] FIG. 21 is a partial view of an electronic thermal circuit of the overload protection characteristic curve (b) of FIG. 18 when the electronic thermal circuits of FIG. 3a to FIG. 7b in the present embodiment are replaced by the electronic thermal circuit in FIG. 21.

[FIG. 22] FIG. 22 is a view explaining a change of the motor winding temperature in the present embodiment.

[FIG. 23] FIG. 23 is a view explaining operation after a motor winding temperature is preset by the motor drive power conversion device in the present embodiment.

[FIG. 24] FIG. 24 is a view explaining another modes of the electronic thermal circuits of FIG. 3A to FIG. 7B in the present embodiment.

[FIG. 25] FIG. 25 is a view in which the ambient temperature of the motor is detected by a temperature sensor in the present embodiment.

DESCRIPTION OF EMBODIMENTS

In the following, embodiments according to the present invention will be described.

FIG. 1A is a view explaining loss of a motor 1a in a motor drive power conversion system. Reference character 1a denotes an AC motor. A power supply supplied from an AC power supply is rectified by a forward converter 2a and smoothed by a smoothing capacitor 3 to be converted into a direct current. Next, the DC current is again converted into an AC current by a reverse converter 4 to drive the motor 1a while controlling the torque and rotation speed of the motor 1a. It should be noted that the reverse converter 4 is configured by switching elements 5 and fly wheel diodes 6. The output Pout of the motor 1a is supplies, as rotation speed Nf and torque T, to a motor output shaft, which supplies power to a machine load to drive the machine. The unit of the motor output Pout is represented by watts (W). On the other hand, an input power Pin is given, from a motor drive apparatus, as each phase voltage V, each phase current T, and a power factor cos φ as the phase difference between the phase voltage V and phase current I. The unit of the three-phase power is watt (W). The difference between the input power and the output power is a total loss including copper loss, iron loss, stray load loss, machine loss, and the like. The total loss including these is converted into heat and sound of the motor which are released into the surrounding. It should be noted that the width of the arrow in the figure represents the order of magnitude of power. Since, in a steady state, the motor 1a receives the input power Pin, and outputs the motor output Pout, the motor output Pout is smaller than the input power Pin, and hence, the difference between the motor output Pout and the input power Pin becomes a loss Ploss.

FIG. 1B shows the case of an elevator motor 1b operated in a four-quadrant operation. The elevator motor performs ascending and descending operations in the vertical direction. At the time of descending, the elevator motor performs regeneration operation moving a vehicle cage in the descending direction with smooth speed while suppressing the falling of the vehicle cage in the gravity direction and outputting motor torque in the ascending direction. In the regeneration operation, since the vehicle cage is descended by gravity, and thereby, the motor shaft is rotated from the outside, the elevator motor operates in a kind of a generator mode. The generated (regenerated) energy is returned from the elevator motor 1b to the reverse converter 4 so as to be charged in the smoothing capacitor 3. Reference character 2b denotes a forward converter, having a power regeneration function and having the same configuration as that of the reverse converter 4. The generated (regenerated) energy stored in the smoothing capacitor 3 is transferred to the power supply through an AC reactor 49. At this time, the input power Pin and the motor output Pout have a relationship such that the energy is made to flow from the load (machinery) side through the motor 1b to be transferred to the power supply via the reverse converter 4, the smoothing capacitor 3, the forward converter having the power regeneration function 2b, and the AC reactor 49. At this time, the direction of the arrow in FIG. 1B is opposite to the direction of the arrow in FIG. 1A, and the width of the arrow of the motor output Pout is large, and the width of the arrow of the input power Pin is small.

It should be noted that the direction of the arrow of loss Ploss at this time is the same as the direction of the arrow of lose in FIG. 1a, and the direction of the arrow cannot be in the reverse direction (energy generation direction).

In FIG. 2, while the configuration of the motor and the motor drive power conversion device is the same as that of FIG. 1a, the input power Pin is not set as the input terminal section of the motor, but is set as the input section of the reverse converter 4 of the motor drive apparatus, that is, intermediate potential of the output point of the forward converter 2a is set as potential between terminals of a smoothing capacitor 3. Since, in a user machine, the motor and the motor drive power conversion device are both provided in the machine, the temperature of the motor drive power conversion device in the same room as the motor is also increased due to the increase of temperature of the motor, so that the room temperature is increased by both the increases of temperature. Therefore, FIG. 2 shows the case where the sum of the loss of the motor and the loss of the motor drive power conversion device is regarded as the total loss.

FIG. 3A is a view explaining an overload protection block diagram of an AC servo motor drive power conversion system having a permanent magnet encoder (sensor). In FIG. 3A, the output (motor input terminal section) of the reverse converter 4 shown in FIG. 1a is set as the point at which the input power Pin is detected is set. Reference character 2a denotes a forward converter by which an AC power supply is full-wave rectified to be converted into a DC current, and smoothed by the smoothing capacitor 3 to be a smooth DC current. This DC power supply is connected to the reverse converter 4 which is configured by the switching elements 5 and the flywheel diodes 6 each connected in anti-parallel to the switching element. The output of the reverse converter 4 is connected to the motor 1a via a U-phase current detector CTu 9 and a W-phase current detector CTw 10 which are respectively arranged at power lines. Reference character 1a denotes the motor as a whole. The motor 1a is an AC servo motor and a permanent-magnet synchronous motor 7a, and is configured by the permanent-magnet synchronous motor 7a, and an encoder 8 which is mechanically connected to the motor shaft and which detects the position and rotation speed of the motor 7a and detects the polar position of the rotor of the motor 7a.

The output of the encoder 8 is outputted to a position and speed magnetic pole position calculator 17a of a control logic circuit 29. In the position and speed magnetic pole position calculator 17a, the difference ε (= N - Nf) between a speed command N and the rotation speed Nf of the permanent-magnet synchronous motor 7a is obtained by a speed error amplifier 25, and is amplified by a speed controller (ASR) 11. The amplified signal Iq becomes a torque current command and is outputted to a q-axis current error amplifier 27. On the other hand, the currents of the permanent-magnet synchronous motor 7a are detected by the U-phase current detector CTu 9 and the W-phase current detector CTw 10 to become current feedback Iuf and an Iwf signals, and are outputted to a 3-phase/2-phase converter 16 of the control logic circuit 29.

In the 3-phase/2-phase converter 16 to which the Iuf and Iwf signals are inputted, the three-phase signals are converted into two-phase signals represented by a d-q orthogonal coordinate system. At this time, in the position and speed magnetic pole position calculator 17a, the three-phase signals are converted into two-phase signals on the basis of the magnetic pole position signal θr of the rotator of the motor 7a. In the q-axis current error amplifier 27, a difference (Iq - Iqf) between a torque current command signal Iq and a torque feedback current Iqf, as one of the two signals of the 3-phase/2-phase converter 16, is calculated, and the difference is amplified in a q-axis current controller (ACR) 13, so that a q-axis motor voltage command Vq is outputted. It should be noted that, when a d-axis current command Id is zero, the control is performed by the magnetic flux of the permanent magnet of the rotator. When a current having a certain value flows as the d-axis current command Id, field weakening control, control of power factor and efficiency by changing the current phase, and the like, are performed. From a d-axis current error amplifier 26, the difference (Id - Idf) between the d-axis current command Id and the d-shaft feedback current Idf is outputted and is amplified by a d-axis current controller (ACR) 12 to becomes a d-axis motor voltage command Vd.

In a 2-phase/3-phase converter 14, the 2-phase signals of the Vd and Vq signals in the d-q orthogonal coordinate system are converted to 3-phase signals of Vu, Vv and Vw. It should be noted here that the conversion is performed on the basis of the magnetic pole position signal θr of the position and speed magnetic pole position calculator 17a. The 3-phase signals Vu, Vv and Vw are given, as gate signales of the switching elements 5 of the reverse converter 4 and in the form of PWM (Pulse Width Modulation) signals, to a PWM circuit 15 to control the permanent-magnet synchronous motor (SM) 7a.

Next, a total loss calculation and integration circuit 23 will be described. The speed controller (ASR) 11, the d-axis and q-axis current controllers (ACR) 12 and 13, the 2-phase/3-phase converter 14, the 3-phase/2-phase converter 16, the position and speed magnetic pole position calculator 17a, and error amplifiers 25 to 27 in the control logic circuit 29 are realized by cooperation of software with CPU and DSP. Similarly, each of the block diagrams in the total loss calculation and integration circuit 23 is realize by collaboration of a calculation apparatus with software. With the motor current feedback signals of Iuf and Iwf, torque T of the motor is calculated in a torque calculator 18. When the d-axis current command Id is zero, the motor torque T is proportional to Iqf. When a current flows as the d-axis current command Id, the torque is calculated with motor constants, and Idf and Iqf. Reference numeral 19 denotes an output Pout calculator which take-in the rotation speed Nf from the output of the position and speed magnetic pole position calculator 17a, and take-in the torque T from the torque calculator 18 to calculate and obtain the motor output Pout = 2π N f·T/60. It should be noted that the motor output Pout is shown in FIG. 8. FIG. 8 shows time charts for explaining speed, torque, and output at the time of acceleration and deceleration operation of the permanent magnet type motor. FIG. 8 shows acceleration, constant speed (each power running operation), and deceleration (regenerative operation) at the time of normal rotation and reverse rotation. As for the torque at the time of acceleration and deceleration, at the time of normal rotation, the acceleration torque in the plus direction is applied to the load torque T1 due to friction, and the deceleration torque in the minus direction is attached to the load torque T1. At the time of a reverse rotation, the load torque due to friction is in the minus direction, and the acceleration torque in the minus direction is attached to the load torque, and the deceleration torque in the positive direction is attached to the load torque. The output Pout becomes a product of the rotation speed Nf and the torque T with a positive or negative polarity. FIG. 8 shows the state of the output Pout (W).

FIG. 9 is a view explaining output codes of four quadrant outputs of the rotation speed-torque characteristics. In the first quadrant in which the rotation speed is (+), and the torque is also (+), the output Pamax obtained by multiplying these is (+), and hence, power running operation is performed. In the third quadrant in which, contrary to the first quadrant, the rotation speed and the torque are both (-), the output Pamax obtained by multiplying these is (+), and power running operation is performed. In the fourth quadrant in which only the polarity of torque is reversed to (-) in the first quadrant, the output is (-), and regenerative operation is performed. In the second quadrant in which the polarity of torque is reversed to (+) in the third quadrant, the output is (-), and regenerative operation is performed. That is, when the polarity of the torque is applied in the same direction as the rotational speed, power running operation is performed, and the electrical energy obtained from the power supply is given to the machine side as power. Further, when the polarity of the torque is applied in the direction opposite to the direction of the rotational speed, the regenerative operation is performed so that the power energy on the machine side is returned to the power supply.

Returning to FIG. 3A, explanation is performed. Reference numeral 20 denotes a current calculator in which effective current I of the motor is calculated by following (MATH. 5).

[MATH. 5]

$$\text{(MATH. 5)} \qquad I = \{(Idf)^2 + (Iqf)^2\}^{1/2}$$

The calculated effective current I is outputted to a motor input power calculator 21. The motor phase voltage (effective value) V is inputted from the 2-phase/3-phase converter 14 into the motor input power calculator 21. Since the three-phase phase voltages Vu, Vv and Vw are calculated in the 2-phase/3-phase converter 14 and outputted to the PWM circuit 15, the effective value V of the three-phase voltages is inputted into the motor input power calculator 21.

It should be noted that $I \cdot \cos\varphi$ is required in the motor input power calculator 21. The motor input phase voltage and the power factor $\cos\varphi$ of current will be described with reference to FIGS. 10 to 12. FIG. 10 is a view explaining an equivalent circuit of one phase of the permanent-magnet synchronous motor. When the permanent-magnet synchronous motor rotates, the permanent-magnet synchronous motor serves as a generator to generate an induced voltage E0. The current flowing into the motor is set as Iqf. When the current flows, a voltage drop of Ra-Iqf is generated in the resistance Ra of the motor winding, and further, a reactance drop of $j\omega \cdot La \cdot Iq$ f is generated in the inductance La. FIG. 11 and FIG. 12 show vector diagrams of the voltage drop and the reactance drop. FIG. 11 is a vector diagram when the permanent-magnet synchronous motor performs the power running operation, and FIG. 12 is a vector diagram when the permanent-magnet synchronous motor performs the regenerative operation. The phase angle $\varphi$ between the phase voltage and current of the motor input is shown in FIG. 11 and FIG. 12. At the time of power running operation, the phase angle $\varphi$ is $0 < \varphi < 90°$, and $\cos\varphi$ has a positive value. At the time of the regenerative operation, the phase angle $\varphi$ is $90° < \varphi < 180°$, and $\cos\varphi$ has a negative value.

Here again, returning to FIG. 3A, explanation is performed. The phase angle $\varphi$ is calculated as the power factor $\cos\varphi$ in the motor input power calculator 21. The three-phase input power Pin is calculated in the motor input power calculator 21 and obtained as three times of single-phase $V \cdot I \cdot \cos\varphi$. The Pout and Pin are calculated in the output Pout calculator 19 and the motor input power calculator 21. In the subtraction circuit 28, Pin-Pout is calculated, and the total loss Ploss of the motor is calculated. The total loss Ploss is sent in an electronic thermal circuit 22, and the total loss Ploss is converted into a weight value at every sampling time ts as an electronic thermal calculation period. At the every sampling time, the addition and subtraction of the weight value in the electronic thermal circuit 22 is performed in such a manner that, when the total loss Ploss exceeds a rated loss, the weight value is added to an electronic counter of the electronic thermal circuit 22, that, when the total loss Ploss is less than the rated loss, the weight value is subtracted from the electronic counter, and that, when the total loss Ploss is equal to the rated loss, the weight value of zero is added to the electronic counter. During operation of the motor, the addition and subtraction of the total loss are always performed. When the value of the electronic counter reaches a threshold value, it is determined that the motor is overloaded, and then, an OL signal is outputted to a protection processing circuit 24, so that the motor is stopped by overload protection of the motor.

FIG. 3B is a view explaining an overload protection block diagram of an AC servo motor drive power conversion system with the permanent magnet encoder (sensor) in FIG. 2. In FIG. 3B, the point at which the input power Pin is detected is not the input terminal section of the motor, but is the input section of the reverse converter 4 of the motor drive apparatus and is set to intermediate potential of potential between both ends of the smoothing capacitor 3, that is, which is the same as the potential of the output of the forward converter 2a. FIG. 3B is different from FIG. 3A in that a DC-side current detector 32 detecting the output current Idc of the forward converter 2a is provided, and the voltage between both ends of the smoothing capacitor 3 (voltage between P-N) is detected by a voltage dividing resistor, so that the output current Idc and the divided voltage Vpn are inputted to a DC input power calculator 34 via an isolation amplifier, and the output Pin is derived by taking the product of the voltage and current signals. It should be noted that the DC-side current detector 32 detects the current on the negative side (N side) of the forward converter 2, but the DC-side current detector 32 may detect the current on the positive side (P side) of the forward converter 2. Further, the current is detected between the smoothing capacitor 3 and the side of the forward converters 2, but the current may be detected between the smoothing capacitor 3 side and the side (N side) of the reverse converter 4. Further, the current may be detected between the smoothing capacitor 3 side and the side (P side) of the reverse converter 4. In this case, the P-side polarity may be the same as the N-side polarity. FIG. 3B is the same as FIG. 3A in other portions, and hence, only the changed portions will be described.

The smoothing capacitor 3 is provided between the forward converter 2a and the reverse converter 4. The both-end voltage Vpn of the smoothing capacitor 3 is divided by the P-side voltage dividing resistor 30 and the N-side voltage dividing resistor 31, and at the voltage dividing point, the power circuit and the side of the control logic circuit 29 is electrically insulated from each other by an isolation amplifier 33. The output of the isolation amplifier 33 is sent as Vpn to the DC input power calculator 34. On the other hand, the DC-side current detector 32 detects the current Idc of the mai circuit, and the signal of the current Idc is outputted from the secondary side of the CT, which side is insulated from the main circuit, to be sent to the input power calculator 34. In the input power calculator 34, the Vpn-Idc product operation is performed, and in the subtraction circuit 28, the obtained input power Pin is subtracted by the output power Pout, so that the total loss Ploss is obtained as Ploss = Pin - Pout is obtained. In this case, the total loss Ploss includes the total loss of the motor (copper loss, iron loss, stray load loss, machine loss, and the like) and also the loss of the reverse converter 4 (loss of the power semiconductor elements of the switching elements 5 and the fly wheel diodes 6).

FIG. 4A is a view explaining an overload protection block diagram of a vector control motor drive power conversion system with the induction-type encoder (sensor) of FIG. 1A. A motor 7b is an induction-type vector control motor, and the output of the encoder 8 is outputted to a position·speed calculator 17b. It should be noted that a permanent magnet is not used in the induction-type vector control motor, and hence, the position·speed calculator 17b performs the calculation of position and speed without using a magnetic pole position signal. The rotation speed Nf of the induction-type vector control motor 7b is set to the speed error amplifier 25 from the position·speed calculator 17b, and the difference $\varepsilon$ (= N - Nf) between the speed command N and the rotation speed Nf is output by the speed error amplifier 25 and amplified by the speed controller (ASR) 11. The amplified signal Iq, which becomes a torque current command, is outputted to the q-axis current error amplifier 27 and is sent to a slip frequency calculator 36.

A magnetic flux calculator 35 takes-in the rotation speed Nf of the induction-type vector control motor 7b and makes a magnetic flux current constant under a base rotation speed, and further output a magnetic flux current so that magnetic flux-weakening control is performed at constant magnetic flux current, and performed by constant output control over the base rotation speed or more. Reference character 36 denotes a slip frequency calculator. When the magnetic flux current Id corresponds to the base rotation speed or less, the slip angular frequency cos is outputted from the slip frequency calculator 36 in proportion to the torque current. It should be noted that reference character 37 is an angular frequency conversion constant ($2\pi/60$) converting the rotation speed Nf into an actual angular frequency $\omega$r, and an output angular frequency $\omega$1- = $\omega$r + cos is calculated in an adder 38. The angular frequency $\omega$1- is sent to the 2-phase/3-phase converter 14 and the 3-phase/2-phase converter 16, and 2-phase/3-phase conversion and 3-phase/2-phase conversion are performed on the basis of $\omega$1-. It should be noted that FIG. 4A is the same as that FIG. 3A in other portions, and hence, the description thereof is omitted.

The total loss calculation and integration circuit 23 in FIG. 4A is the same as that in FIG. 3A, and hence the description thereof is omitted.

FIG. 4b is a view explaining an overload protection block diagram of the vector control motor drive power conversion system with the induction-type encoder (sensor) of FIG. 2. The motor 7b is the induction-type vector control motor, and the output of the encoder 8 is outputted to the position-speed calculator 17b. FIG. 4b is different from FIG. 4A in that the output current Idc of the forward converter 2a is detected by the DC-side current detector 32, and the voltage between both ends of the smoothing capacitor 3 (voltage between P-N) is detected by the voltage dividing resistor, so that the output current Idc and the divided voltage Vpn are inputted to the DC input power calculator 34 via an isolation amplifier, and the output Pin is derived by taking the product of the current and voltage signals. The portions difference between from FIG. 4A will be described below.

The smoothing capacitor 3 is provided between the forward converter 2a and the reverse converter 4, and the both-end voltage Vpn is divided by the P-side voltage dividing resistor 30 and the N-side voltage dividing resistor 31. At the voltage dividing point, the main circuit side and the side of the control logic circuit 29 are electrically insulated from each other by the isolation amplifier 33. The output of the isolation amplifier 33 is sent as Vpn to the DC input power calculator 34. On the other hand, the DC-side current detector 32 detects Idc of the power circuit, and the signal of the current Idc is outputted from the secondary side of the CT, which side is insulated from the power circuit, to be sent to the input power calculator 34. In the input power calculator 34, the product operation of Vpn·Idc is performed, and in the subtraction circuit 28, Pout is subtracted from the input power Pin and thereby Ploss is detected as Ploss = Pin - Pout. In this case, the total loss Ploss includes the total loss of the motor (copper loss, iron loss, stray load loss, machine loss, and the like) and also the loss of the reverse converter 4 (loss of the power semiconductor elements of the switching elements 5 and the fly wheel diodes 6).

FIG. 5A is a view explaining an overload protection block diagram of a permanent magnet sensorless brushless DC motor (hereinafter referred to as DCBL motor) drive power conversion system. The motor 7a is a permanent magnet-type sensorless DCBL motor, and has a configuration as a sensorless permanent-magnet synchronous motor without the encoder. The difference between the permanent magnet-type sensorless DCBL motor and the AC servo motor with the permanent magnet encoder (sensor) of FIG. 3A is that, since the encoder (sensor) is not provided, the position and speed magnetic pole position calculator 17a in FIG. 3A is replaced by a position and speed estimation calculator 17c. In the position and speed estimation calculator 17c into which the phase voltage commands Vu and Vw are inputted from the output of the 2-phase/3-phase converter 14, and further, feedback currents are inputted from the U-phase and W-phase current detectors CTu 9 and CTw 10. The voltage drop and the reactance drop, as motor constants, of the motor-winding resistance Ra and the inductance La are vector calculated according to the phase voltage command, so that the induced voltage of the motor is estimated, and thereby the speed is estimated. When the speed can be estimated in the position and speed estimation calculator 17c, the operation of FIG. 5A can be performed in the same manner as in FIG. 3A, so that the permanent magnet-type sensorless DCBL motor 17a can be driven similarly. The overload protection of the motor can be performed by the operation of the total loss calculation and integration circuit 23.

FIG. 5B is a view explaining an overload protection block diagram of the permanent magnet sensorless DCBL motor drive power conversion system of FIG. 2. The motor 7a the same as in FIG. 5A is used, and the configuration of the permanent magnet-type sensorless DCBL motor is the same as that of a sensorless permanent-magnet synchronous motor without using an encoder. In FIG. 5B, the point, at which the input power Pin is detected, is not the input terminal section of the motor, but is the input section of the reverse converter 4 of the motor drive apparatus. This point is the same as the output of the forward converter 2a. FIG. 5B is different from FIG. 5A in that the smoothing capacitor 3 is provided between the forward converter 2a and the reverse converter 4, and the both-end voltage Vpn is divided by the P-side voltage dividing resistor 30 and the N-side voltage dividing resistor 31, and at the voltage dividing point, the main circuit side and the side of the control logic circuit 29 is electrically insulated from each other by the isolation amplifier 33.

The output of the isolation amplifier 33 is sent as Vpn to the DC input power calculator 34. On the other hand, the DC-side current detector 32 detects Idc of the main circuit, and the signal of the current Idc is outputted from the secondary side of the CT, which side is insulated from the main circuit, to be sent to the input power calculator 34. In the input power calculator 34, the product operation of Vpn·Idc is performed, and in the subtraction circuit 28, Pout is subtracted from the input power Pin and thereby the total loss Ploss is detected as Ploss = Pin - Pout. In this case, the total loss Ploss includes the total loss of the motor (copper loss, iron loss, stray load loss, machine loss, and the like) and also the loss of the reverse converter 4 (loss of the power semiconductor elements of the switching elements 5 and the fly wheel diodes 6).

FIG. 6A is a view explaining an overload protection block diagram of the induction-type sensorless vector control motor drive power conversion system of FIG. 1A. The motor 7b is an induction-type sensorless vector control motor which is configured by a sensorless induction-type motor without using an encoder. The induction-type sensorless vector control motor of FIG. 6A is different from the vector control motor with the induction-type encoder (sensor) of FIG. 4A in that the encoder (sensor) is not used, but in FIG. 4A, the position-speed calculator 17b performs position and velocity calculation based on the output from the encoder 8. In FIG. 6A, the position and speed estimation calculator 17c receives phase voltage commands Vu and Vw from the output of the 2-phase/3-phase converter 14, and receives feedback currents from the U-phase current detector CTu 9 and the W-phase current detector CTw 10. The voltage drop and reactance drop of the motor-winding resistance Ra and the inductance La, as motor constants, are vector calculated according to the phase voltage command, so that the induced voltage of the motor is estimated, and thereby the speed is estimated. When the speed of the motor can be estimated by the position-speed estimation calculator 17c, the operation of FIG. 6A can be performed in the same manner as in FIG. 4A, and thereby the induction-type sensorless vector control motor 17b can be driven. The overload protection of the motor can be performed by the operation of the total loss calculation and integration circuit 23.

FIG. 6B is a view explaining an overload protection block diagram of the induction-type sensorless vector control motor drive power conversion system of FIG. 2. The motor 7b is an induction-type sensorless vector control motor whose configuration is the same as that of a sensorless induction-type motor without using an encoder. In FIG. 6B, the point at which the input power Pin is detected is not set as the input terminal section of the motor but as the input section of the reverse converter 4 of the motor drive apparatus, which input section is the same as the output of the forward converter 2. FIG. 6B is different from FIG. 6A in that, according to both the output current Idc of the forward converter 2 having been detected by the DC-side current detector 32 and Vpn generated between a pair of terminals of the smoothing capacitor 3, the output signal Pin is calculated at the DC input power calculator 34. Further, the input power Pin detection section is the same as that in FIG. 3B, and hence the explanation thereof is omitted. The overload protection of the motor can be performed by the operation of the total loss calculation and integration circuit 23. In this case, the total loss Ploss includes the total loss of the motor (copper loss, iron loss, stray load loss, machine loss, and the like) and also the loss of the reverse converter 4 (loss of the power semiconductor elements of the switching elements 5 and the fly wheel diodes 6).

FIG. 7A is a view explaining an overload protection block diagram of the induction-type VF inverter control general-purpose motor drive power conversion system in FIG. 1A. The motor 7b is an induction-type sensorless general-purpose motor whose configuration is the same as that an induction-type sensorless general-purpose motor without using an encoder. The rotation speed Nf of the induction-type general-purpose motor 7b is represented by following (MATH. 6).

[MATH. 6]

$$\text{(MATH. 6)} \qquad Nf = (120 \cdot f/2p) \times (1 - s/100)$$

Here, f: frequency (Hz), p: the number of opposite poles, s: slide

A recent inverter is provided with the sensorless vector control function as described in FIG. 6A and FIG. 6B and also provided with the function of controlling the induction-type general-purpose motor with the VF constant control, so that the user can select the sensorless vector control or the VF constant control. In the VF inverter, the speed is controlled by changing the frequency f given to the motor. At this time, the V/F constant control is performed by automatically changing the voltage V in proportion to the frequency f. It should be noted that the rotation speed Nf of the motor is delayed by a slide s with respect to the given frequency f. The basic operation of the VF inverter will be described with reference to FIG. 7a. The frequency command frev is inputted into a voltage/frequency controller 39. According to the frequency command frev, the voltage/frequency controller 39 outputs a frequency f, and at the same time, outputs a voltage V proportional to the frequency f. The voltage V and the frequency f are set to a 3-phase distributor 40, and phase voltages Vu, Vv and Vw changing corresponding to the frequency are inputted into the PWM circuit 15. From the PWM circuit 15, gate signals are inputted into the switching elements 5 of the reverse converter 4, to drive the induction-type general-purpose motor 7b. In the above, the basic motion of the VF inverter is described.

Next, the overload protection operation is described. The currents Iuf and Iwf of the induction-type general-purpose motor 7b are detected by the U-phase current detector CTu 9 and the W-phase current detector CTw 10. From the currents Iuf and Iwf, the v-phase current Ivf is calculated from Ivf = - (Iuf + Iwf) in an effective value converter 41. The phase currents Iuf, Ivf and Iwf are 3-phase full-wave rectified or synchronous rectifier, and the rectified current, whose amplitude range is adjusted, are converted into an effective current I and then converted into an ideal torque value T (ideal) by a current torque converter 42. In the case where the VF inverter also serves as a vector control inverter, the motor constants are known, and hence the ideal torque value T (ideal) at the time of sensorless vector control is obtained from the current and torque conversion value. The ideal torque value T (ideal) is set to a V/F-to-vector maximum torque ratio calculation coefficient section 43. In general, the V/F-to-vector maximum torque ratio calculation coefficient section 43 is described in published sales literature from inverter manufacturers in which literature each of the types of inverters is specified.

FIG. 13 is a view explaining the maximum torque of the VF control inverter, and shows an example of output Frequency (Hz) to output torque (%) characteristics in which maximum torque T(vec) max in the sensorless vector control, and maximum torque T(V/F) max in the V/F control are specified. In the V/F-to-vector maximum torque ratio calculation coefficient section 43, the inputted torque T (ideal) is multiplied by a maximum torque ratio calculation coefficient of T(V/F)max/T(vec)max, and thereby motor torque T at the time of VF inverter control is outputted. On the other hand, in the voltage/frequency controller 39, an inverter output frequency F is outputted to a synchronous rotation speed conversion coefficient section 46. In the synchronous rotation speed conversion coefficient section 46, the inputted frequency F is multiplied by a coefficient (120/2p), and thereby synchronous rotation speed Ns is obtained. When the slide s is ignored here, the motor rotation speed becomes as Nf $\approx$ Ns, and hence, the synchronous rotation speed Ns is regarded as the motor rotation speed Nf. In the output Pout calculator 19, the calculation processing of $2\pi Nf \cdot T/60$ is performed, so that the output Pout is obtained. Further, the input power Pin, as single phase input power, is obtained in such a manner that the U-phase voltage Vu from the 3-phase distributor 40, and the U-phase current Iuf from the U-phase current detector CTu 9, are inputted into the multiplier 44, and that the product of both the current and voltage signals is calculated in the multiplier 44 to be subjected to a 2f removal filter processing 45. When the single-phase input power is tripled (X3) by a 3-phase magnification counter 47, the input power Pin is obtained and then subtracted by the output Pout in the subtraction circuit 28, so that (Pin - Pout) as the total loss Ploss of the inductive VF inverter-driven general-purpose motor 7b is obtained. The total loss Ploss is sent to the electronic thermal circuit 22, and the total loss Ploss is converted into a weight value at every sampling time ts as an electronic thermal calculation period. The counting of the weight value is performed at every sampling time in such a manner that, when the weight value exceeds a rated loss, the weight value is added to the electronic counter, that, when the weight value is less than the rated loss, the weight value is subtracted from the electronic counter, and that, when the weight value is equal to the rated loss, the weight value of zero is added to the electronic counter. During operation of the motor, the addition and subtraction of the total loss are always performed. When the value of the electronic counter reaches a threshold value, it is determined that the motor is overloaded, and an OL signal is outputted to the protection processing circuit 24, so that the motor is stopped by the overload protection. From the above, the overload protection of the motor can be performed by the operation of the total loss calculation and integration circuit 23.

FIG. 7B is a view explaining an overload protection block diagram of an inductive VF inverter-control general-purpose motor drive power conversion system. The motor 7b is an inductive-type sensorless general-purpose motor whose configuration is the same as that of a sensorless induction-type motor without using an encoder. In FIG. 7B, the out point of the input power Pin is not the input terminal section of the motor, and is the input section of the reverse converter 4 of the motor drive apparatus, this input point is the same as the output of the forward converter 2. FIG. 7B is different from FIG. 7A in that, from the output of the DC-side current detector 32 detecting the output current Idc of the forward converter 2, and Vpn between the both-ends voltage of the smoothing capacitor 3, the output signal Pin of the DC input power calculator 34 is outputted. Further, the input power Pin detection section is the same as in FIG. 3b, and hence, only the changed portions will be described. The overload protection of the motor can be performed by the operation of the total loss calculation and integration circuit 23. In this case, the total loss Ploss includes the total loss of the motor (copper loss, iron loss, stray load loss, machine loss, and the like) and also the loss of the reverse converter 4 (loss of the power semiconductor elements of the switching elements 5 and the fly wheel diodes 6).

With the motor overload protection based on the total loss detection described above in FIG. 3A to FIG. 7B, the motor overload protection, which cannot be performed by the current detection of the motor, can be performed for each of a permanent magnet-type (with sensor) AC servo motor, a permanent magnet-type (sensorless) DCBL motor, an induction-type (with sensor or sensorless) vector control motor, and a VF inverter drive.

Next, with reference to FIG. 8, it is described that, during when the motor is decelerating and performing regenerative operation, the total loss can be detected by (MATH. 4) as in the time of the power running operation of the motor. It is easily understood that, when the motor is performing steady operation at a constant speed, and when the motor is performing acceleration operation, the total loss of the motor can be detected. However, in the state where the motor is performing deceleration operation at the rotation speed Nf (i) of FIG. 8, and where the power supply is turned off, and thereby the motor at the rotation speed Nf is stopped at the time earlier than the time when the motor is naturally stopped, the motor torque T becomes negative as indicated by the torque Td of (ii), so that the motto is in the regenerative state. At this time, it is considered that both of the output Pout of the motor and the input Pin become negative as indicated by (iii).

It should be noted that, in FIG. 1 which shows the power running state and in which the input Pin, the output Pout, and the total loss PLOSS are shown by thick arrows, it is shown that the width of the array of the input Pin is largest, and the width of the array of the output Pout is small, and the width of the total loss PLOSS is the difference between the width of the array of the input Pin and the array of the output Pout.

FIG. 9 is a view showing the relationship between the input, the output, and the total loss at the time of regenerative operation. In FIG. 9, the input Pin and the output Pout are both negative, and hence the directions of these are opposite to those in FIG. 1. Further, at the time of deceleration of (iii) in FIG. 8, the absolute value of the output Pout is larger than the absolute value of the input Pin. This shows that the electric power (W) is returned to a motor drive power conversion device 48 from the machine side via the motor 1. At this time, each of the values of PLOSS = Pin - Pout (MATH. 4) has a positive or negative sign, and hence, when the magnitude of each of the positive and negative sign values is enclosed in a parenthesis () as small or large, Pin - Pout is represented by (MATH. 7). Thereby, the value of the total loss PLOSS becomes positive, and hence both the total loss in the power running state and the total loss in the regenerative state can be represented in a similar manner. Therefore, calculation can be performed without changing (MATH. 4).

[MATH. 7]

$$\text{(MATH. 7)} \qquad \text{PLOSS} = [\text{Pin}] - [\text{Pout}] = -\,(\text{small}) - \{-(\text{large})\} \geq 0$$

That is, even when the operation of the mode is changed, the total loss can be always detected in real time. To this end, events occurring in the motor due to copper loss, iron loss, stray load loss, and the like, are formed as simulated functions in the motor drive power conversion device, and the simulated functions are used for motor control, and at the same time, used in the protection circuit. At this time, there may be a case where, when a motor constant is not correct, and there when the temperature of the motor is increased without this being noticed, the simulation circuit of the motor drive power conversion device does not perform the protection operation by recognizing that the motor performs normal operation. In general, the control circuit and the protection circuit are originally independently provided, and the control circuit plays the role of monitoring the protection circuit side. In this application, the detecting method of the total loss is configured completely independently of the control.

FIG. 14 is a view showing the input, the loss, and the output power in the speed-torque characteristics of the motor at the time of power running operation. In FIG. 14, the horizontal axis represents the rotation speed Nf, and the vertical axis represents the torque T, and the maximum torque of the motor is represented as point A - point B - point C - point D. Further, the rated point at time of the rated torque To and the rated rotation speed Nfo of the motor is indicated by the black spot. Next, when the rated output is set as Pout(0), the torque T curve passing through the black rated point is obtained by the following (MATH. 8) by modifying Pout = 2·Nf·T/60.

[MATH. 8]

$$\text{(MATH. 8)} \qquad T = 9.55 \times (\text{Pout}(0)/\text{Nf})$$

Here, Pout(0): rated output (W)

In (MATH. 8), the torque T and the rotation speed Nf form an inverse proportion curve, and Pout = Pout(0) - fixed curve is shown in FIG. 14. Further, each loss is specified on the right-hand side of FIG. 14, and machine loss, iron loss, stray load loss, copper loss are indicated on the output Pout curves, and the line on the copper loss shows the input power Pin. In a low speed high torque region, the rate of the copper loss becomes dominant in the total loss due to the increase of current. From (MATH. 1) and (MATH. 2), it is known that the ratio of the iron loss in the total loss is increased sharply in the high speed region without being affected by the current, and becomes dominant in the high speed region.

FIG. 15 is a view showing the input, the loss, and the output power in the speed-torque characteristics of the motor at the time of regenerative operation. In FIG. 15, the horizontal axis represents the rotation speed Nf and is multiplied with a positive scale factor, and the vertical axis represents the torque T and is multiplied with a minus scale factor. This is the regenerative state of the four quadrant of first to fourth quadrants of FIG. 9. FIG. 15 is upside down of FIG. 14 and hence is shown similarly to FIG. 14. In the regenerative operation, the motor shaft is rotated from the machine side, and the output power Pout becomes the largest, and thereby the energy is returned to the input power supply. Therefore, in the regenerative operation, loss is generated in the motor and the motor drive power conversion device, and thereby the input power Pin becomes small.

In FIG. 15, the losses are respectively specified, but the total loss Ploss corresponds to the portion between the input power Pin and the output Pout. The copper loss is dominant in the total loss in the low speed region and the high torque region. Therefore, the iron loss becomes dominant in the high speed region in which the torque is reduced from the maximum torque. It should be noted that, also in the regenerative state, plus values of the total loss can be also calculated with signs by (MATH. 4).

FIG. 16 is a view explaining an overload protection characteristic curve of the present embodiment. FIG. 16 is a view explaining the relationship between the total loss Ploss (%) and the electronic thermal operating time t (s), and is a view in which, when the asymptote is set as the total loss Ploss = 100 (%), and when Kc is a fixed coefficient, the inverse proportion curve of electronic thermal operating time t = Kc/Ploss is moved in parallel to the right. It should be noted that the total loss Ploss = 100 (%) is the total loss Ploss(0) when the motor is operated at the rated torque To, and the rated rotation speed Nfo. In the following, Ploss(0) is referred to as the rated loss and shown as Ploss = 100 (%). The electronic thermal operating time t(s) is represented by below (MATH. 9).

[MATH. 9]

$$\text{(MATH. 9)} \qquad t = Kc/(Ploss - Ploss(0))$$

It should be noted that (MATH. 9) includes two asymptotes asymptote of Ploss = 100 (%) described above and the x-axis as the axis of the total loss. The curves sandwiched between the two orthogonal asymptotes are the first quadrant curve and the third quadrant curve. The first quadrant curve indicates the time during which the motor can be operated under the short-time overload state. The third quadrant indicates the operation of the electronic thermal in the state where the total loss is less than 100 (%). Since, at continuous rating, the motor needs to be continuously operated at the rated point, the motor is manufactured so that the winding temperature of the motor is less than near the highest allowable temperature determined by the thermal class. For this reason, at the time of low load less than 100%, the heat generation amount is reduced less than the heat dissipation amount determined by the motor heat dissipation area, and hence the winding temperature of the motor is released. The characteristics of operation of the electronic thermal are such that, when the total loss exceeds 100(%) in the first quadrant curve, the electronic thermal integration counter is continuously added at each sampling time, to reach the upper limit value of the motor protection. In this state, when the total loss becomes less than 100%, the electronic thermal integration counter is performed in the third quadrant curve, so that the electronic thermal integration counter is subtracted at each sampling time. That is, in the first quadrant curve, the electronic thermal integration counter is added, and in the third quadrant curve, the electronic thermal integration counter is subtracted.

FIG. 17 is a view explaining a slope at the time when the total loss is a maximum. For example, there is described a case where the maximum total loss is set as Ploss = 400% in FIG. 16, and where the electronic thermal operating time is t (torip) second. FIG. 17 (1) is a view in which the motor is continuously operated at the maximum total loss Ploss = 400(%). The electronic thermal integration counter value at this time is shown in FIG. 17 (2). The maximum value Kf of the electronic thermal integration counter value is set to 6,000,000 (digit) in consideration of the resolution due to quantization, and when the integration value reaches this value, the motor is stopped for protection of the motor. In the above-described example, at t (trip) second, the counting of the electronic thermal is stopped. In the use environment of the motor, the maximum use temperature is generally 40°C. Further, the maximum allowable temperature for each of heat resistant class of the motor is determined by standard as follows.

[TABLE 1]

| HEAT RESISTANCE CLASS | HIGHEST ALLOWABLE TEMPERATURE (°C) |
|---|---|
| 120(E) | 120 |

(continued)

| HEAT RESISTANCE CLASS | HIGHEST ALLOWABLE TEMPERATURE (°C) |
|---|---|
| 130(B) | 130 |
| 155(F) | 155 |
| 180(H) | 180 |

The maximum motor temperature rise $\Delta Tmax$ is set as (highest allowable temperature of heat resistant class) - (upper limit value 40°C of motor use temperature) - Ts. Therefore, when the winding temperature is measured by the resistance method, Ts corresponds to the highest point of maximum allowable temperature of insulator used for insulation of the winding. However, when the temperature rise is measured by the resistance method, the average temperature rise value is measured, and hence it is considered that the measured temperature rise value is less than the maximum allowable temperature by 5 - 15°C.

Here, in an example of heat resistant class 130(B), when the maximum temperature rise of the motor is set as $\Delta Tmax$ = 80 (K), the temperature rise value 80 (K) corresponds to 6,000,000 (digit) in the max of the integration counter value (2) of FIG. 17(2), and the start point of temperature rise value 0(K) corresponds to the upper limit value 40°C of the motor use temperature. In order that the electronic thermal is tripped at total loss Ploss = 400 (%) and at the electronic thermal operating time of t (trip) second, the straight line y = ax of slope a is drawn in FIG. 17(2). In this case, $\Delta t$ is the sampling time for counting the electronic thermal, and the $\Delta y$ is the addition/subtraction weight (unit) at one sampling time (s). The maximum value of the electronic thermal integration counter value is Kf. Here, from (MATH. 8) and straight line y = ax = Kf, the addition/subtraction weight value $\Delta y$ at one sampling time (s) is obtained. When the slope is represented as a = ($\Delta y/\Delta t$), and when (MATH. 9) described above is substituted into t, (MATH. 10) is obtained as follows, and $\Delta y$ is represented by (MATH. 11).

[MATH. 10]

$$\text{(MATH. 10)} \quad y = (\Delta y/\Delta t) \times Kc/(Ploss - Ploss(0)) = Kf$$

[MATH. 11]

$$\text{(MATH. 11)} \quad \Delta y = (Kf \times \Delta t/Kc) \times (Ploss - Ploss(0))$$

Here, $\Delta y$: addition/subtraction weight value at one sampling time (digit)

$\Delta t$: electronic thermal sampling time (s)
Kf: max value of electron thermal integration counter (digit)
Ploss: total loss
Ploss(0): rated loss (Ploss = 100%)

In (MATH. 11), (Kf $\times$ $\Delta t$/Kc) becomes a constant value and a proportionality constant. This expression is shown in FIG. 18 to be represented as a simple linear function in which the addition is performed when the total loss is 100% or more, and in which the subtraction is performed when the total loss is 100% or less.

FIG. 19 is a view explaining an overload protection characteristic curve of the present embodiment, which is different from FIG. 16. FIG. 19 is different from FIG. 16 in that one curve is used, and in that the asymptotes are the total loss axis as x-axis and the electronic thermal operating time axis as y-axis. This is because of faithfully simulating the motor winding temperature since, when even small amount of the total loss is generated, the temperature of the motor winding is increased. In this case, when the total loss exceeds 100% of the total loss at the time of the rated output, the electronic total-loss time-integration counter does not start addition, but the electronic thermal operating time t is represented as t = Kc/Ploss (MATH. 9) described above, and the total loss is inversely proportional to the electronic thermal operating time.

FIG. 20 is a view explaining the thermal class of the motor, and the state where, at the time of overload application, the winding temperature is increased from the upper limit of the motor use temperature range to the heat-resistant limit value. Here, FIG. 20 is described according to FIG. 17. In the use environment of the motor, the upper limit of the use temperature is generally 40°C. Further, the maximum allowable temperature for each heat resistant class of the motor is determined by standard as follows. The maximum temperature rise $\Delta Tmax$ of the motor is set as (maximum allowable temperature of heat resistant class) - (upper limit value 40°C of motor use temperature) - Ts (temperature difference between average temperature by the resistance method and maximum temperature) and is shown as follows.

[TABLE 2]

| HEAT RESISTANCE CLASS max(K) | HIGHEST ALLOWABLE TEMPERATURE BY STANDARD (°C) | TEMPERATURE RISE ALLOWABLE VALUE $\Delta T$ |
|---|---|---|
| 120(E) | 120 | 75 |
| 130(B) | 130 | 80 |
| 155(F) | 155 | 105 |
| 180(H) | 180 | 125 |

In FIG. 20, the temperature starts from time t = 0 at 40°C as the upper limit value of the use temperature in the use environment of the motor. When the temperature reaches the temperature rise allowable value $\Delta$Tmax based on each heat resistant class of the motor, the motor is determined to be overloaded and is stopped for protection of the motor. At the start of the electronic total-loss time-integration counter, when the power supply is turned on, the integration counter is preset the integration counter to 40°C. The integration counter is counted until the counting value reaches 6,000,000 (digit) corresponding to the temperature rise allowable value $\Delta$Tmax which is the threshold value for determining the overload.

FIG. 21 is a view showing a hard image of an electronic total-loss time-integration counter using the overload protection characteristic curve of FIG. 19. Reference numeral 56 denotes a total loss/pulse frequency converter which converts the inputted amount of total loss Ploss into a pulse frequency proportional to the inputted amount. Two outputs of the pulse frequency are calculated and outputted according to the inputted total loss. One of the outputs of the total loss/pulse frequency converter 56 is inputted into an UP (addition) input inhibit circuit 59. When the UP (addition) input inhibit circuit 59 is not in the inhibition state, the pulse frequency from the total loss/pulse frequency converter 56 is inputted into the total-loss time-integration up/down counter 60. Since, even when the counter value simulating the winding temperature of the motor is an input of a fixed amount of total loss, the integrated amount is increased, the winding temperature is increased, and hence the counting value is continuously increased.

When this state is continued and thereby the value of the total-loss time-integration up/down counter 60 is further increased to reach a motor-winding overload set temperature 65, a comparator 66, which compares the counting value with the overload set temperature, outputs an "L" level. This signal is returned to the UP (addition) input inhibit circuit 59, to inhibit the pulse frequency from being inputted from the total loss/pulse frequency converter 56.

It should be noted that, when the counting value coincides with the overload set temperature, the comparator 66 outputs the "L" level to input the output as an OL signal to the protection processing circuit 24 via an inverter gate 67, as a result of which the motor is determined to be overloaded and the operation of the motor is stopped for protection of the motor.

Further, the other output of the total loss/pulse frequency converter 56 is inputted into a DN (subtraction) input inhibit circuit 58 via a dead time element circuit 57 performing constant time-delay operation. When the DN (subtraction) input inhibit circuit 58 is not in the inhibition state, the pulse frequency from the dead time element circuit 57 is inputted into the total-loss time-integration up/down counter 60, so that the counting value is subtracted. During this subtraction, the heat stored in the motor winding is conducted from the installation surface of solids, such as iron, to be dissipated into the atmosphere through the insulation materials. Further, the stored heat is conveyed and dissipated from the cooling fins on the outer periphery of the motor into the atmosphere by natural convection and forced air cooling. Since the store heat is dissipated by conduction and convection, the dead time element circuit 57 is configured to have the delay time while the store heat is conducted to the installation contact surface and the motor surface.

It should be noted that, at the time of continuous rating of the rated torque and the rated rotation speed, the motor is be continuously operated so that heat is stored in the motor winding and the temperature is increased. The storing and dissipation of heat gradually reach an equilibrium state due to the dead time. By the time of the total loss at this time and rated loss, the motor is not become overloaded. However, when the loss is larger than the rated loss, the integrated amount of heat is larger than the amount of dissipated heat so that the winding temperature is continuously increased. In the total loss/pulse frequency converter 56, the slope rate at the time of addition in the total loss = 100% as the maximum slope rate is set as the largest subtraction slope rate only on the subtraction side, so as to be restricted to the largest subtraction slope only at the time of subtraction. For this reason, when the loss of the rated loss or more is applied, the temperature is continuously increased, so that it is determined that the motor is overloaded and the motor is stopped for protection of the motor.

It should be noted that the total-loss time-integration up/down counter 60 is configured such that, at the time when the power supply is turned on, or at the time of starting the motor, the total-loss time-integration up/down counter 60 is started, after a motor winding temperature preset data 63 is set. At the time when the power supply is turned on, from a 40°C motor winding temperature (power-on time preset) circuit 61, the temperature of 40°C as the upper limit temperature of the motor use temperature range is transferred to an operation-start-time motor winding temperature 62 and is written in the motor winding temperature preset data 63. Further, when, before the time of starting the motor, the winding temperature of the motor is actually measured from the outside, such as an upper control apparatus, via a communication cable so as to be overwritten on an operation-start-time motor winding temperature 62 via a serial interface 64 in the motor drive power conversion device 48, and the total-loss time-integration up/down counter 60 can be made to start on the basis of the actually measured winding temperature.

FIG. 22 is a view which explains the operation of motor winding temperature and which shows a time chart of the operation in FIG. 21. In FIG. 22, the horizontal axis represents the time t, and the vertical axis represents the winding temperature T of the motor, to indicate the operation of the electronic total loss time integration counter is shown. The straight line, rising right from the origin, indicates the rated total loss, and shows the heat storage operation of the motor winding in the up-side addition counter of the electronic total-loss time-integration counter of FIG. 21 at the time of rated operation. In the heat dissipation operation, after the lapse of the delay time "L" until heat is conducted to the installation contact surface and is dissipated from the motor surface by convection, the polarity of the function inputted into the total-loss time-integration counter is inverted at the time of addition, and the slope rate, when the addition is performed at the maximum slope rate of total loss = 100%, is set as the maximum subtraction slope rate, so that, after the lapse of time "L", the straight line of the slope is made to fall right. In FIG. 22, the straight line which indicates the rated total loss rising right, and the straight line to which the heat dissipation characteristic is added are shown, and the thick broken line is formed by adding the two straight lines which is raised right until the time "L" and then extended horizontally.

It should be noted that, in FIG. 22, the motor-winding overload set temperature for determining the overload is shown. When the load exceeds this straight line, it is determined that the motor is overloaded, so that the protected operation is performed. It should be noted that the straight line of the maximum total loss, rapidly rising from the origin, reaches the motor-winding overload set temperature before the lapse of the dead time "L", and at the point of X at which the protected operation is performed to stop the motor.

FIG. 23 is a view explaining operation after the motor winding temperature is preset in the motor drive power conversion device. Reference character 1a denotes the motor, and reference numeral 48 denotes the motor drive power conversion device. A switch 55, which switches at the time of measurement of motor winding resistance, is provided between the motor 1a and the motor drive power conversion devices 48. When the winding temperature of the motor 1a is measured before the motor is started, the switch 55, which switches at the time of measurement of motor winding resistance, is opened to separate the motor drive power conversion device 48 from the motor 1a, and thereby, the winding temperature of the motor 1a is measured by a winding resistance measurement device 53.

Reference numerals 54-1, 54-2 and 54-3 denote terminal blocks for selecting the measurement terminal of the motor 1a. Reference numeral 54-1 denotes a motor winding U-V inter-terminal measurement block, and reference numeral 54-2 denotes a motor winding V-W inter-terminal measurement block. Reference numeral 54-3 denotes a motor winding W-U inter-terminal measurement block. By a switching connection piece 54-0 for selecting the measurement phase of the motor winding, the terminals of the motor 1a, between which the measurement is to be performed, are selected to be connected to the switching connection piece 54-0, so that the inter-terminal measurement is performed by the resistance method. The resistance method is a method in which the temperature rise is calculated from the winding resistance values before and after the start of operation by using that the temperature coefficients of the winding is known. It should be noted that, as the winding resistance value before the start of operation, the winding resistance value based on the ambient temperature may be recorded beforehand.

The winding resistance of the motor is measured by the winding resistance measurement device 53, and the temperature rise value obtained by calculating the winding temperature is inputted into the upper control apparatus 52. When the motor is operated, the switching connection piece 54-0 is disconnected from the measurement phases of the motor winding, and the switch 55, separated at the time of motor winding resistance measurement, is closed. Then, a control circuit power supply 51 is connected to the motor drive power conversion device 48, and the 40°C motor winding temperature is reset by the motor drive power conversion device 48. Then, a main circuit power supply 50 is switched on. The motor temperature preset data is transferred to the motor drive power conversion device 48 from the upper control apparatus 52 by communication to rewrite the 40°C motor winding temperature data, so that the operation of the total-loss time-integration counter is started.

FIG. 24 is a view which is different from FIG. 21 and which explains the electronic thermal circuits 22 of FIG. 3A to FIG. 7B of the present embodiment. In the electronic thermal circuit 22, different from FIG. 19, the primary winding temperature rise value of the motor is obtained in a heat model of the motor. In the subtraction circuit 28, "+" of the input power Pin on the left-hand side of the figure is subtracted by "-" of the output power Pout, and the resulting total loss $P_{LOSS}$ is outputted as a command. At an addition point 68, the total loss $P_{LOSS}$ is subtracted by the feedback, and the resulting deviation $\varepsilon$ is set to a transfer function 70 of a motor frame heat generating portion via an integration element. Next, expressions about the temperature of the motor are collectively described. The total heat Q(J) of the motor is represented by (MATH. 12) by time integration of the total loss Ploss.

[MATH. 12]

$$\text{(MATH. 12)} \quad Q = \int \text{Ploss } dt \quad (J)$$

Here, Q: motor total heat amount (J)
Ploss: motor total loss (W)

In the case of an induction motor, the total heat amount Q of the motor is separated into the heat amount of the primary side (stator) amount and the heat amount of the secondary side (rotor) copper bar of the motor and is represented by (MATH. 13). It should be noted that, in the case of a PM motor having a permanent magnet rotor, the secondary copper loss is not generated.
[MATH. 13]

$$\text{(MATH. 13)} \quad Q1 = k1 \times Q \quad (J)$$

Here, k1: the rate of primary-side heat amount to total heat amount (=Q1/Q)

Further, when the primary heat amount of the motor is as Q1 (J), and the mass of the motor primary winding is set as ml (kg), and when the specific heat of the motor primary winding is set as c1 (J/kg·K), the temperature rise Tcl (K) of the primary winding of the motor is represented by (MATH. 14).
[MATH. 14]

$$\text{(MATH. 14)} \quad Tc1 = Q1/m1 \cdot c1 \quad (K) = k1 \cdot Q/m1 \cdot c1 \quad (K)$$

Here, Tcl: temperature rise (K) of primary winding of motor

Q1: the amount of heat (J) of primary side of motor
m1: mass (kg) of primary winding of motor
c1: specific heat (J/kg·K) of primary winding of motor

The total heat Q generated in the inside of the winding (including the core, and the like) of the motor is stored in the motor frame and represented by (MATH. 15). It should be noted that, since the motor is actually configured by various components and materials, the specific heat c0 of the motor is obtained as complex specific heat by performing actual measurement of heat at defines measurement places.
[MATH. 15]

$$\text{(MATH. 15)} \quad Tc_0 = Q/m_0 \cdot c_0 \quad (K)$$

Here, Tco: temperature rise (K) of motor frame

Q: the amount of heat (J) of motor frame
mo: mass (kg) of motor frame
$c_0$: specific heat (J/kg·K) of motor frame

On the other hand, the heat is dissipated from the motor in such a manner that the heat in the motor is conducted through metal solids, such as installation jigs, of the motor, and dissipated from the cooling fins on the surface of the motor to the atmosphere by natural and forced convection, and radiation.

The heat is dissipated by natural convection and forced convection from the cooling fins (solid) on the surface of the motor to the atmosphere (fluid). Both case of the natural convection and the forced convection are represented by (MATH. 16).
[MATH. 16]

$$\text{(MATH. 16)} \quad Qf = \alpha\,(Tc_0 - Ta)\,A$$

Here, Qf: the amount of heat dissipation (conduction) per unit time, W, [kcal/h]

$\alpha$ heat transfer coefficient $W/m^2K$, [$kcal/m^2hK$]
Tco: temperature of convection surface K, [°C]
Ta: temperature of atmospheric (fluid) K, [°C]
A: solid surface area (convection area) $m^2$, [$m^2$]

In the transfer function 70 of the motor frame heat generating portion including integration elements, the total loss Ploss is integrated in the integration element 1/s by (MATH. 12), and the integrated value is set as the total heat Q(J) of the motor. Then, in (MATH. 15), the motor frame temperature rise value Tc0 is obtained by division (Motor mass m0) $\times$ (motor specific heat C) and outputted. At an addition point 69, the difference between the motor frame temperature rise value Tc0 and the ambient temperature Ta (Tc0 - Ta) is calculated, and (MATH. 16) is calculated with the difference in a transfer function 71 of the motor frame heat dissipating section, so that the calculation result of the unit time dissipation amount Qf is outputted. It should be noted that the unit time dissipation amount Qf cannot be measured, because the heat dissipation amount of each heat dissipation route, for example, heat dissipation from the attachment legs of the motor, and heat dissipation from the cooling ribs around the motor frame, is unknown.

Further, the reason why a negative feedback loop is provided in the heat model of the motor is that, when the motor is operated at a load factor, the temperature rise of the motor is always increased to a fixed temperature rise value to be in the thermal equilibrium state. The thermal equilibrium state means that, in the steady state, the value of the total loss Ploss is equal to the value of the unit time dissipation amount Qf as the feedback amount. From this, the heat model of the motor is provided with the negative feedback loop and configures a heat model in which electrical and thermal models are combined.

Next, the deviation H$\varepsilon$, as the output of the addition point 68, is branched from the negative feedback loop, and, in a transfer function 72, is multiplied by a primary-side loss ratio k1 with respect to the total loss Ploss of the motor. Then, in a transfer function 73, the resulting value is integrated in the integration element 1/s and is set as a primary winding heat amount Q1 (J) of the motor, and is calculated in (MATH. 14), that is, by divided such that (motor primary winding mass m1) x (specific heat c1 of primary winding (copper wire) c1), as a result of which the resultant primary-winding temperature rise value Tcl of the motor is outputted. Here, the motor frame has a large mass, and hence, is hardly warmed and cooled. For this reason, even when the total loss Ploss is slightly changed, the temperature rise value of the motor frame as a whole is not largely changed in a short period of time and hence is stable.

This example is configured such that, when the negative feedback loop is formed by the stable motor frame by using this characteristic, the amount of the total loss Ploss - the unit time dissipation amount Qf, as the deviation, is regarded as a loss which is in the thermal equilibrium state and does not diverge, and such that the branched thermal time constant is thereby sufficiently small in comparison with the motor frame, and hence the primary winding temperature rise value of the motor, which is largely affected by slight fluctuation of the total loss Ploss, is obtained. Further, with the primary winding temperature rise value used for overload protection, the peak value of the instantaneous temperature rise value is monitored by detecting the change of primary winding loss k1 x Ploss, and the observation result is set to an overload protection decision circuit 76.

In the overload protection decision circuit 76, the ambient temperature Ta of the motor is inputted, and the upper limit value of 40°C of the maximum temperature of the motor is set as the initial value. The overload protection decision circuit 76 is configured such that, when the ambient temperature of the motor is not detected, the control, performed at the ambient temperature of the actual motor, is controlled on the basis of the temperature of the motor to 40°C, and such that, by comparing the temperature of the motor with the threshold value for overload protection, the motor can be protected even for instantaneous overload. It should be noted that, in the case of a PM magnet having a permanent magnet rotator, there is no secondary copper loss, and hence k1 of the transfer functions 72 can be set as k1 = 1.

It should be noted that each of the transfer functions 70 and 73 of FIG. 24 includes the integration element 1/s. One of the integration elements 1/s of the transfer functions 70 and 73 is transmitted from the addition point 68 to the command side total loss, and the other of the integration elements 1/s is transmitted from the addition point 68 to the return side for equivalent conversion. On the command side, the total loss is integrated to provide the total heat amount Q (J), and on the return side, the unit time dissipation amount Qf is integrated to provide in the total heat dissipation amount Qf (J). In this case, the motor frame temperature rise value Tc0, and the primary winding temperature rise value Tc1 of the motor are not changed as in FIG. 24.

FIG. 25 is a view explaining the case where the ambient temperature of the motor is detected by a temperature sensor to protect overload of the motor. Reference character 1a denotes the motor, and reference numeral 48 denotes the motor drive power conversion device. The ambient temperature of the motor is detected by a temperature sensor of an ambient temperature measurement thermistor 74, and is inputted into an analog input terminal of the motor drive power conversion device 48 through a sensor cable 75. When the motor is operated, the control circuit power supply 51 is turned onto the motor drive power conversion device 48, and the motor drive power conversion device 48 presets the motor ambient temperature of 40°C. Then, the main circuit power supply 50 is turned on, and the operation is started by the operation command from the upper control apparatus 52.

When the ambient temperature Ta of the motor is not detected, the motor drive power conversion device 48 sets the initial value of the ambient temperature Ta of the motor, to the upper limit value of 40°C in the use temperature range of the motor, and obtains the primary-winding allowable temperature rise value of the motor, as the threshold value, from (temperature rise allowable value) + (upper limit value of motor use temperature range). When the ambient temperature Ta of the motor is detected, the ambient temperature of the motor, detected by the overload protection decision circuit 76, is always known, and hence, the new allowable temperature rise allowable value is set as (temperature rise allowable value) + {(upper limit value of motor use temperature range) - (detected ambient temperature of motor) }. When the detected ambient temperature of the motor is lower than the upper limit value of the motor usage temperature range, the upper limit value of the primary winding temperature of the motor can be increased by the difference between the ambient temperature and the upper limit value. On the contrary, when the detected ambient temperature of the motor is higher than the upper limit value of the motor usage temperature range, conventionally, there is a possibility that the motor is burned, but in this case, by lowering the threshold value, the burning of the motor can be prevented. For this reason, more accurate overload protection can be realizable, and thereby the user can use the overload protection in matching with the specification performance.

In this way, with the present embodiment, it is not necessary that the losses, such as iron loss, machine loss, and the like, which are not caused by the motor current, are obtained by configuring complicated control block diagrams using iron plate thickness t, frequency f, maximum magnetic flux density Bm, magnetic material resistivity p, and proportional constants Kh, Ke in MATH. 1 and MATH. 2.

Further, the case where the amount of stray load loss which is difficult to quantitatively estimate is large in the total loss is to be taken into account, but the present embodiment has the effect that, even when each loss is unknown, the total loss is accurately obtained.

As described above, although one embodiment to which the present invention is applied is described, the present invention is not limited to the above described configurations, and can be variously modified without departing from the scope of the appended claims. For example, a part or all of the function of each of the function sections can be appropriately controlled by hardware or software.

REFERENCE SIGNS LIST

| | |
|---|---|
| 1a | Motor |
| 1b | Motor |
| 2a | Forward converter |
| 2b | Forward converter with power regeneration function |
| 3 | Smoothing capacitor |
| 4 | Reverse converter |
| 5 | Switching element |
| 6 | Fly wheel diode |
| 7a | Permanent-magnet synchronous motor (SM) |
| 7b | Induction motor (IM) |
| 8 | Encoder |
| 9 | U-phase current detector CTu |
| 10 | W-phase current detector CTw |
| 11 | Speed controller (ASR) |
| 12 | d-axis current controller (ACR) |
| 13 | q-axis current controller (ACR) |
| 14 | 2-phase/3-phase converter |
| 15 | PWM circuit |
| 16 | 3-phase/2-phase converter |
| 17a | Position and speed magnetic pole position calculator |
| 17b | Position-speed calculator |
| 17c | Position-speed estimation calculator |
| 18 | Torque calculator |
| 19 | Output Pout calculator |
| 20 | Current calculator |
| 21 | Motor input power calculator |
| 22 | Electronic thermal circuit |

23 Total loss calculation and integration circuit
24 Protection processing circuit
25 Speed error amplifier
26 d-axis current error amplifier
27 q-axis current error amplifier
28 Subtraction circuit (Ploss = Pin - Pout)
29 Control logic circuit
30 P-side voltage dividing resistor
31 N-side voltage dividing resistor
32 DC-side current detector
33 Isolation amplifier
34 DC input power calculator
35 Magnetic flux calculator
36 Slip frequency calculator
37 Angular frequency transformation constant (2π/60)
38 Adder (ω1 = ωr + cos)
39 Voltage/frequency controller
40 3-phase distributor
41 Effective value converter
42 Current torque conversion value
43 V/F pair vector maximum torque ratio calculation coefficient
44 Multiplier
45 2f removal filter
46 Synchronous rotation speed conversion factor (120/2p)
47 3-phase magnification coefficient (x3)
48 Motor drive power conversion device
49 AC reactor
50 Main circuit power supply
51 Control circuit power supply
52 Upper control apparatus
53 Winding resistance measurement device of motor
54-0 Measurement phase switching connection strip of motor winding
54-1 Motor-winding U-V inter-terminal measurement block
54-2 Motor-winding V-W inter-terminal measurement block
54-3 Motor-winding W-U inter-terminal measurement block
55 Separation switch at the time of motor winding resistance measurement
56 Total loss/pulse frequency converter
57 Dead time element circuit
58 DN (subtraction) input inhibit circuit
59 UP (addition) input inhibit circuit
60 Total loss time integration up/down counter
61 40°C motor winding temperature (power-on time preset) circuit
62 Operation-start-time motor winding temperature
63 Motor winding temperature preset data
64 Serial interface
65 Motor-winding overload set temperature
66 Comparator
67 Inverter gate
68 Addition point (command-feedback)
69 Addition point (motor frame temperature rise value - ambient temperature)
70 Transfer function of motor frame heat generating portion including integration element
71 Transfer function of motor frame heat dissipating section
72 Rate of primary-side loss to total loss Ploss of motor
73 Transfer function of motor primary winding including integration element
74 Ambient temperature measurement thermistor
75 Sensor cable
76 Overload protection decision circuit

## Claims

1. A motor power conversion device (48) provided with an electronic thermal function for overload protection of a motor (1a), comprising
a total-loss time-integration counter (60) which, when a motor operates under the condition that time integration of a total loss of the motor becomes a constant, outputs an integrated value simulating winding temperature of the motor, and
when the integrated value reaches a predetermined threshold value, outputs a signal to stop the operation of the motor,
wherein the total-loss time-integration counter is operated when a time integration value of the total loss of the motor including loss of a reverse converter (4) of the motor power conversion device reaches a constant value, and wherein the total-loss time-integration counter obtains the total loss of the motor, the total loss including the loss of the reverse converter, by subtracting output power of the motor from input power at an intermediate potential between a forward converter and the reverse converter of the motor power conversion device.

2. The motor power conversion device according to one of claim 1, wherein
in the state where the total loss is sandwiched by two asymptotes of the x-axis as the total loss axis and the y-axis at the total loss = 100% axis which are perpendicular to each other, and has the inverse proportion curve having a constant time integration value, the total-loss time-integration counter further perform addition on the basis of one of two curves mutually symmetric with respect to the intersection of the intersection of the asymptotes, and performs subtraction on the basis of one of two curves mutually symmetry.

3. The motor power conversion device according to one of claim 1, wherein the total-loss time-integration counter always operates at the total loss of 0% or more, and further, the motor power conversion device has an always operating subtraction counter, the subtraction counter has a dead time element which, at the time of addition, performs polarity inversion of a function inputted into the total-loss time-integration counter and performs a delay operation during a fixed period of time, and at the time of subtraction, the slope rate at the time of addition of the total loss = 100% is set as the maximum subtraction slope rate to perform restriction, when the time integration value reaches a temperature rise allowable value, the total-loss time-integration counter outputs a signal to stop the operation of the motor.

4. A motor power conversion device (48) provided with an electronic thermal function for overload protection of a motor (1a), comprising
a total-loss time-integration counter (60) which, when a motor operates under the condition that time integration of a total loss of the motor becomes a constant, outputs an integrated value simulating winding temperature of the motor, and
when the integrated value reaches a predetermined threshold value, outputs a signal to stop the operation of the motor,
the total-loss time-integration counter obtains the total loss of the motor by subtracting output power of the motor from input power of the motor, and wherein.
in the state where the total loss is sandwiched by two asymptotes of the x-axis as the total loss axis and the y-axis at the total loss = 100% axis which are perpendicular to each other, and has the inverse proportion curve having a constant time integration value, the total-loss time-integration counter further perform addition on the basis of one of two curves mutually symmetric with respect to the intersection of the intersection of the asymptotes, and performs subtraction on the basis of one of two curves mutually symmetry.

5. A motor power conversion device (48) provided with an electronic thermal function for overload protection of a motor (1a), comprising
a total-loss time-integration counter (60) which, when a motor operates under the condition that time integration of a total loss of the motor becomes a constant, outputs an integrated value simulating winding temperature of the motor, and
when the integrated value reaches a predetermined threshold value, outputs a signal to stop the operation of the motor,
wherein in a motor power conversion system, the total-loss time-integration counter obtains the total loss of the motor by subtracting output power of the motor from input power of the motor, and wherein
the total-loss time-integration counter always operates at the total loss of 0% or more, and further, the motor power conversion device has an always operating subtraction counter, the subtraction counter has a dead time element which, at the time of addition, performs polarity inversion of a function inputted into the total-loss time-integration counter and performs a delay operation during a fixed period of time, and at the time of subtraction, the slope rate at the time of addition of the total loss = 100% is set as the maximum subtraction slope rate to perform restriction, when the time integration value reaches a temperature rise allowable value, the total-loss time-integration counter outputs a signal to stop the operation of the motor.

6. The motor power conversion device according to claim 4 or 5, wherein, under a power running operation or a regenerative operation, the total-loss time-integration counter is configured to designate an amount of the input power and the output power as positive in case that the powers propagate from a power source to the motor, while as negative in case that the powers propagate from the motor to the poser source.

7. A motor power conversion device (48) provided with an electronic thermal function for overload protection of a motor (1a), comprising
a total-loss time-integration counter (60) which, when a motor operates under the condition that time integration of a total loss of the motor becomes a constant, outputs an integrated value simulating winding temperature of the motor, and
when the integrated value reaches a predetermined threshold value, outputs a signal to stop the operation of the motor,
wherein the total-loss time-integration counter sets the upper limit temperature of the motor use temperature range to the initial value of the winding temperature of the motor at the time when a control power supply is turned on, when the upper limit temperature of this motor use temperature range increased from the initial value of the winding temperature of the motor to reach the temperature rise limit value reaches a value near and less than the highest allowable temperature of the heat resistant class of the motor, the total-loss time-integration counter determines that the motor is overloaded and outputs a signal to stop the operation of the motor, and wherein
the total loss time integration counter receives the input of the motor winding temperature receives from the outside before the start of operation of the motor, according to the input of this motor winding temperature, sets, as a new temperature rise allowable value, the value obtained by adding to the temperature rise allowable value the upper limit value of motor use temperature range and subtracting from this sum the motor winding temperature before start of operation, when the time integration value reaches the new temperature rise allowable value, outputs a signal to stop the operation of the motor.

8. A motor power conversion device (48) provided with an electronic thermal function for overload protection of a motor (1a), comprising
a total-loss time-integration counter (60) which, when a motor operates under the condition that time integration of a total loss of the motor becomes a constant, outputs an integrated value simulating winding temperature of the motor, and
when the integrated value reaches a predetermined threshold value, outputs a signal to stop the operation of the motor,
wherein the total-loss time-integration counter sets the upper limit temperature of the motor use temperature range to the initial value of the winding temperature of the motor at the time when a control power supply is turned on, when the upper limit temperature of this motor use temperature range increased from the initial value of the winding temperature of the motor to reach the temperature rise limit value reaches a value near and less than the highest allowable temperature of the heat resistant class of the motor, the total-loss time-integration counter determines that the motor is overloaded and outputs a signal to stop the operation of the motor, and wherein
the total-loss time-integration counter always receives the input of the ambient temperature of the motor from the outside, according to the input of this motor winding temperature, sets, as a new temperature rise allowable value, the value obtained by adding to the temperature rise allowable value the upper limit value of motor use temperature range and subtracting from this sum the detected ambient temperature of the motor, and when the time integration value reaches the new temperature rise allowable value, outputs a signal to stop the operation of the motor.

## Patentansprüche

1. Motorleistungswandlungsvorrichtung (48), die mit einer elektronischen thermischen Funktion zum Überlastungsschutz eines Motors (1a) bereitgestellt ist und Folgendes umfasst:

   einen Gesamtverlust-Zeitintegrations-Zähler (60), der, wenn ein Motor unter der Bedingung betrieben wird, dass die Zeitintegration eines Gesamtverlusts des Motors eine Konstante wird, einen integrierten Wert ausgibt, der die Wicklungstemperatur des Motors simuliert, und

wenn der integrierte Wert einen vorbestimmten Schwellenwert erreicht, ein Signal ausgibt, um den Betrieb des Motors zu beenden,

wobei der Gesamtverlust-Zeitintegrations-Zähler betrieben wird, wenn ein Zeitintegrationswert des Gesamtverlusts des Motors, der einen Verlust eines Sperrwandlers (4) der Motorleistungswandlungsvorrichtung umfasst, einen konstanten Wert erreicht, und wobei

der Gesamtverlust-Zeitintegrations-Zähler den Gesamtverlust des Motors erhält, wobei der Gesamtverlust den Verlust des Sperrwandlers umfasst, indem die Ausgangsleistung des Motors von der Eingangsleistung an einem Zwischenpotential zwischen einem Flusswandler und dem Sperrwandler der Motorleistungswandlungsvorrichtung subtrahiert wird.

**2.** Motorleistungswandlungsvorrichtung nach Anspruch 1, wobei in dem Zustand, in dem der Gesamtverlust durch zwei Asymptoten der x-Achse als die Gesamtverlustachse und der y-Achse an der (Gesamtverlust = 100 %)-Achse eingeschlossen ist, welche normal aufeinander stehen, vorliegt und jene Umkehrverhältniskurve aufweist, die einen konstanten Zeitintegrationswert aufweist, der Gesamtverlust-Zeitintegrations-Zähler ferner eine Addition auf Grundlage von einer von zwei Kurven durchführt, die in Bezug aufeinander und auf den Schnittpunkt des Schnittpunkts der Asymptoten symmetrisch sind, und eine Subtraktion auf Grundlage von einer von in Bezug aufeinander symmetrischen zwei Kurven durchführt.

**3.** Motorleistungswandlungsvorrichtung nach Anspruch 1, wobei der Gesamtverlust-Zeitintegrations-Zähler immer bei einem Gesamtverlust von 0 % oder mehr betrieben wird und die Motorleistungswandlungsvorrichtung ferner einen Subtraktionszähler aufweist, der immer in Betrieb ist, wobei der Subtraktionszähler ein Totzeitelement aufweist, das zum Zeitpunkt der Addition eine Polaritätsumkehrung einer Funktion durchführt, die in den Gesamtverlust-Zeitintegrations-Zähler eingegeben wird und über einen festgelegten Zeitraum hinweg einen Verzögerungsvorgang ausführt, und zum Zeitpunkt der Subtraktion wird die Steigungsrate zum Zeitpunkt der Addition des Gesamtverlusts von 100 % als maximale Subtraktionssteigungsrate festgelegt, um eine Einschränkung durchzuführen, wenn der Zeitintegrationswert einen zulässigen Wert für einen Temperaturanstieg erreicht und der Gesamtverlust-Zeitintegrations-Zähler ein Signal ausgibt, um den Betrieb des Motors zu beenden.

**4.** Motorleistungswandlungsvorrichtung (48), die mit einer elektronischen thermischen Funktion zum Überlastungsschutz eines Motors (1a) bereitgestellt ist und Folgendes umfasst:

einen Gesamtverlust-Zeitintegrations-Zähler (60), der, wenn ein Motor unter der Bedingung betrieben wird, dass die Zeitintegration eines Gesamtverlusts des Motors eine Konstante wird, einen integrierten Wert ausgibt, der die Wicklungstemperatur des Motors simuliert, und

wenn der integrierte Wert einen vorbestimmten Schwellenwert erreicht, ein Signal ausgibt, um den Betrieb des Motors zu beenden,

wobei der Gesamtverlust-Zeitintegrations-Zähler den Gesamtverlust des Motors durch Subtrahieren der Ausgangsleistung des Motors von der Eingangsleistung des Motors erhält und wobei

in dem Zustand, in dem der Gesamtverlust durch zwei Asymptoten der x-Achse als die Gesamtverlustachse und der y-Achse an der (Gesamtverlust = 100 %)-Achse eingeschlossen ist, welche normal aufeinander stehen, vorliegt und jene Umkehrverhältniskurve aufweist, die einen konstanten Zeitintegrationswert aufweist, der Gesamtverlust-Zeitintegrations-Zähler ferner eine Addition auf Grundlage von einer von zwei Kurven durchführt, die in Bezug aufeinander und auf den Schnittpunkt des Schnittpunkts der Asymptoten symmetrisch sind, und eine Subtraktion auf Grundlage von einer von in Bezug aufeinander symmetrischen zwei Kurven durchführt.

**5.** Motorleistungswandlungsvorrichtung (48), die mit einer elektronischen thermischen Funktion zum Überlastungsschutz eines Motors (1a) bereitgestellt ist und Folgendes umfasst:

einen Gesamtverlust-Zeitintegrations-Zähler (60), der, wenn ein Motor unter der Bedingung betrieben wird, dass die Zeitintegration eines Gesamtverlusts des Motors eine Konstante wird, einen integrierten Wert ausgibt, der die Wicklungstemperatur des Motors simuliert, und

wenn der integrierte Wert einen vorbestimmten Schwellenwert erreicht, ein Signal ausgibt, um den Betrieb des Motors zu beenden,

wobei der Gesamtverlust-Zeitintegrations-Zähler den Gesamtverlust des Motors durch Subtrahieren der Ausgangsleistung des Motors von der Eingangsleistung des Motors erhält und wobei

der Gesamtverlust-Zeitintegrations-Zähler immer bei einem Gesamtverlust von 0 % oder mehr betrieben wird und die Motorleistungswandlungsvorrichtung ferner einen ständig im Betrieb befindlichen Subtraktionszähler aufweist, wobei der Subtraktionszähler ein Totzeitelement aufweist, das zum Zeitpunkt der Addition eine Polaritätsumkehrung einer Funktion durchführt, die in den Gesamtverlust-Zeitintegrations-Zähler eingegeben wird und über einen festgelegten Zeitraum hinweg einen Verzögerungsvorgang ausführt, und zum Zeitpunkt der Subtraktion die Steigungsrate zum Zeitpunkt der Addition des Gesamtverlusts von 100 % als maximale Subtraktionssteigungsrate festgelegt wird, um eine Einschränkung durchzuführen, wenn der Zeitintegrationswert einen zulässigen Wert für einen Temperaturanstieg erreicht und der Gesamtverlust-Zeitintegrations-Zähler ein Signal ausgibt, um den Betrieb des Motors zu beenden.

**6.** Motorleistungswandlungsvorrichtung nach Anspruch 4 oder 5, wobei während eines Leistungslaufbetriebs oder eines regenerativen Betriebs der Gesamtverlust-Zeitintegrations-Zähler ausgelegt ist, um ein Ausmaß an Eingangsleistung und Ausgangsleistung als positiv zu bezeichnen, wenn die Leistungen sich von einer Leistungsquelle zu dem Motor fortpflanzen, und als negativ zu bezeichnen, wenn die Leistungen sich von dem Motor zu der Leistungsquelle fortpflanzen.

**7.** Motorleistungswandlungsvorrichtung (48), die mit einer elektronischen thermischen Funktion zum Überlastungsschutz eines Motors (1a) bereitgestellt ist und Folgendes umfasst:

einen Gesamtverlust-Zeitintegrations-Zähler (60), der, wenn ein Motor unter der Bedingung betrieben wird, dass die Zeitintegration eines Gesamtverlusts des Motors eine Konstante wird, einen integrierten Wert ausgibt, der die Wicklungstemperatur des Motors simuliert, und
wenn der integrierte Wert einen vorbestimmten Schwellenwert erreicht, ein Signal ausgibt, um den Betrieb des Motors zu beenden,
wobei der Gesamtverlust-Zeitintegrations-Zähler die Temperaturobergrenze des Motorbetriebstemperaturbereichs auf den Ausgangswert der Wicklungstemperatur des Motors zu einer Zeit, wenn eine Steuerleistungsquelle eingeschaltet ist, festlegt, wenn die Temperaturobergrenze dieses Motorbetriebstemperaturbereichs, die von dem Ausgangswert der Wicklungstemperatur des Motors angestiegen ist, um den Temperaturanstiegsgrenzwert zu erreichen, einen Wert nahe der und niedriger als die höchstzulässige Temperatur der Wärmebeständigkeitsklasse des Motors erreicht, wobei der Gesamtverlust-Zeitintegrations-Zähler feststellt, dass der Motor überlastet ist und ein Signal zur Beendigung des Betriebs des Motors ausgibt, und wobei
der Gesamtverlust-Zeitintegrations-Zähler die Eingabe der Motorwicklungstemperatur vor dem Beginn des Motorbetriebs von außen empfängt, gemäß der Eingabe dieser Motorwicklungstemperatur als neuen zulässigen Temperaturanstiegswert den Wert festlegt, der durch Addieren des oberen Grenzwerts des Motorbetriebstemperaturbereichs zu dem zulässigen Temperaturanstiegswert und Subtrahieren der Motorwicklungstemperatur vor Betriebsbeginn von dieser Summe erhalten wird, und wenn der Zeitintegrationswert den neuen zulässigen Temperaturanstiegswert erreicht, ein Signal zur Beendigung des Motorbetriebs ausgibt.

**8.** Motorleistungswandlungsvorrichtung (48), die mit einer elektronischen thermischen Funktion zum Überlastungsschutz eines Motors (1a) bereitgestellt ist und Folgendes umfasst:

einen Gesamtverlust-Zeitintegrations-Zähler (60), der, wenn ein Motor unter der Bedingung betrieben wird, dass die Zeitintegration eines Gesamtverlusts des Motors eine Konstante wird, einen integrierten Wert ausgibt, der die Wicklungstemperatur des Motors simuliert, und
wenn der integrierte Wert einen vorbestimmten Schwellenwert erreicht, ein Signal ausgibt, um den Betrieb des Motors zu beenden,
wobei der Gesamtverlust-Zeitintegrations-Zähler die Temperaturobergrenze des Motorbetriebstemperaturbereichs auf den Ausgangswert der Wicklungstemperatur des Motors zu einer Zeit, wenn eine Steuerleistungsquelle eingeschaltet ist, festlegt, wenn die Temperaturobergrenze dieses Motorbetriebstemperaturbereichs, die von dem Ausgangswert der Wicklungstemperatur des Motors angestiegen ist, um den Temperaturanstiegsgrenzwert zu erreichen, einen Wert nahe der und niedriger als die höchstzulässige Temperatur der Wärmebeständigkeitsklasse des Motors erreicht, wobei der Gesamtverlust-Zeitintegrations-Zähler feststellt, dass der Motor überlastet ist und ein Signal zur Beendigung des Betriebs des Motors ausgibt, und wobei
der Gesamtverlust-Zeitintegrations-Zähler immer die Eingabe der Umgebungstemperatur des Motors von außen empfängt, gemäß der Eingabe dieser Motorwicklungstemperatur als neuen zulässigen Temperaturanstiegswert den Wert festlegt, wobei der Wert durch Addieren des oberen Grenzwerts des

Motorbetriebstemperaturbereichs zu dem zulässigen Temperaturanstiegswert und Subtrahieren der Motorwicklungstemperatur vor Betriebsbeginn von dieser Summe erhalten wird, und wenn der Zeitintegrationswert den neuen zulässigen Temperaturanstiegswert erreicht, ein Signal zur Beendigung des Motorbetriebs ausgibt.

## Revendications

1. Dispositif de conversion de puissance pour moteur (48) équipé d'une fonction thermique électronique destinée à la protection contre les surcharges d'un moteur (la), comprenant
un compteur d'intégration de durée de perte totale (60) qui, lorsqu'un moteur fonctionne dans la condition selon laquelle l'intégration de durée d'une perte totale du moteur devient une constante, délivre une valeur intégrée qui simule la température d'enroulement du moteur, et
lorsque la valeur intégrée atteint une valeur de seuil prédéterminée, délivre un signal destiné à arrêter le fonctionnement du moteur,
dans lequel le compteur d'intégration de durée de perte totale est déclenché lorsqu'une valeur d'intégration de durée de la perte totale du moteur, y compris de perte d'un convertisseur inverse (4) du dispositif de conversion de puissance pour moteur, atteint une valeur constante, et dans lequel
le compteur d'intégration de durée de perte totale obtient la perte totale du moteur, la perte totale comprenant la perte du convertisseur inverse, en soustrayant la puissance de sortie du moteur de la puissance d'entrée à un potentiel intermédiaire entre un convertisseur avant et le convertisseur inverse du dispositif de conversion de puissance pour moteur.

2. Dispositif de conversion de puissance pour moteur selon la revendication 1, dans lequel
lorsque la perte totale est prise en sandwich par deux asymptotes de l'axe x en tant qu'axe de perte totale et de l'axe y en tant qu'axe de perte totale = 100%, qui sont perpendiculaires l'un à l'autre, et présente la courbe de proportion inverse qui possède une valeur d'intégration de durée constante, le compteur d'intégration de durée de perte totale effectue en outre une addition sur la base de l'une des deux courbes mutuellement symétriques par rapport à l'intersection des asymptotes, et effectue une soustraction sur la base de l'une des deux courbes mutuellement symétriques.

3. Dispositif de conversion de puissance pour moteur selon la revendication 1, dans lequel le compteur d'intégration de durée de perte totale fonctionne toujours à la perte totale de 0% ou plus, et, en outre, le dispositif de conversion de puissance pour moteur possède un compteur de soustractions toujours actif, le compteur de soustractions ayant un élément de temps mort qui, au moment de l'addition, effectue une inversion de polarité d'une fonction fournie au compteur d'intégration de durée de perte totale et effectue une opération de retard pendant une durée fixe, et, au moment de la soustraction, le taux de pente au moment de l'addition de la perte totale = 100% est défini comme le taux de pente de soustraction maximum pour effectuer une restriction, lorsque la valeur d'intégration de durée atteint une valeur d'augmentation de température acceptable, et le compteur d'intégration de durée de perte totale délivre un signal destiné à arrêter le fonctionnement du moteur.

4. Dispositif de conversion de puissance pour moteur (48) équipé d'une fonction thermique électronique destinée à la protection contre les surcharges d'un moteur (la), comprenant
un compteur d'intégration de durée de perte totale (60) qui, lorsqu'un moteur fonctionne dans la condition selon laquelle l'intégration de durée d'une perte totale du moteur devient une constante, délivre une valeur intégrée qui simule la température d'enroulement du moteur, et
lorsque la valeur intégrée atteint une valeur de seuil prédéterminée, délivre un signal destiné à arrêter le fonctionnement du moteur,
le compteur d'intégration de durée de perte totale obtient la perte totale du moteur en soustrayant la puissance de sortie du moteur de la puissance d'entrée du moteur, et dans lequel
lorsque la perte totale est prise en sandwich par deux asymptotes de l'axe x en tant qu'axe de perte totale et de l'axe y en tant qu'axe de perte totale = 100%, qui sont perpendiculaires l'un à l'autre, et présente la courbe de proportion inverse qui possède une valeur d'intégration de durée constante, le compteur d'intégration de durée de perte totale effectue en outre une addition sur la base de l'une des deux courbes mutuellement symétriques par rapport à l'intersection des asymptotes, et effectue une soustraction sur la base de l'une des deux courbes mutuellement symétriques.

5. Dispositif de conversion de puissance pour moteur (48) équipé d'une fonction thermique électronique destinée à la protection contre les surcharges d'un moteur (la), comprenant
un compteur d'intégration de durée de perte totale (60) qui, lorsqu'un moteur fonctionne dans la condition selon laquelle l'intégration de durée d'une perte totale du moteur devient une constante, délivre une valeur intégrée qui simule la température d'enroulement du moteur, et
lorsque la valeur intégrée atteint une valeur de seuil prédéterminée, délivre un signal destiné à arrêter le fonctionnement du moteur,

dans lequel, dans un système de conversion de puissance pour moteur, le compteur d'intégration de durée de perte totale obtient la perte totale du moteur en soustrayant la puissance de sortie du moteur de la puissance d'entrée du moteur, et dans lequel
le compteur d'intégration de durée de perte totale fonctionne toujours à la perte totale de 0% ou plus, et, en outre, le dispositif de conversion de puissance pour moteur possède un compteur de soustractions toujours actif, le compteur de soustractions ayant un élément de temps mort qui, au moment de l'addition, effectue une inversion de polarité d'une fonction fournie au compteur d'intégration de durée de perte totale et effectue une opération de retard pendant une durée fixe, et, au moment de la soustraction, le taux de pente au moment de l'addition de la perte totale = 100% est défini comme le taux de pente de soustraction maximum pour effectuer une restriction, lorsque la valeur d'intégration de durée atteint une valeur d'augmentation de température acceptable, et le compteur d'intégration de durée de perte totale délivre un signal destiné à arrêter le fonctionnement du moteur.

**6.** Dispositif de conversion de puissance pour moteur selon la revendication 4 ou 5, dans lequel, lors d'une opération de fonctionnement ou d'une opération régénérative, le compteur d'intégration de durée de perte totale est configuré pour désigner une quantité de puissance d'entrée et de puissance de sortie comme positive lorsque la puissance se propage d'une source de puissance vers le moteur, et comme négative lorsque la puissance se propage du moteur vers la source de puissance.

**7.** Dispositif de conversion de puissance pour moteur (48) équipé d'une fonction thermique électronique destinée à la protection contre les surcharges d'un moteur (la), comprenant
un compteur d'intégration de durée de perte totale (60) qui, lorsqu'un moteur fonctionne dans la condition selon laquelle l'intégration de durée d'une perte totale du moteur devient une constante, délivre une valeur intégrée qui simule la température d'enroulement du moteur, et
lorsque la valeur intégrée atteint une valeur de seuil prédéterminée, délivre un signal destiné à arrêter le fonctionnement du moteur,
dans lequel le compteur d'intégration de durée de perte totale définit la température limite supérieure de la plage de températures d'utilisation du moteur sur la valeur initiale de la température d'enroulement du moteur au moment où une alimentation de commande est déclenchée, et, lorsque la température limite supérieure de cette plage de températures d'utilisation du moteur qui a augmenté par rapport à la valeur initiale de la température d'enroulement du moteur jusqu'à atteindre la valeur limite d'augmentation de température atteint une valeur proche de et inférieure à la température maximale autorisée de la classe de résistance thermique du moteur, le compteur d'intégration de durée de perte totale détermine que le moteur est en surcharge est délivre un signal destiné à arrêter le fonctionnement du moteur, et dans lequel
le compteur d'intégration de durée de perte totale, lorsqu'il reçoit la température d'enroulement du moteur de la part de l'extérieur avant le lancement du fonctionnement du moteur, selon cette température d'enroulement du moteur, définit, en tant que d'enroulement du moteur avant le lancement de l'opération,
lorsque la valeur d'intégration de durée atteint la nouvelle valeur acceptable d'augmentation de température, délivre un signal destiné à arrêter le fonctionnement du moteur.

**8.** Dispositif de conversion de puissance pour moteur (48) équipé d'une fonction thermique électronique destinée à la protection contre les surcharges d'un moteur (la), comprenant
un compteur d'intégration de durée de perte totale (60) qui, lorsqu'un moteur fonctionne dans la condition selon laquelle l'intégration de durée d'une perte totale du moteur devient une constante, délivre une valeur intégrée qui simule la température d'enroulement du moteur, et
lorsque la valeur intégrée atteint une valeur de seuil prédéterminée, délivre un signal destiné à arrêter le fonctionnement du moteur,
dans lequel le compteur d'intégration de durée de perte totale définit la température limite supérieure de la plage de températures d'utilisation du moteur sur la valeur initiale de la température d'enroulement du moteur au moment où une alimentation de commande est déclenchée, et, lorsque la température limite supérieure de cette plage de températures d'utilisation du moteur qui a augmenté par rapport à la valeur initiale de la température d'enroulement du moteur jusqu'à atteindre la valeur limite d'augmentation de température atteint une valeur proche de et inférieure à la température maximale autorisée de la classe de résistance thermique du moteur, le compteur d'intégration de durée de perte totale détermine que le moteur est en surcharge est délivre un signal destiné à arrêter le fonctionnement du moteur, et dans lequel
le compteur d'intégration de durée de perte totale reçoit toujours la température ambiante du moteur de la part de l'extérieur, et, selon cette température d'enroulement du moteur, définit, en tant que nouvelle valeur acceptable d'augmentation de température, la valeur obtenue en additionnant à la valeur acceptable d'augmentation de température la valeur limite supérieure de la plage de températures d'utilisation du moteur, et en soustrayant de cette somme la température ambiante détectée du moteur,
et, lorsque la valeur d'intégration de durée atteint la nouvelle valeur acceptable d'augmentation de température, délivre un signal destiné à arrêter le fonctionnement du moteur.

FIG. 1A

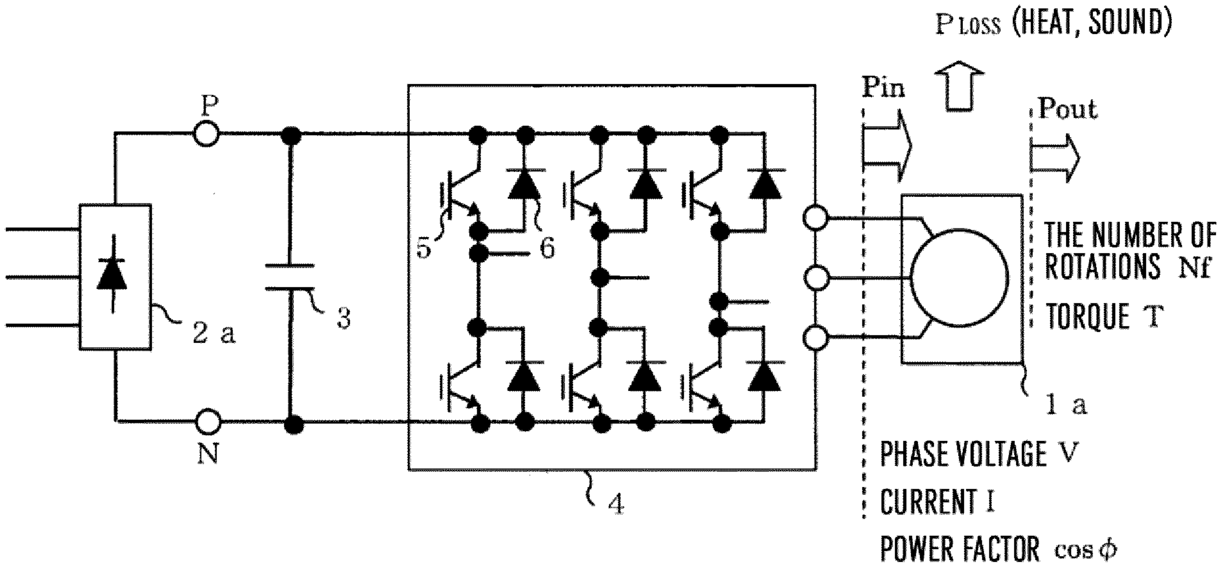
PLOSS (HEAT, SOUND)
Pin
Pout
P
N
THE NUMBER OF ROTATIONS Nf
TORQUE T
5
6
2 a
3
1 a
4
PHASE VOLTAGE V
CURRENT I
POWER FACTOR cos φ

FIG. 1B

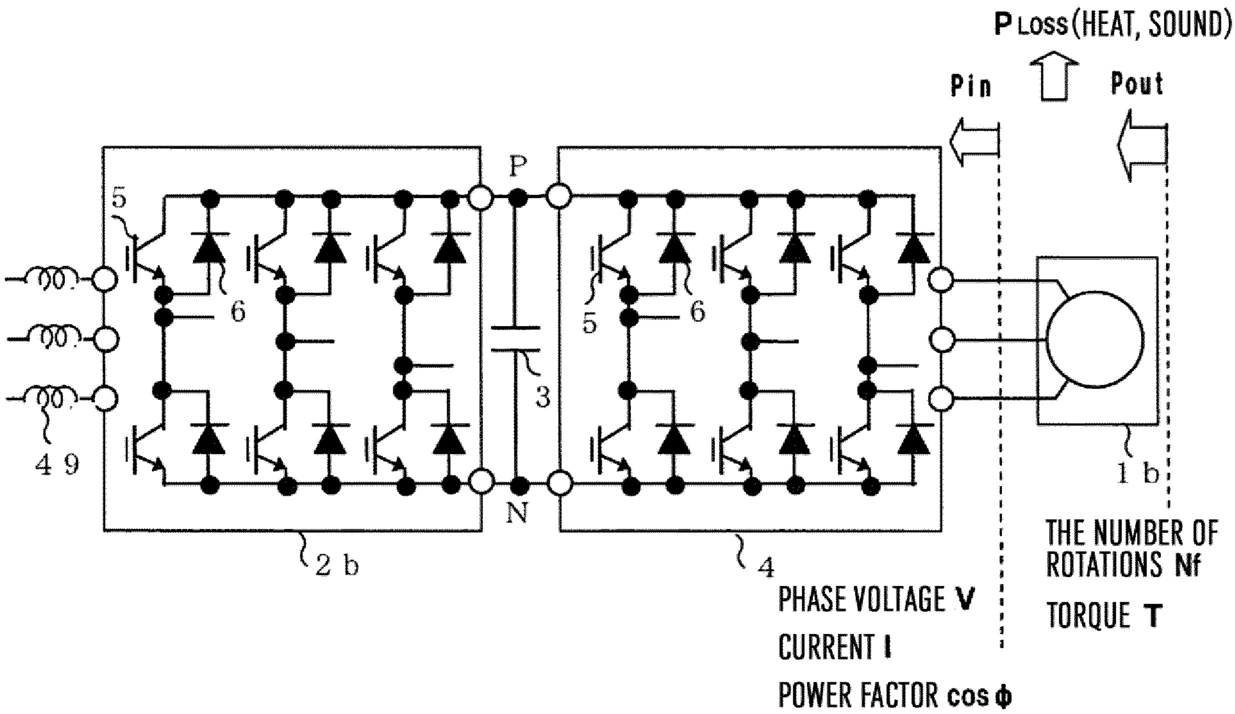
PLOSS (HEAT, SOUND)
Pin
Pout
P
N
5
6
3
49
2 b
4
1 b
THE NUMBER OF ROTATIONS Nf
TORQUE T
PHASE VOLTAGE V
CURRENT I
POWER FACTOR cos φ

FIG. 2

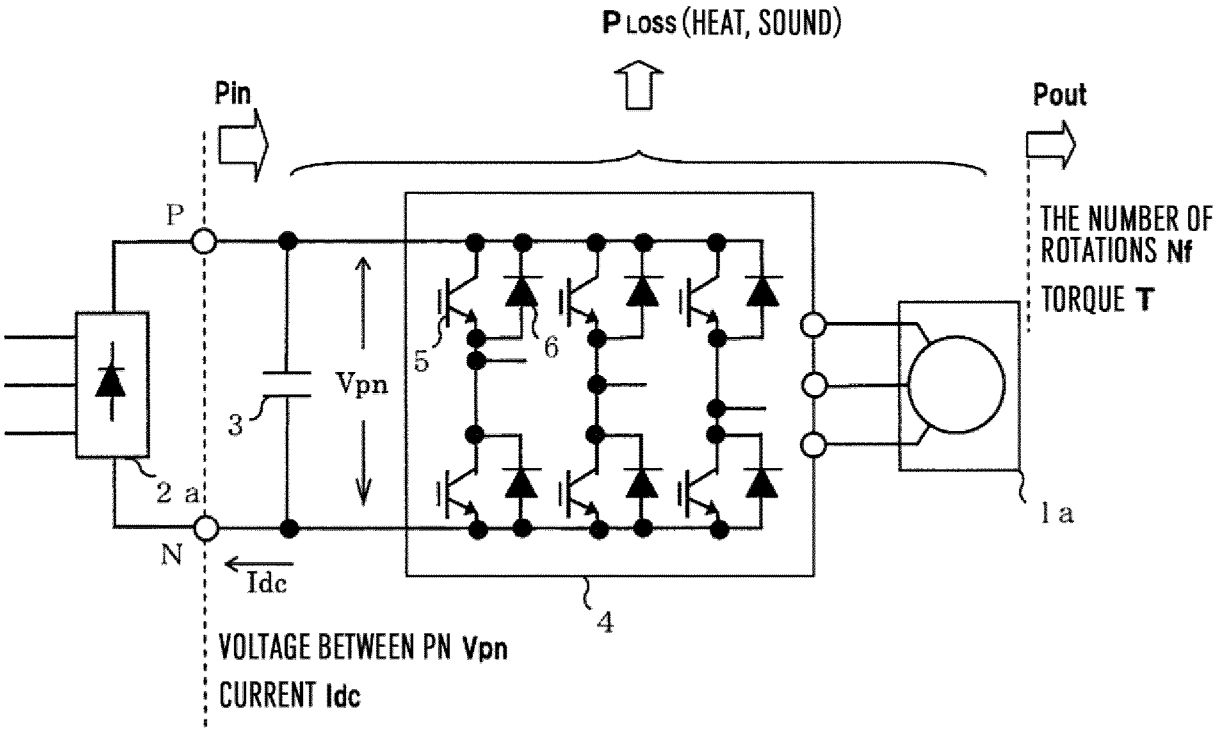
P LOSS (HEAT, SOUND)
Pin
Pout
P
N
THE NUMBER OF ROTATIONS Nf
TORQUE T
Vpn
Idc
2 a
3
5
6
4
1 a
VOLTAGE BETWEEN PN Vpn
CURRENT Idc

FIG. 3A

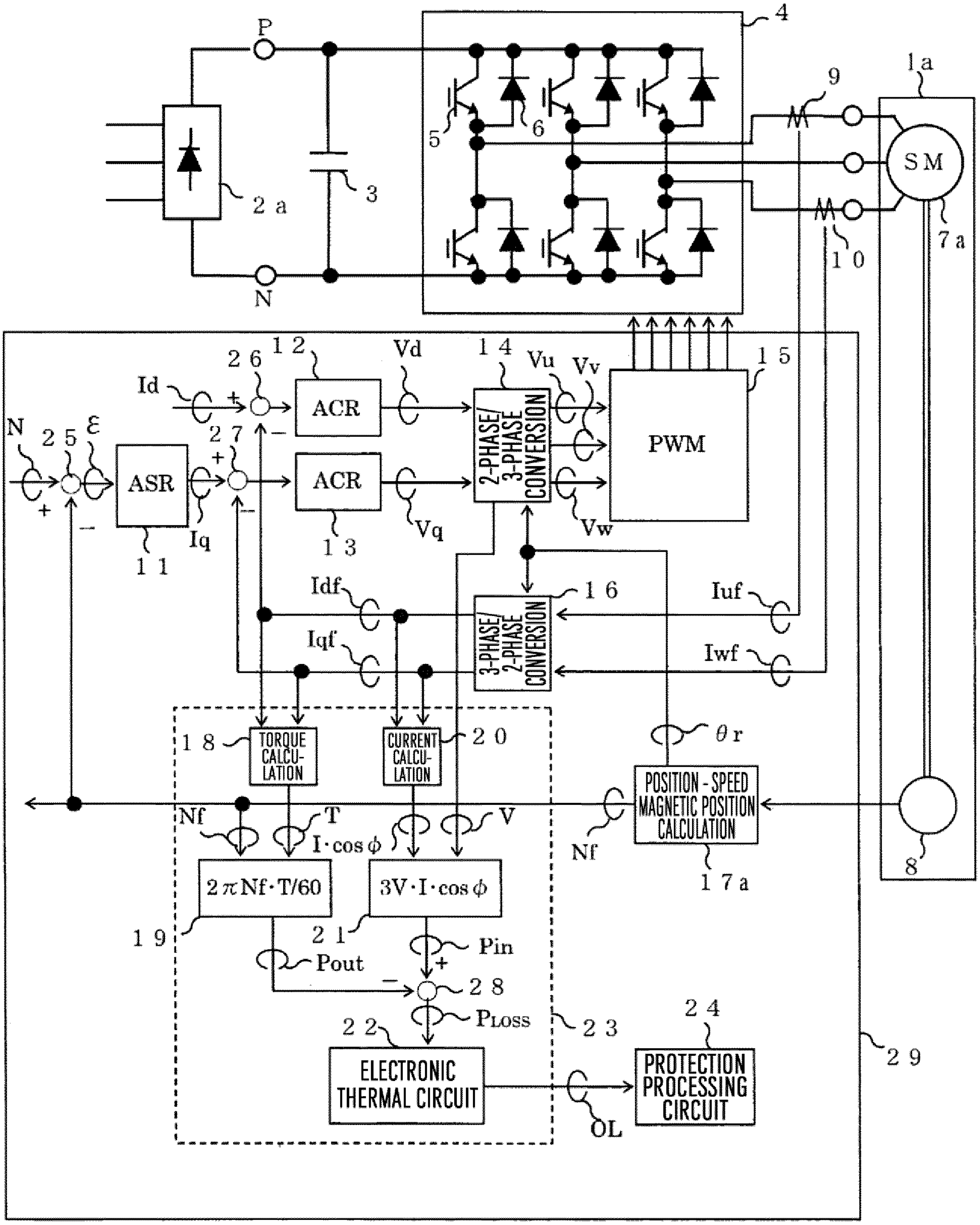
P
N
4
1a
9
SM
7a
10
5
6
2a
3
Id
26
12
ACR
Vd
14
Vu
Vv
15
N
25
ε
27
ASR
ACR
2-PHASE/3-PHASE CONVERSION
PWM
Iq
11
13
Vq
Vw
Idf
16
Iuf
Iqf
3-PHASE/2-PHASE CONVERSION
Iwf
18
TORQUE CALCU-LATION
CURRENT CALCU-LATION
20
θr
POSITION - SPEED MAGNETIC POSITION CALCULATION
Nf
T
I·cos φ
V
Nf
2πNf·T/60
3V·I·cos φ
17a
8
19
21
Pin
Pout
28
PLOSS
22
23
24
29
ELECTRONIC THERMAL CIRCUIT
OL
PROTECTION PROCESSING CIRCUIT

FIG. 3B

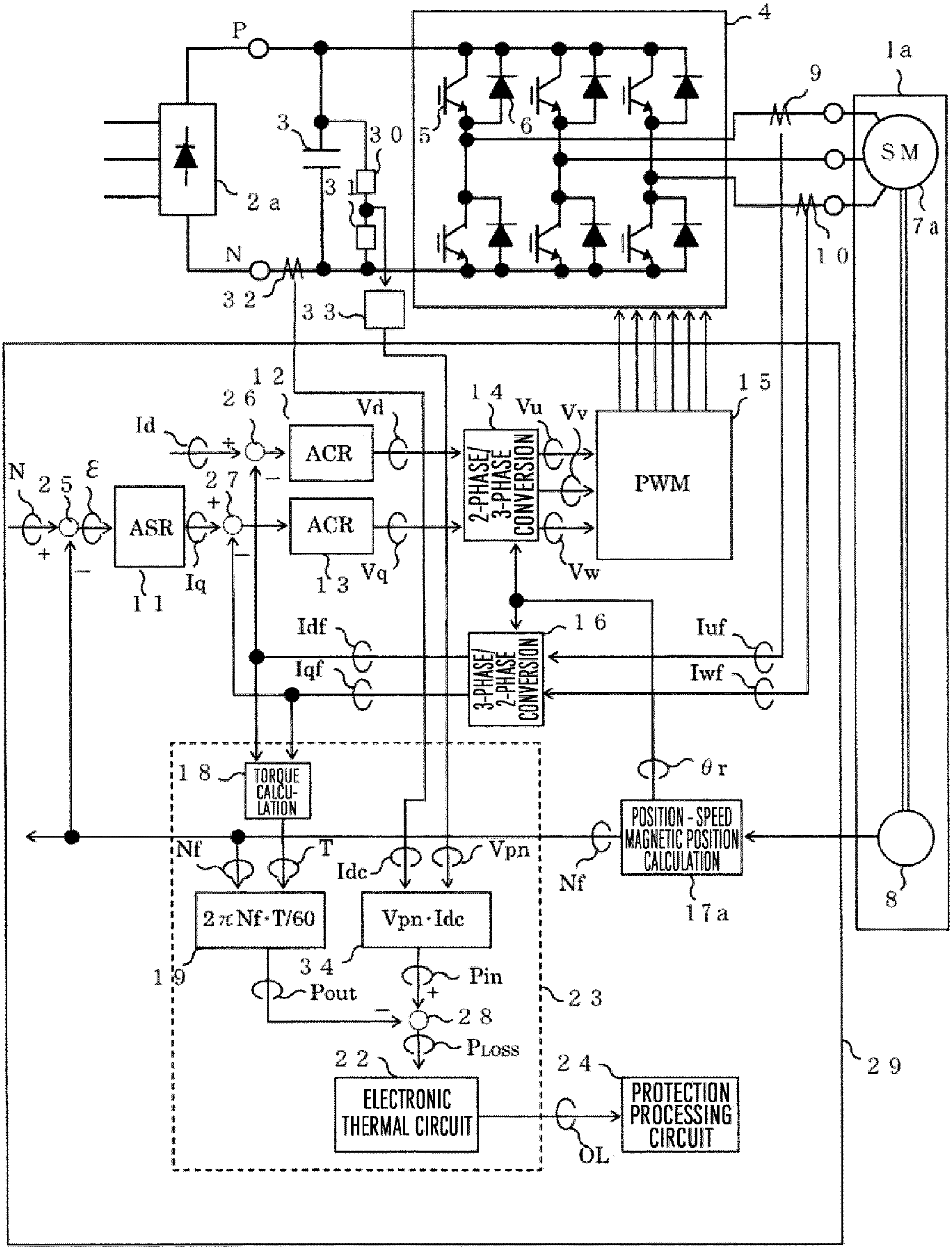
P
N
2a
3
30
31
32
33
4
5
6
9
10
1a
SM
7a
8
ACR
ACR
ASR
PWM
2-PHASE/ 3-PHASE CONVERSION
3-PHASE/ 2-PHASE CONVERSION
TORQUE CALCU-LATION
POSITION - SPEED MAGNETIC POSITION CALCULATION
2πNf·T/60
Vpn·Idc
ELECTRONIC THERMAL CIRCUIT
PROTECTION PROCESSING CIRCUIT
Id
Iq
N
ε
Vd
Vq
Vu
Vv
Vw
Idf
Iqf
Iuf
Iwf
θr
Nf
T
Idc
Vpn
Pin
Pout
PLOSS
OL
11
12
13
14
15
16
17a
18
19
22
23
24
25
26
27
28
29
34

FIG. 4A

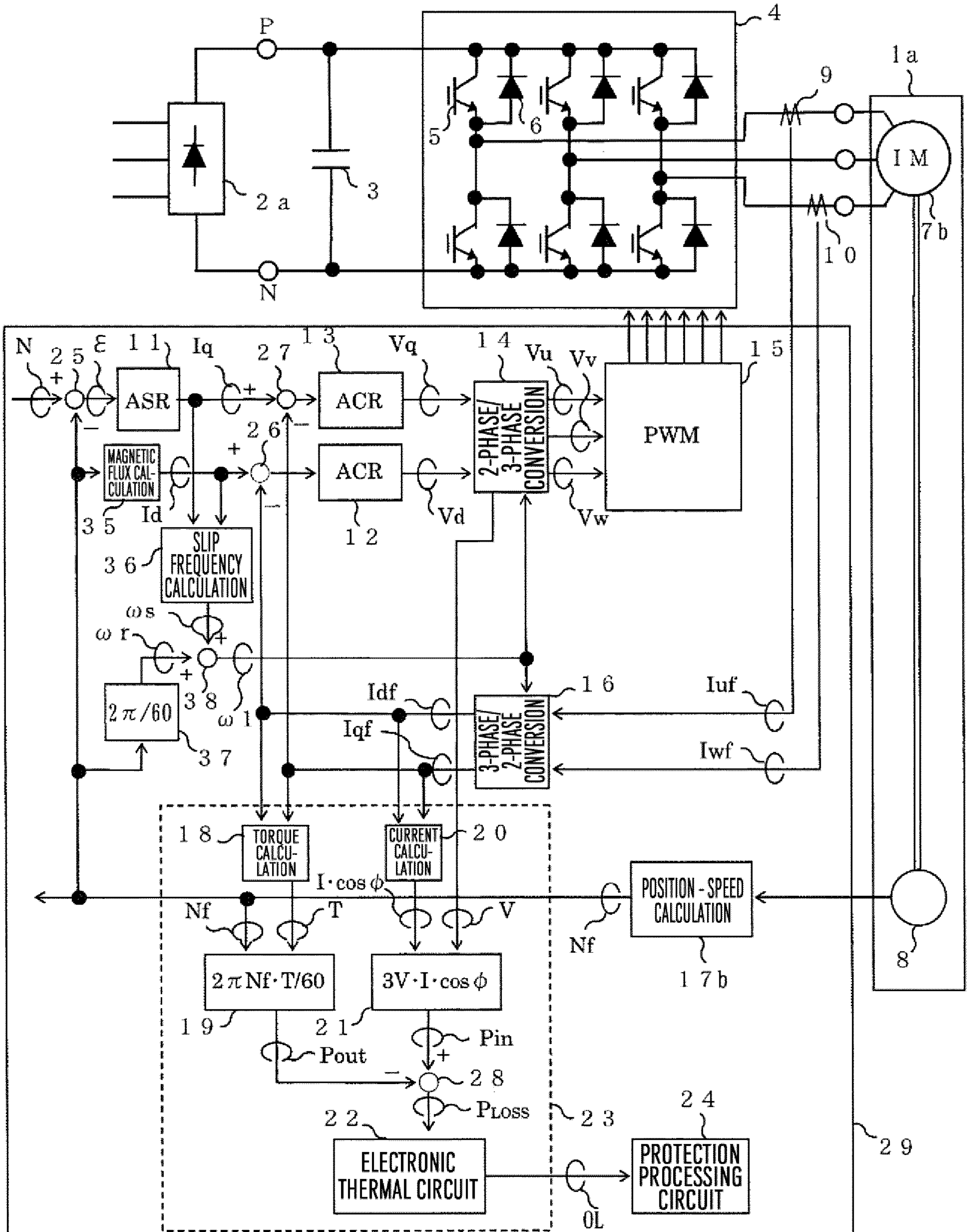
P
N
4
1a
9
IM
5
6
2a
3
7b
10
N
25
ε
11
Iq
27
13
Vq
14
Vu
Vv
15
ASR
ACR
PWM
26
MAGNETIC FLUX CAL-CULATION
ACR
2-PHASE/3-PHASE CONVERSION
Id
Vd
Vw
35
12
36
SLIP FREQUENCY CALCULATION
ωs
ωr
2π/60
38
ω1
37
Idf
16
Iuf
Iqf
3-PHASE/2-PHASE CONVERSION
Iwf
18
TORQUE CALCU-LATION
CURRENT CALCU-LATION
20
I·cosφ
Nf
T
V
POSITION - SPEED CALCULATION
Nf
8
2πNf·T/60
3V·I·cosφ
17b
19
21
Pin
Pout
28
PLoss
22
23
24
29
ELECTRONIC THERMAL CIRCUIT
PROTECTION PROCESSING CIRCUIT
0L

FIG. 4B

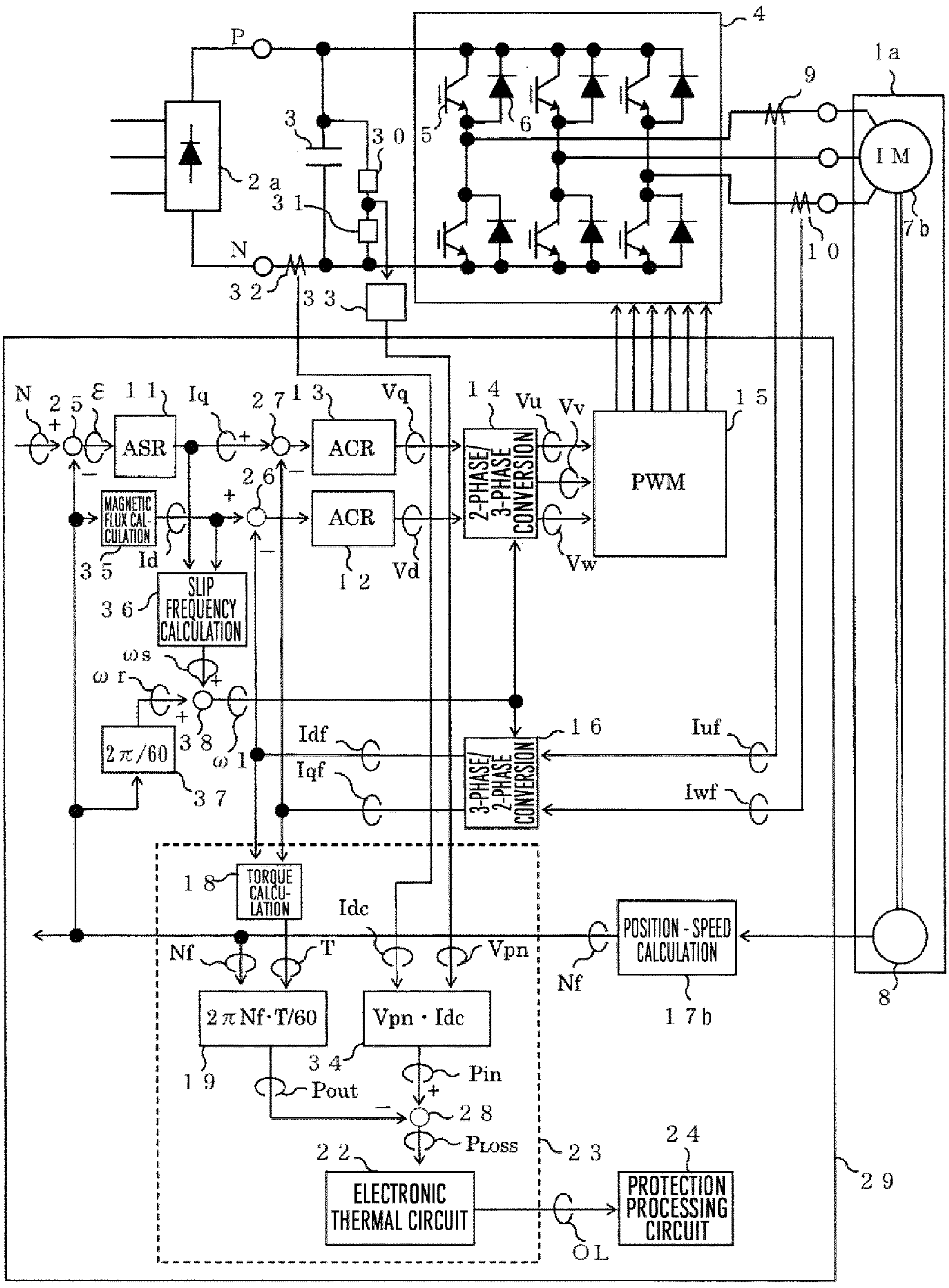
P
N
4
1a
9
3
30
5
6
2a
31
IM
7b
10
32
33
N
25
ε
11
Iq
27
13
Vq
14
Vu
Vv
15
ASR
ACR
PWM
2-PHASE/3-PHASE CONVERSION
26
MAGNETIC FLUX CAL-CULATION
ACR
35
Id
12
Vd
Vw
36
SLIP FREQUENCY CALCULATION
ωs
ωr
2π/60
38
ω1
Idf
16
Iuf
Iqf
Iwf
37
3-PHASE/2-PHASE CONVERSION
18
TORQUE CALCU-LATION
Idc
POSITION - SPEED CALCULATION
Nf
T
Vpn
Nf
2πNf·T/60
Vpn · Idc
17b
8
34
19
Pin
Pout
28
PLOSS
22
23
24
29
ELECTRONIC THERMAL CIRCUIT
PROTECTION PROCESSING CIRCUIT
OL

# FIG. 5A

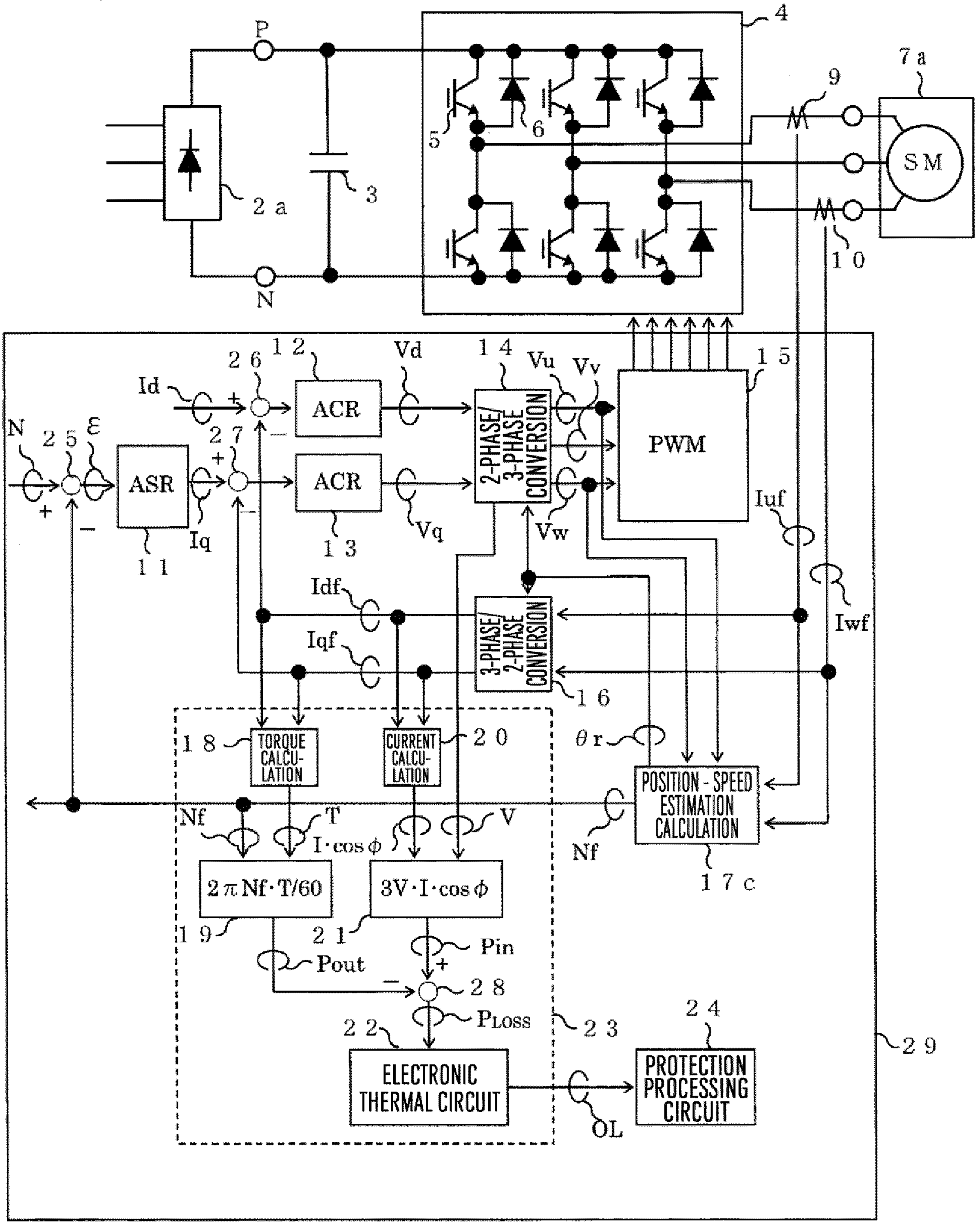
P
N
2 a
3
4
5
6
7 a
9
1 0
S M
1 2
1 4
1 5
2 6
Id
Vd
Vu
Vv
ACR
2-PHASE/ 3-PHASE CONVERSION
PWM
N
2 5
ε
2 7
ASR
ACR
Iq
1 1
1 3
Vq
Vw
Iuf
Iwf
Idf
Iqf
3-PHASE/ 2-PHASE CONVERSION
1 6
1 8
TORQUE CALCU- LATION
CURRENT CALCU- LATION
2 0
θ r
POSITION - SPEED ESTIMATION CALCULATION
Nf
T
I·cos φ
V
Nf
1 7 c
2 π Nf·T/60
3V·I·cos φ
1 9
2 1
Pin
Pout
2 8
PLOSS
2 2
2 3
2 4
2 9
ELECTRONIC THERMAL CIRCUIT
OL
PROTECTION PROCESSING CIRCUIT

FIG. 5B

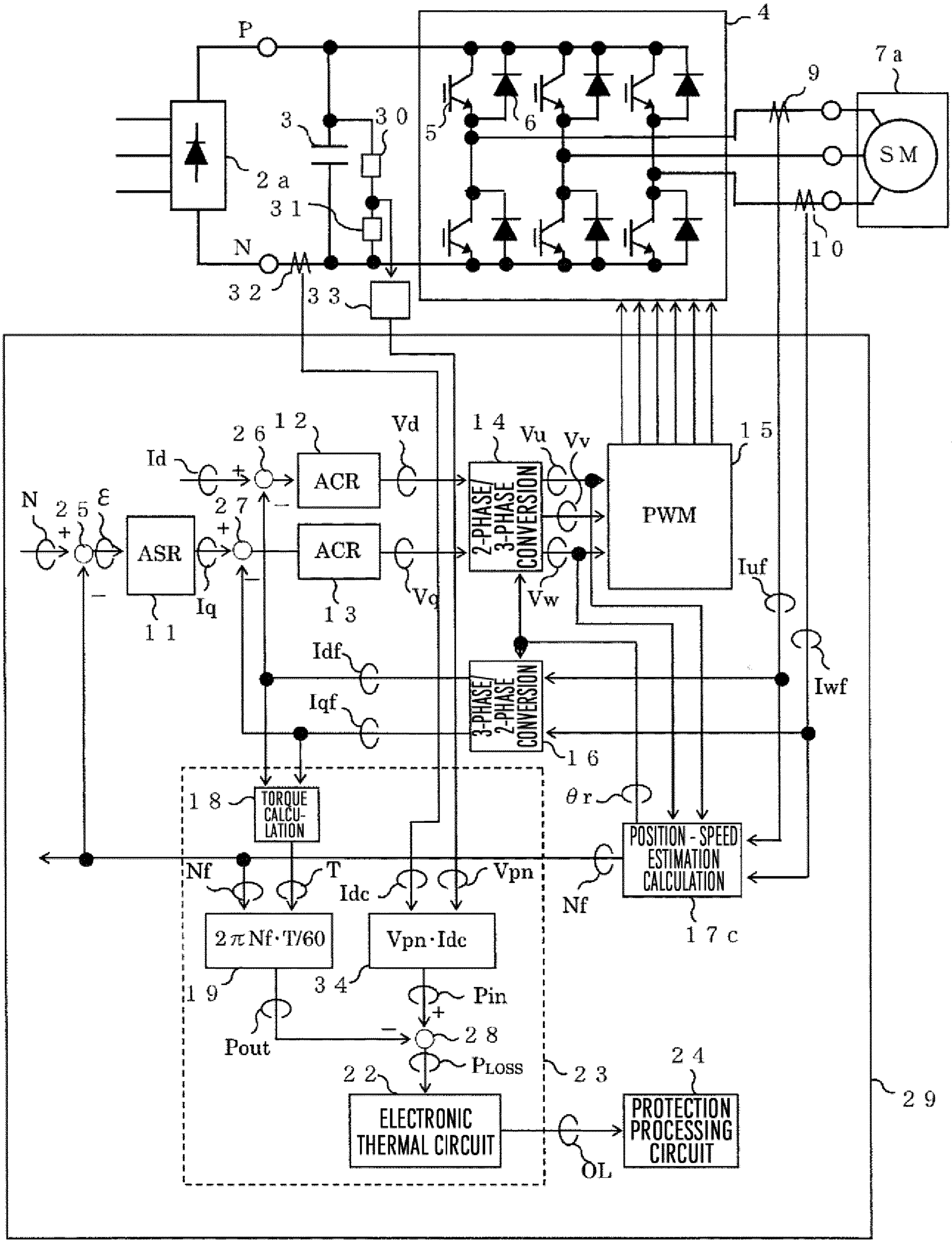
P
N
3
30
31
32
33
2a
4
5
6
9
10
7a
SM
N
25
ε
ASR
11
Id
26
12
ACR
Vd
Iq
27
ACR
13
Vq
14
2-PHASE/3-PHASE CONVERSION
Vu
Vv
Vw
15
PWM
Iuf
Iwf
Idf
Iqf
3-PHASE/2-PHASE CONVERSION
16
θr
18
TORQUE CALCU-LATION
POSITION - SPEED ESTIMATION CALCULATION
17c
Nf
T
Idc
Vpn
Nf
2πNf·T/60
Vpn·Idc
19
34
Pin
Pout
28
PLOSS
22
23
ELECTRONIC THERMAL CIRCUIT
OL
24
PROTECTION PROCESSING CIRCUIT
29

FIG. 6A

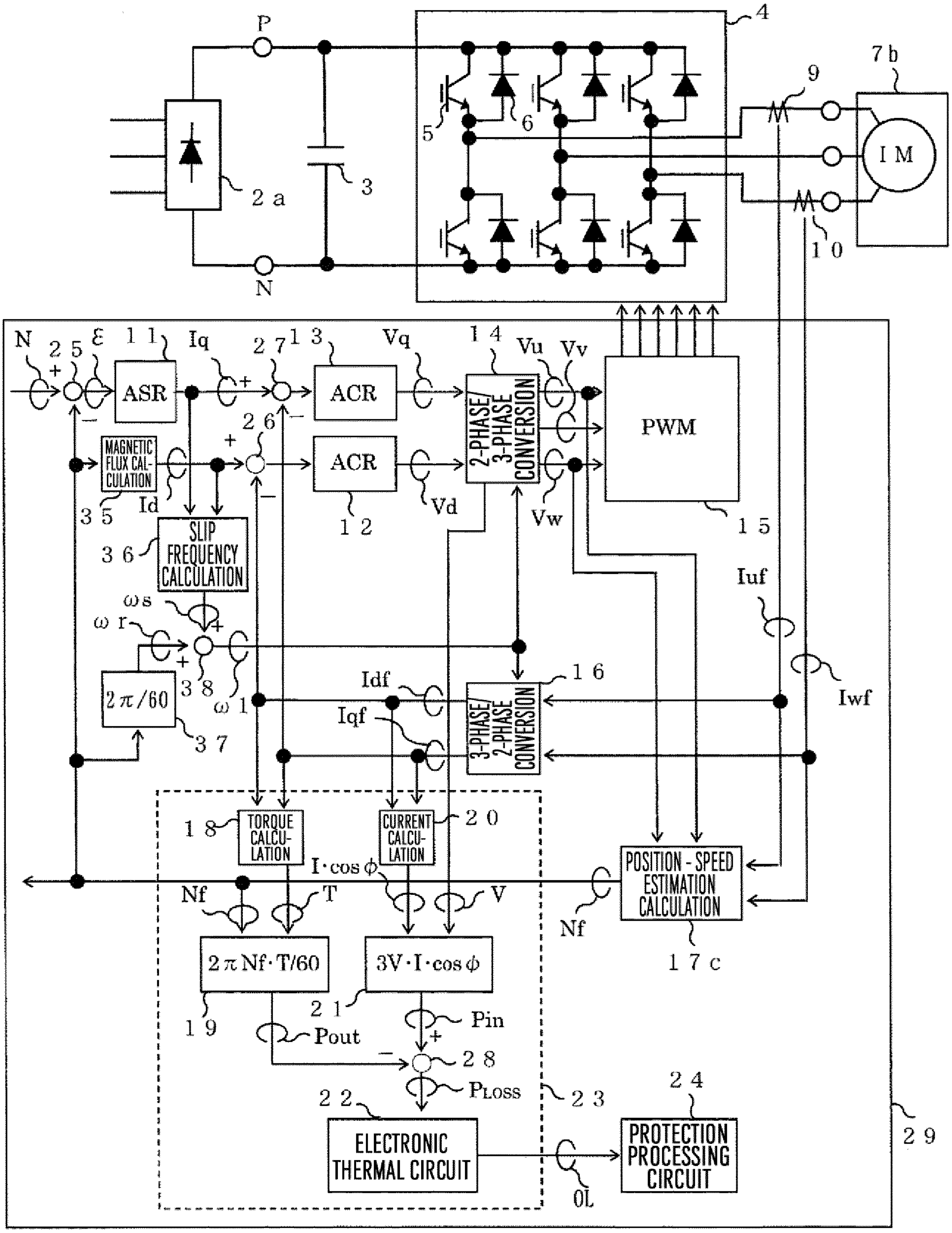
P
N
2 a
3
4
5
6
9
7 b
I M
1 0
N
2 5
ε
1 1
ASR
Iq
2 7
1 3
ACR
Vq
1 4
Vu
Vv
2-PHASE/ 3-PHASE CONVERSION
PWM
2 6
ACR
1 2
Vd
Vw
1 5
MAGNETIC FLUX CALCULATION
3 5
Id
SLIP FREQUENCY CALCULATION
3 6
ωs
ω r
3 8
ω 1
2π/60
3 7
Idf
Iqf
3-PHASE/ 2-PHASE CONVERSION
1 6
Iuf
Iwf
TORQUE CALCULATION
1 8
CURRENT CALCULATION
2 0
I·cos φ
Nf
T
V
POSITION - SPEED ESTIMATION CALCULATION
Nf
1 7 c
2πNf·T/60
3V·I·cos φ
1 9
2 1
Pin
Pout
2 8
PLOSS
2 2
2 3
2 4
ELECTRONIC THERMAL CIRCUIT
PROTECTION PROCESSING CIRCUIT
0L
2 9

FIG. 6B

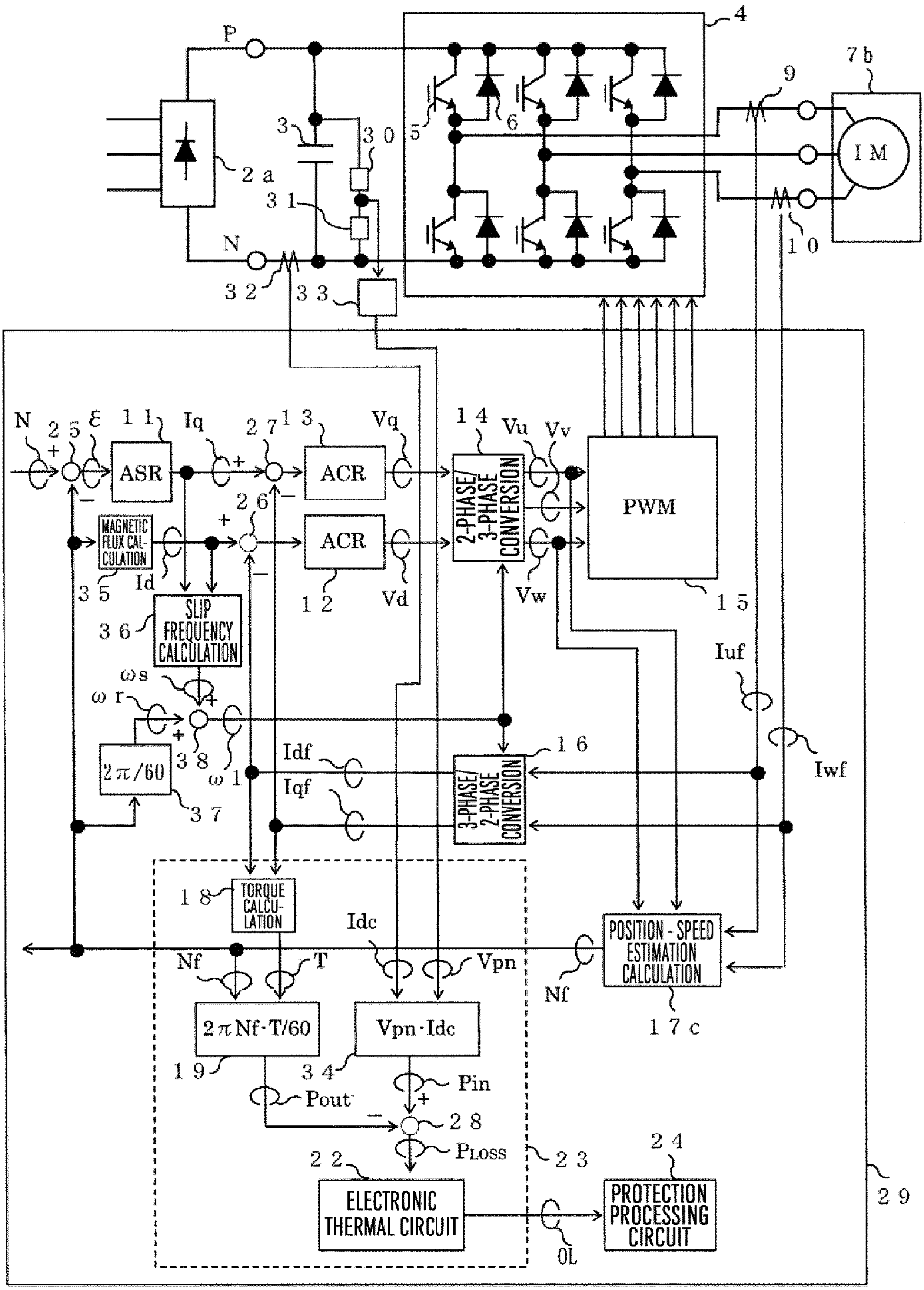
P
N
4
7b
9
IM
5
6
3
30
2a
31
10
32
33
N
25
ε
11
Iq
27
13
Vq
14
Vu
Vv
ASR
ACR
26
MAGNETIC FLUX CALCULATION
ACR
2-PHASE/3-PHASE CONVERSION
PWM
35
Id
12
Vd
Vw
15
36
SLIP FREQUENCY CALCULATION
Iuf
ωs
ωr
38
ω1
Idf
16
Iwf
2π/60
37
Iqf
3-PHASE/2-PHASE CONVERSION
18
TORQUE CALCULATION
Idc
POSITION - SPEED ESTIMATION CALCULATION
Nf
T
Vpn
Nf
2πNf·T/60
Vpn·Idc
17c
19
34
Pin
Pout
28
22
PLOSS
23
24
ELECTRONIC THERMAL CIRCUIT
PROTECTION PROCESSING CIRCUIT
29
OL

# FIG. 7A

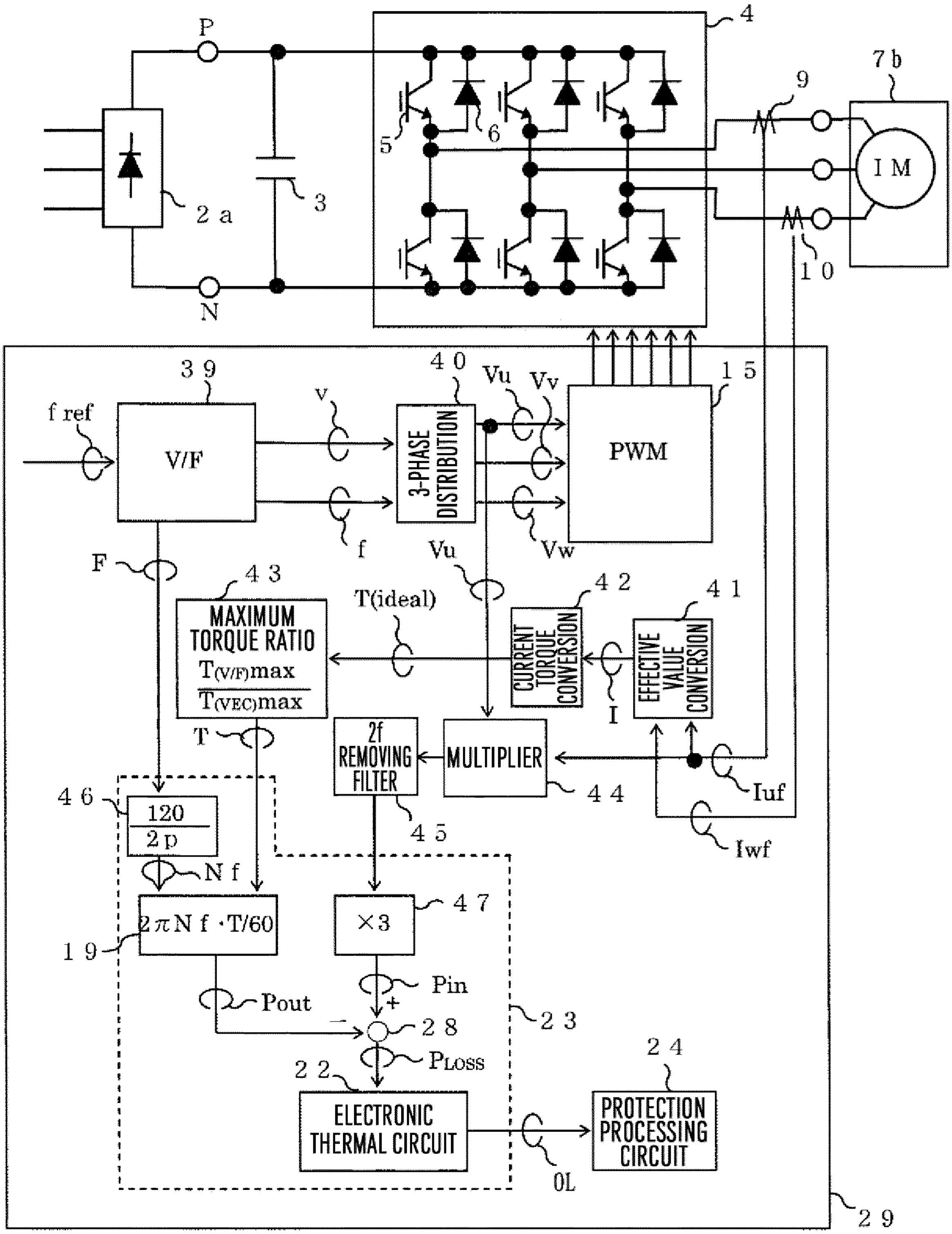
P
N
2 a
3
4
5
6
7 b
I M
9
1 0
3 9
f ref
V/F
v
f
F
4 0
3-PHASE DISTRIBUTION
Vu
Vv
Vw
PWM
1 5
4 3
MAXIMUM TORQUE RATIO
T(V/F)max / T(VEC)max
T(ideal)
4 2
CURRENT TORQUE CONVERSION
4 1
EFFECTIVE VALUE CONVERSION
I
T
2f REMOVING FILTER
MULTIPLIER
4 4
4 5
Iuf
Iwf
4 6
120 / 2 p
N f
2πN f ·T/60
1 9
×3
4 7
Pin
Pout
+
−
2 8
PLoss
2 3
2 2
ELECTRONIC THERMAL CIRCUIT
0L
2 4
PROTECTION PROCESSING CIRCUIT
2 9

FIG. 7B

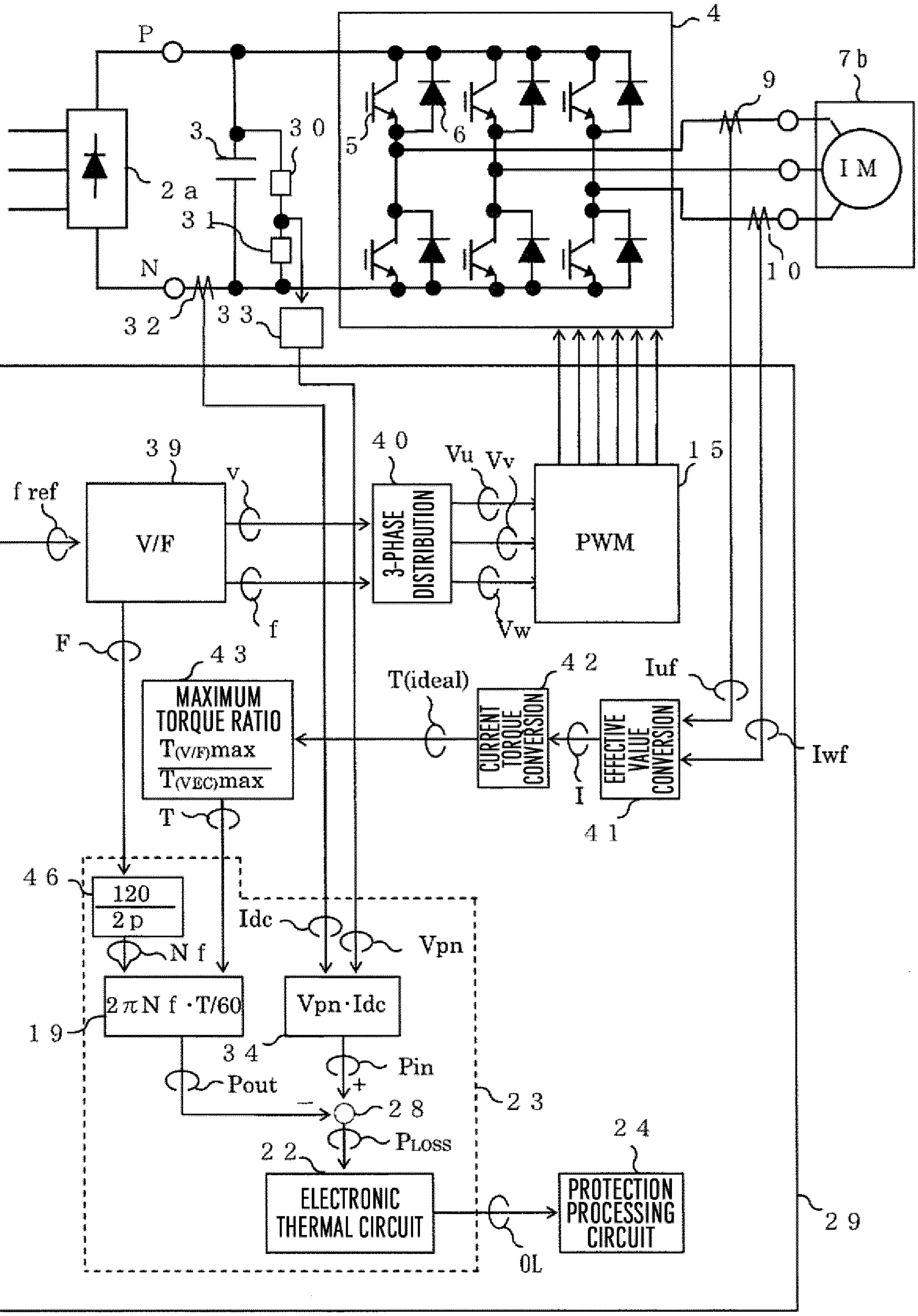
P
N
4
7b
9
IM
3
30
5
6
2a
31
10
32
33
39
40
15
f ref
v
Vu
Vv
V/F
3-PHASE DISTRIBUTION
PWM
f
Vw
F
43
42
Iuf
T(ideal)
MAXIMUM TORQUE RATIO
$T_{(V/F)}max$ / $T_{(VEC)}max$
CURRENT TORQUE CONVERSION
EFFECTIVE VALUE CONVERSION
Iwf
I
T
41
46
120 / 2p
Idc
Vpn
N f
2πN f ·T/60
Vpn·Idc
19
34
Pin
Pout
28
23
PLOSS
22
24
ELECTRONIC THERMAL CIRCUIT
PROTECTION PROCESSING CIRCUIT
29
0L

FIG. 8

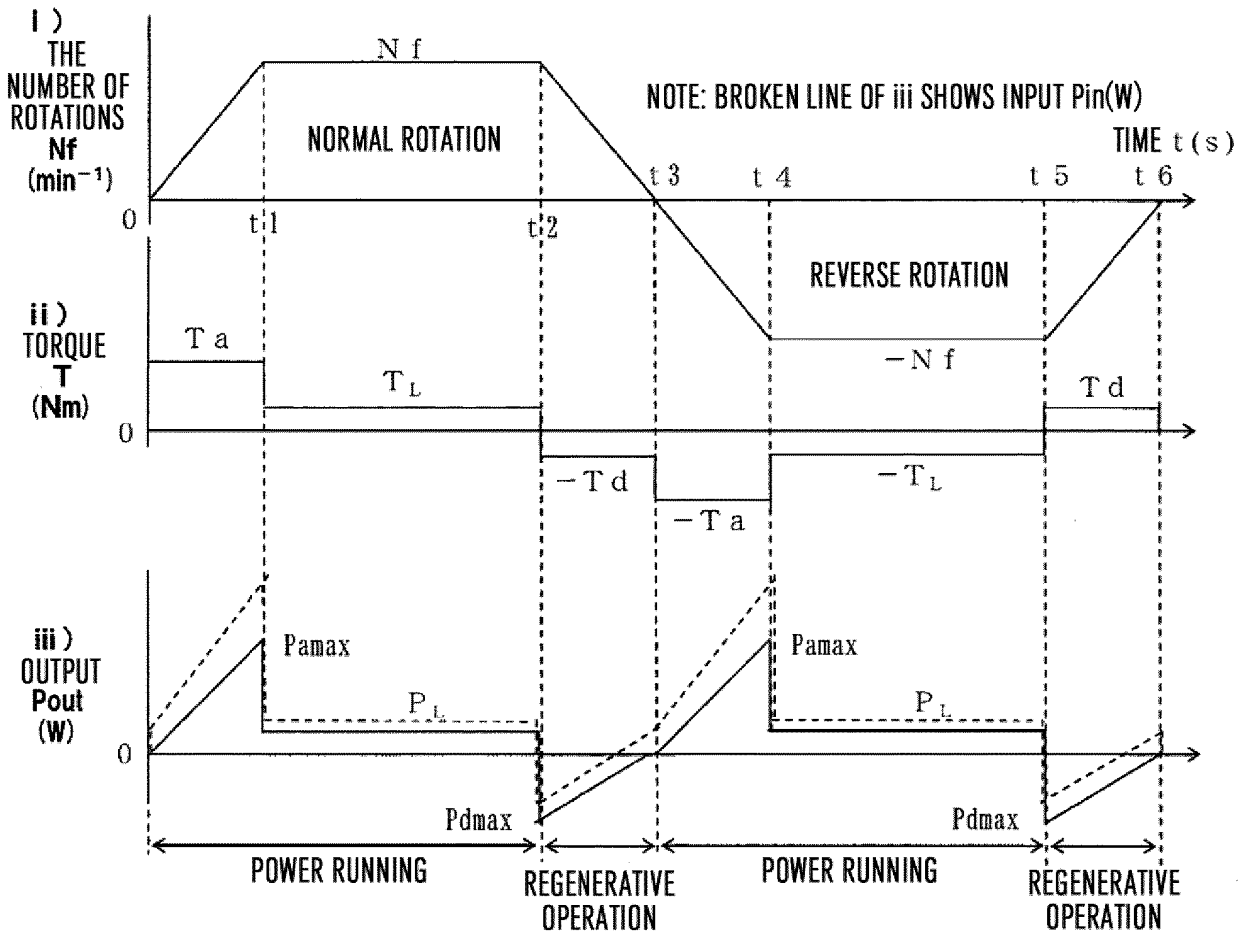
I) THE NUMBER OF ROTATIONS Nf (min⁻¹)
Nf
NOTE: BROKEN LINE OF iii SHOWS INPUT Pin(W)
NORMAL ROTATION
TIME t(s)
t3 t4 t5 t6
0 t1 t2
REVERSE ROTATION
ii) TORQUE T (Nm)
Ta
-Nf
TL
Td
0
-Td
-TL
-Ta
iii) OUTPUT Pout (W)
Pamax
Pamax
PL
PL
0
Pdmax
Pdmax
POWER RUNNING
REGENERATIVE OPERATION
POWER RUNNING
REGENERATIVE OPERATION

FIG. 9

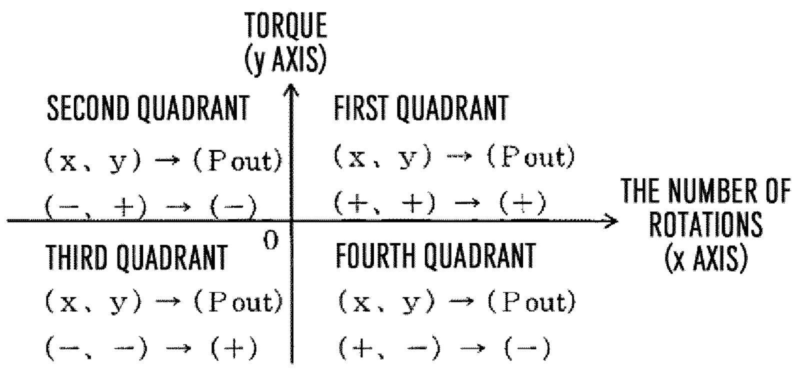
TORQUE (y AXIS)
SECOND QUADRANT
(x、y) → (Pout)
(−、+) → (−)
FIRST QUADRANT
(x、y) → (Pout)
(+、+) → (+)
THE NUMBER OF ROTATIONS (x AXIS)
0
THIRD QUADRANT
(x、y) → (Pout)
(−、−) → (+)
FOURTH QUADRANT
(x、y) → (Pout)
(+、−) → (−)

FIG. 10

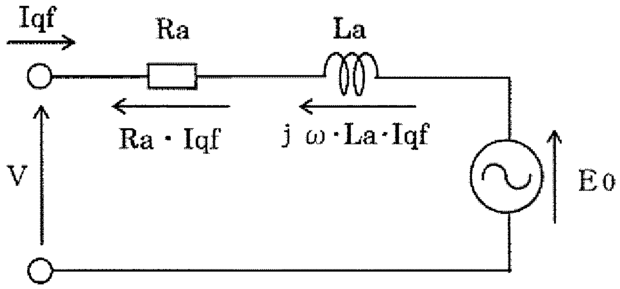


EQUIVALENT CIRCUIT OF ONE PHASE

FIG. 11

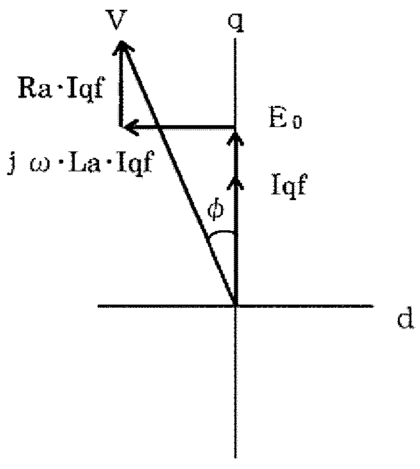


[VECTOR AT THE TIME OF POWER RUNNING OF PERMANENT-MAGNET SYNCHRONOUS MOTOR(Id=0)]

# FIG. 12

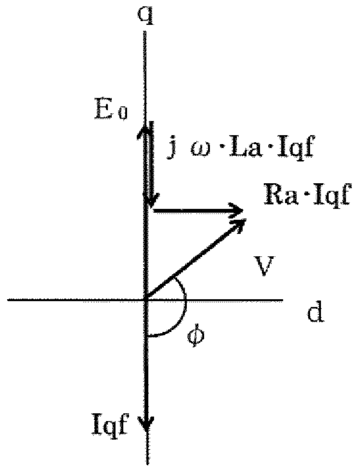


[VECTOR AT THE TIME OF REGENERATIVE OPERATION OF PERMANENT-MAGNET SYNCHRONOUS MOTOR(Id=0)]

# FIG. 13

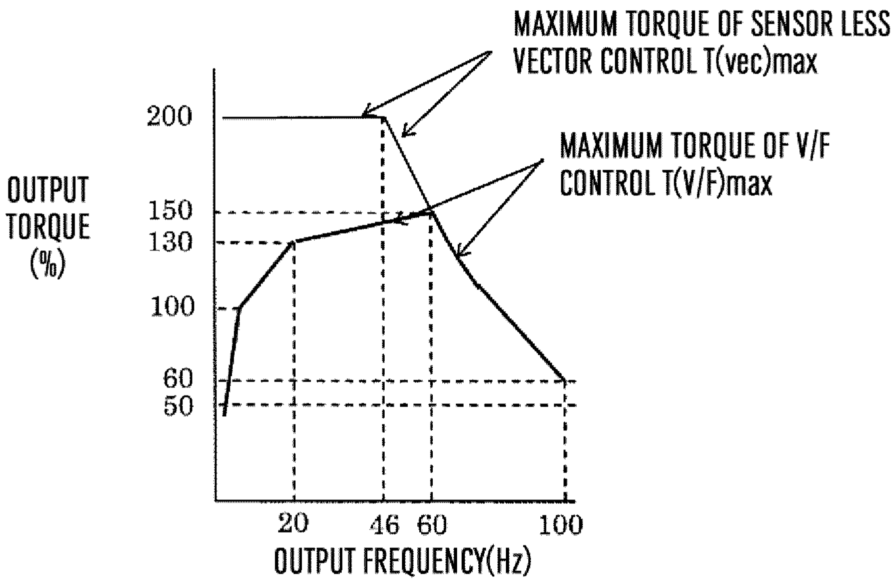

FIG. 14

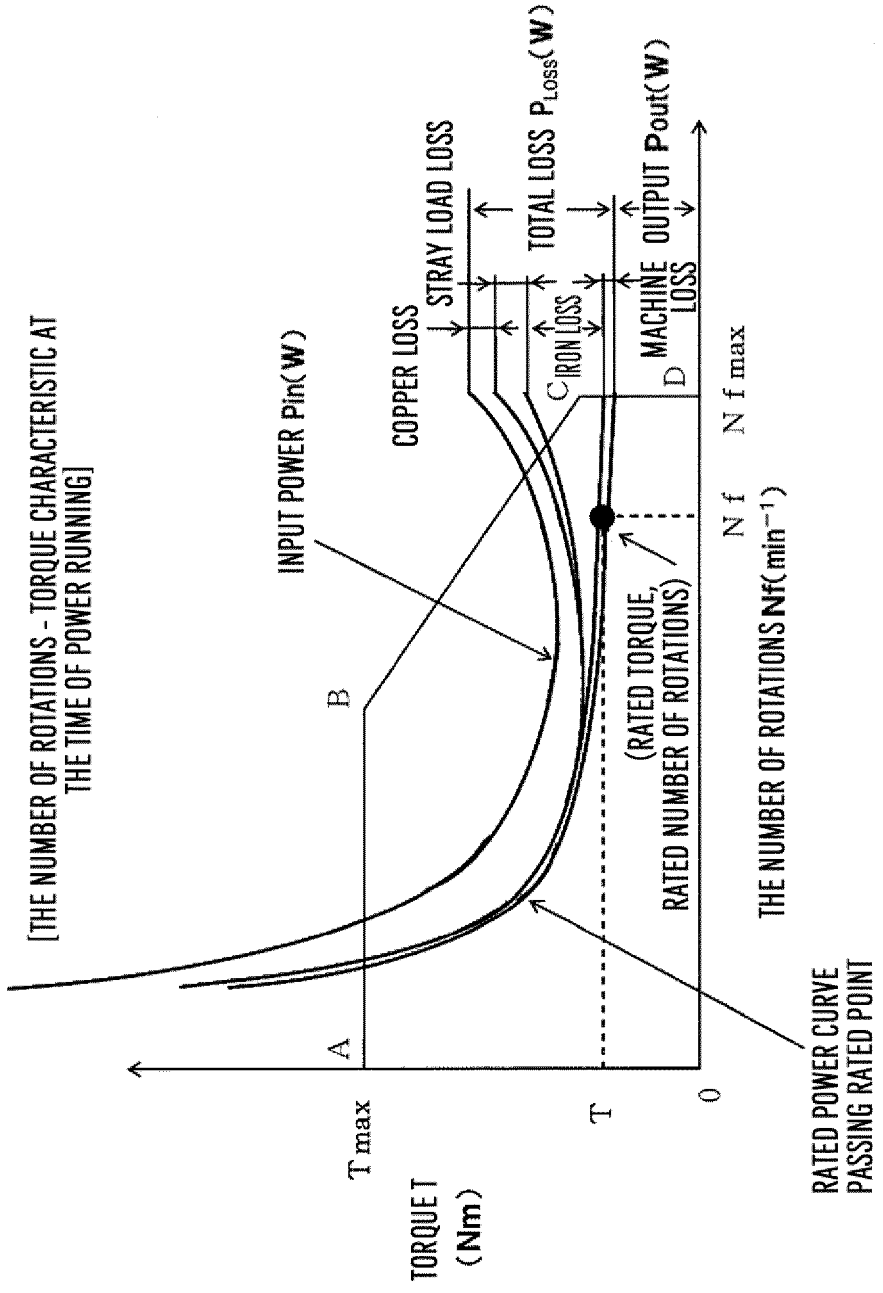
[THE NUMBER OF ROTATIONS - TORQUE CHARACTERISTIC AT THE TIME OF POWER RUNNING]
INPUT POWER Pin(W)
COPPER LOSS
STRAY LOAD LOSS
TOTAL LOSS $P_{LOSS}$(W)
OUTPUT Pout(W)
IRON LOSS
MACHINE LOSS
A
B
C
D
T max
T
0
TORQUE T (Nm)
(RATED TORQUE, RATED NUMBER OF ROTATIONS)
N f
N f max
THE NUMBER OF ROTATIONS Nf($min^{-1}$)
RATED POWER CURVE PASSING RATED POINT

# FIG. 15

[THE NUMBER OF ROTATIONS - TORQUE CHARACTERISTIC AT THE TIME OF REGENERATIVE OPERATION]

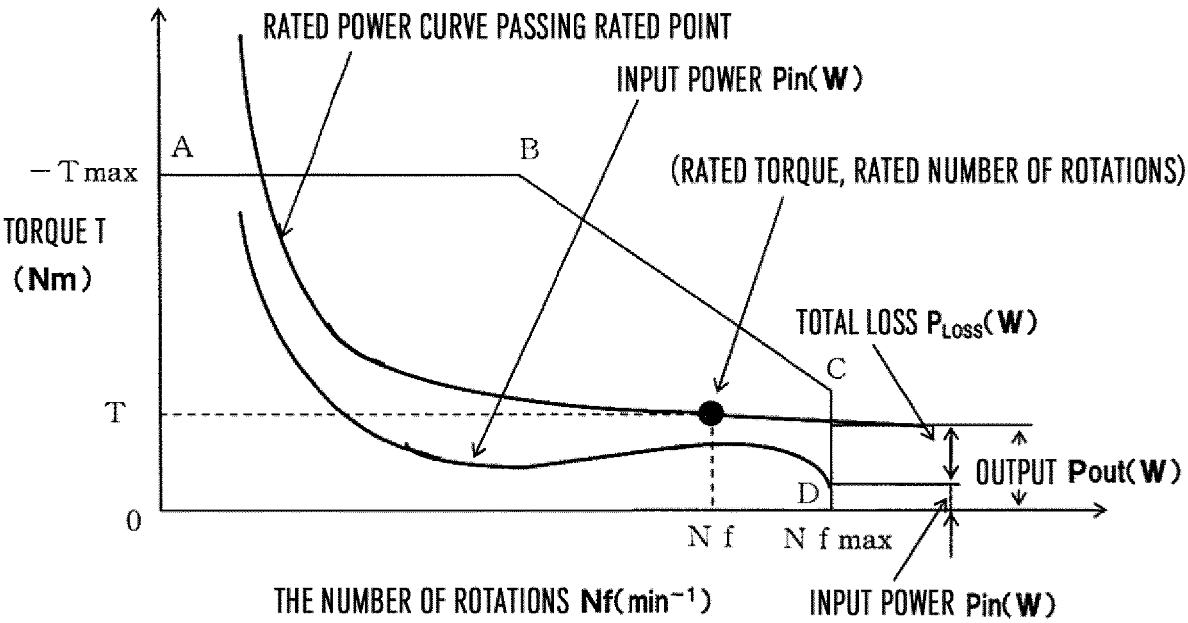

FIG. 16

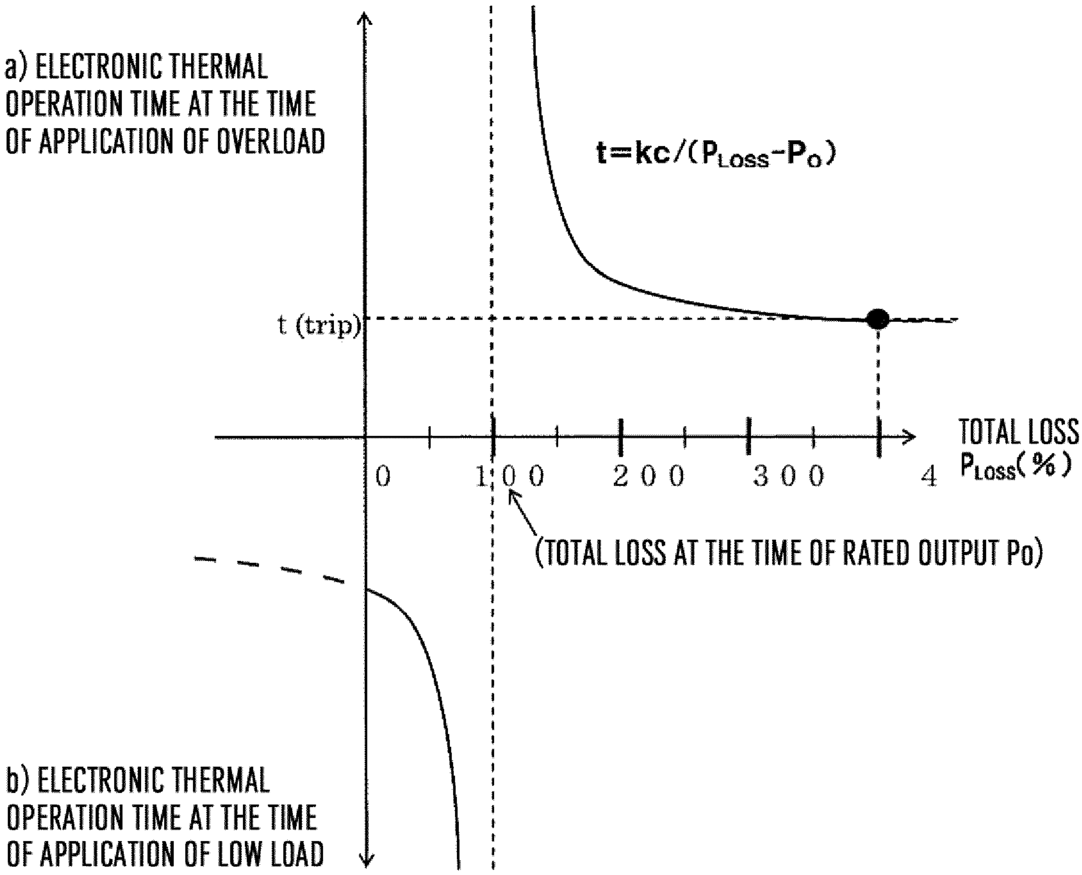
a) ELECTRONIC THERMAL OPERATION TIME AT THE TIME OF APPLICATION OF OVERLOAD
t=kc/(PLoss-Po)
t (trip)
0
100
200
300
4
TOTAL LOSS
PLoss(%)
(TOTAL LOSS AT THE TIME OF RATED OUTPUT Po)
b) ELECTRONIC THERMAL OPERATION TIME AT THE TIME OF APPLICATION OF LOW LOAD

FIG. 17

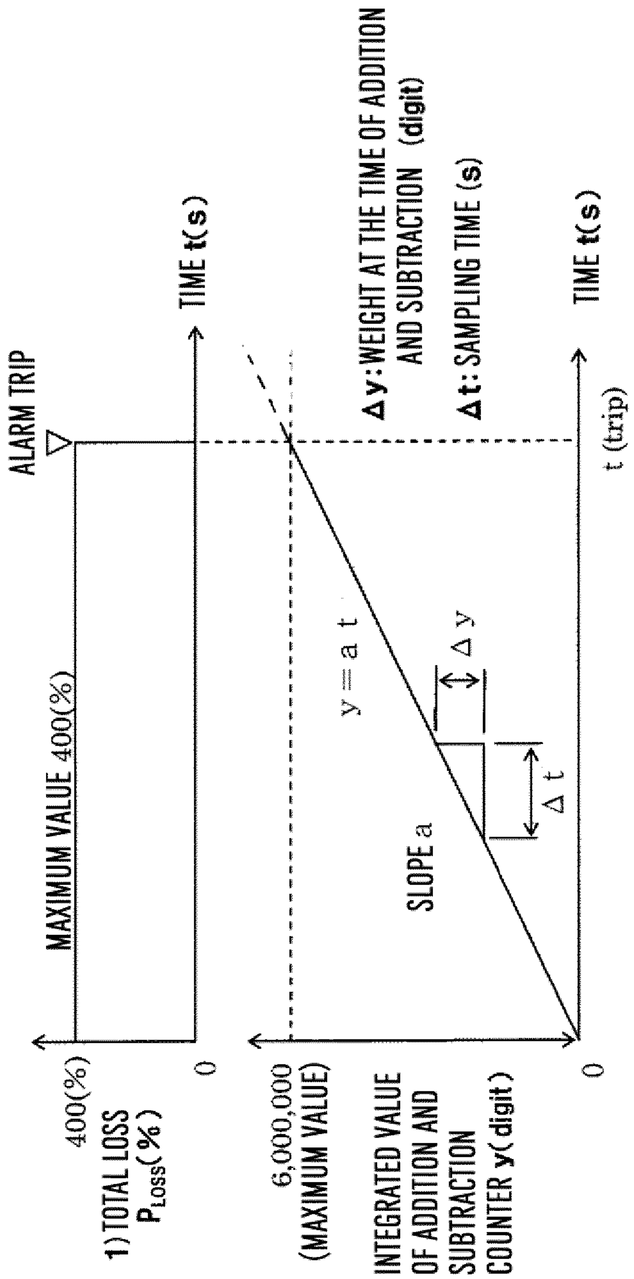

1) TOTAL LOSS
$P_{LOSS}$(%)
400(%)
0
MAXIMUM VALUE 400(%)
ALARM TRIP
TIME t(s)
6,000,000
(MAXIMUM VALUE)
2) INTEGRATED VALUE OF ADDITION AND SUBTRACTION COUNTER y(digit)
0
SLOPE a
y = a t
Δ y
Δ t
t (trip)
TIME t(s)
Δy: WEIGHT AT THE TIME OF ADDITION AND SUBTRACTION (digit)
Δt: SAMPLING TIME (s)

FIG. 18

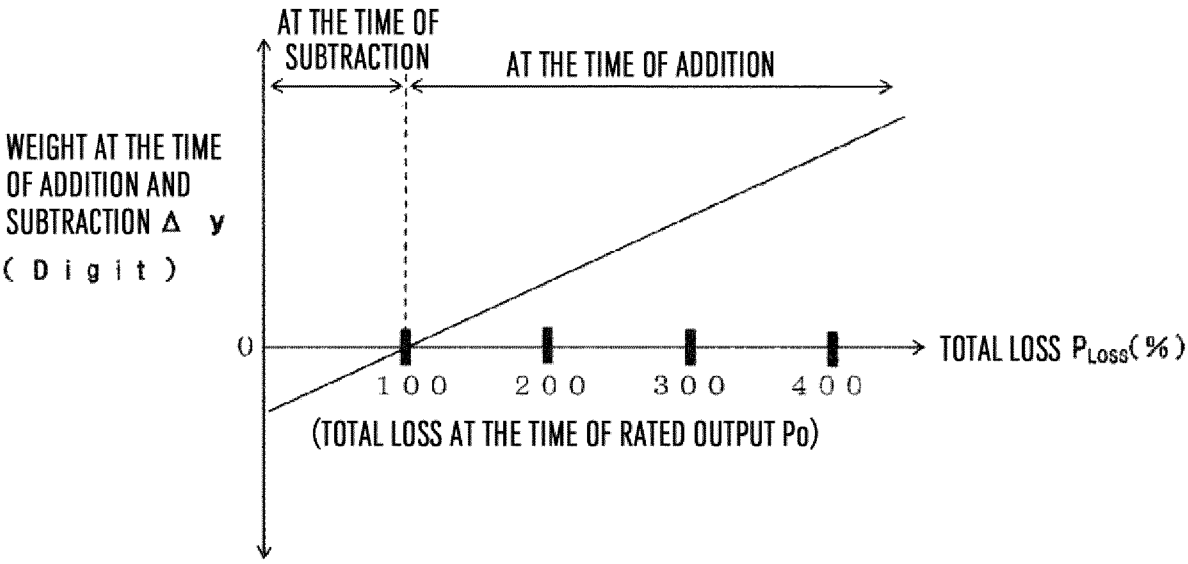
AT THE TIME OF SUBTRACTION
AT THE TIME OF ADDITION
WEIGHT AT THE TIME OF ADDITION AND SUBTRACTION Δ y
( D i g i t )
0
100
200
300
400
TOTAL LOSS P_LOSS(%)
(TOTAL LOSS AT THE TIME OF RATED OUTPUT Po)

FIG. 19

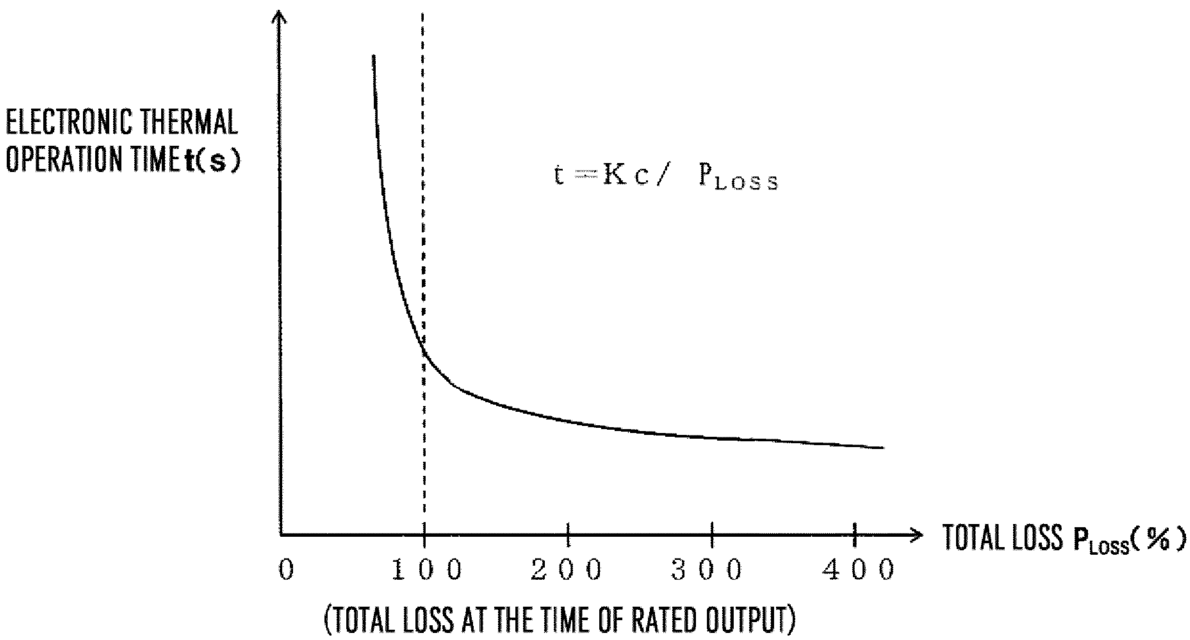
ELECTRONIC THERMAL OPERATION TIME t(s)
t = Kc/ P_Loss
0
100
200
300
400
TOTAL LOSS P_LOSS(%)
(TOTAL LOSS AT THE TIME OF RATED OUTPUT)

FIG. 20

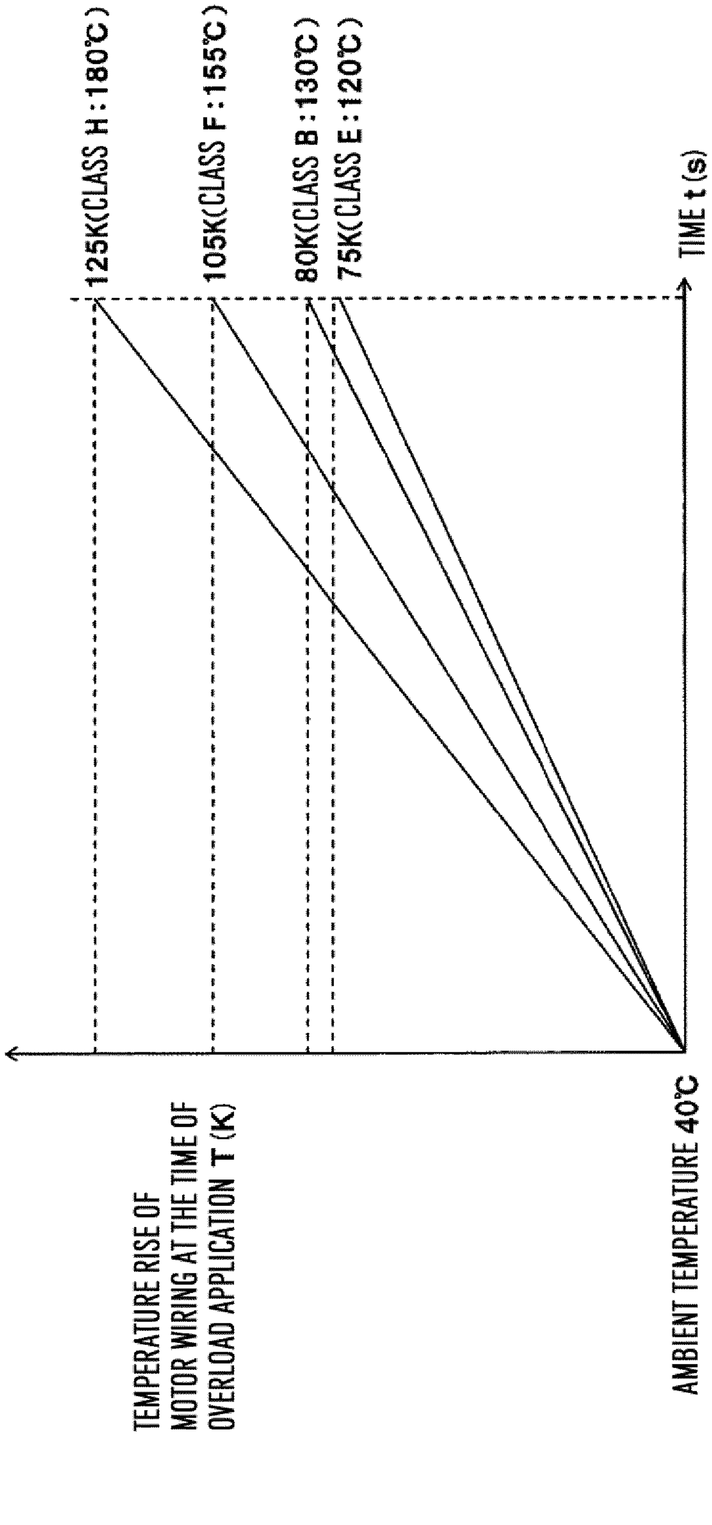
125K(CLASS H:180℃)
105K(CLASS F:155℃)
80K(CLASS B:130℃)
75K(CLASS E:120℃)
TIME t (s)
TEMPERATURE RISE OF MOTOR WIRING AT THE TIME OF OVERLOAD APPLICATION T (K)
AMBIENT TEMPERATURE 40℃

FIG. 21

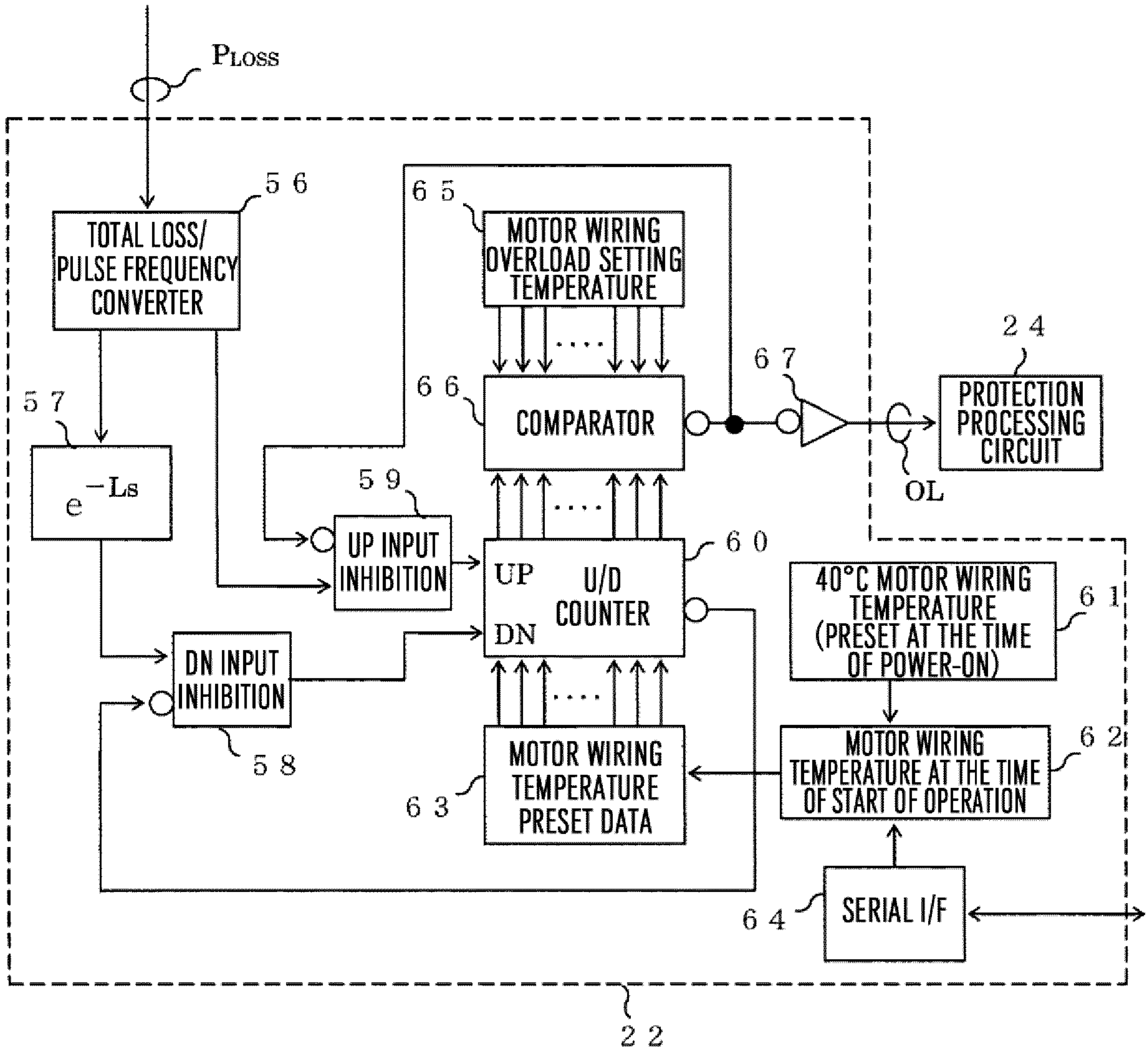
PLOSS
56
TOTAL LOSS/ PULSE FREQUENCY CONVERTER
57
$e^{-Ls}$
65
MOTOR WIRING OVERLOAD SETTING TEMPERATURE
66
COMPARATOR
67
24
PROTECTION PROCESSING CIRCUIT
OL
59
UP INPUT INHIBITION
60
UP
DN
U/D COUNTER
61
40°C MOTOR WIRING TEMPERATURE (PRESET AT THE TIME OF POWER-ON)
DN INPUT INHIBITION
58
62
MOTOR WIRING TEMPERATURE AT THE TIME OF START OF OPERATION
63
MOTOR WIRING TEMPERATURE PRESET DATA
64
SERIAL I/F
22

FIG. 22

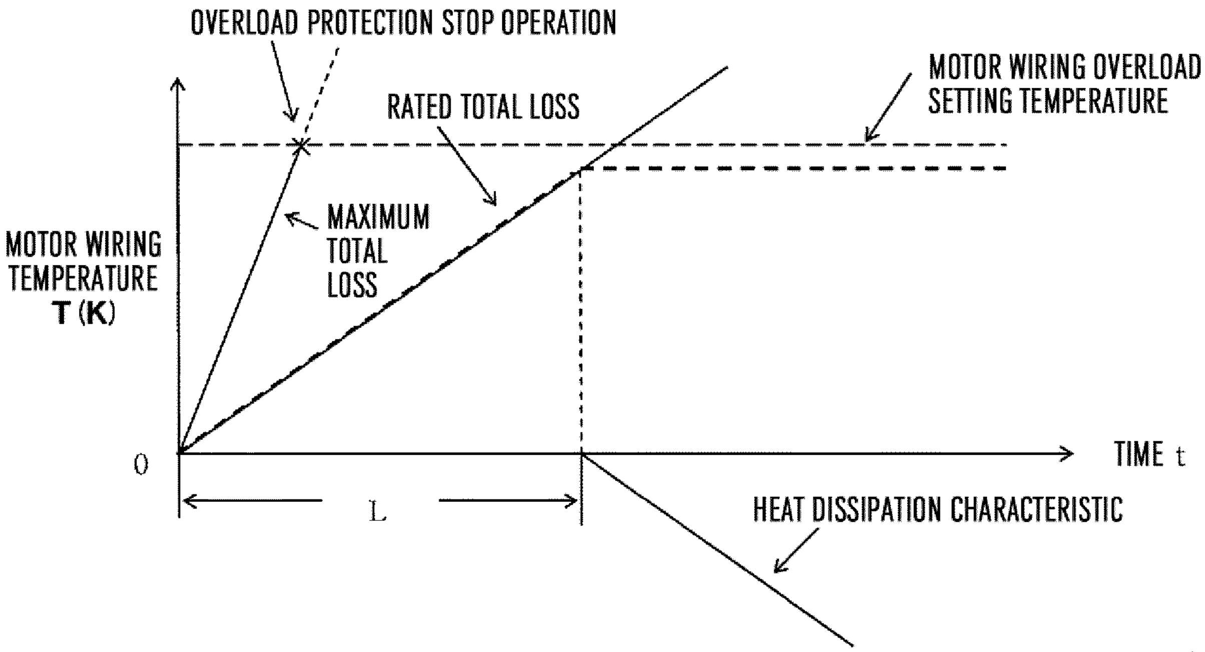
OVERLOAD PROTECTION STOP OPERATION
RATED TOTAL LOSS
MOTOR WIRING OVERLOAD SETTING TEMPERATURE
MAXIMUM TOTAL LOSS
MOTOR WIRING TEMPERATURE T (K)
0
TIME t
L
HEAT DISSIPATION CHARACTERISTIC

FIG. 23

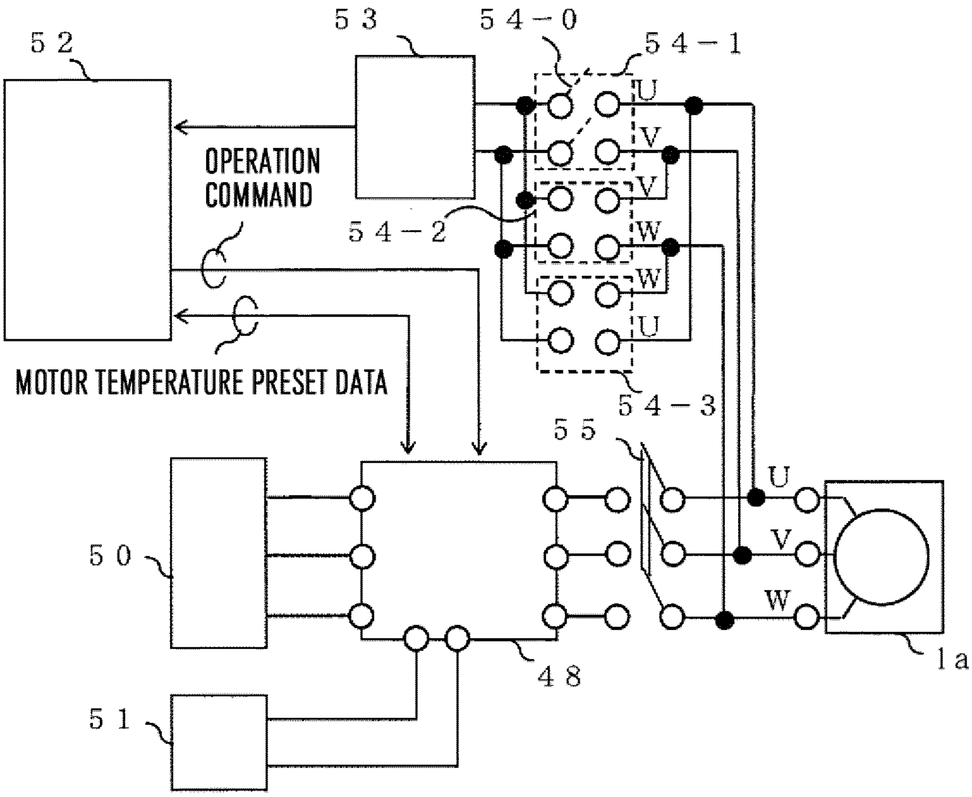
52
53
54-0
54-1
U
V
V
W
W
U
OPERATION COMMAND
54-2
MOTOR TEMPERATURE PRESET DATA
54-3
55
U
V
W
50
48
1a
51

FIG. 24

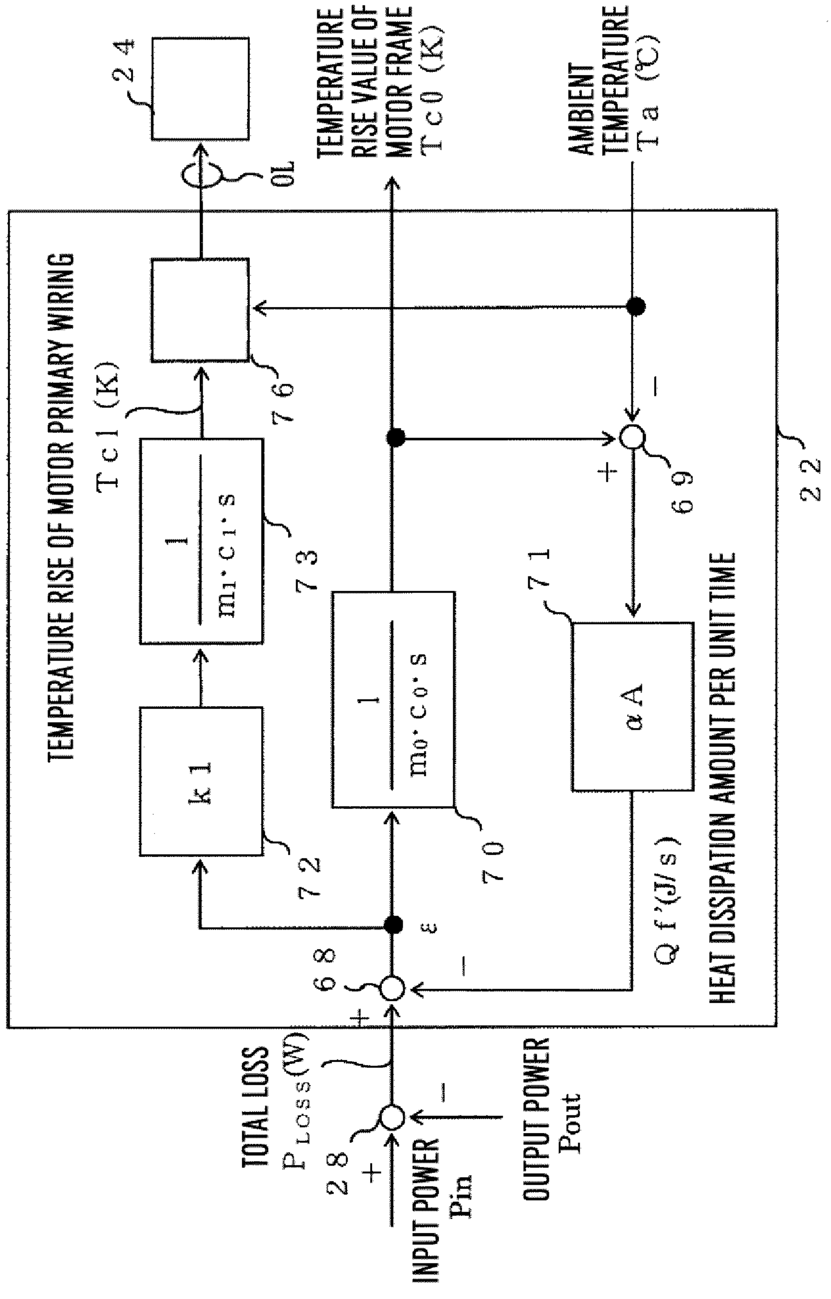
TEMPERATURE RISE OF MOTOR PRIMARY WIRING
T c 1 (K)
k 1
1
m1·c1·s
1
m0·c0·s
α A
24
OL
76
73
72
70
71
69
68
28
22
TEMPERATURE RISE VALUE OF MOTOR FRAME
T c 0 (K)
AMBIENT TEMPERATURE
T a (℃)
TOTAL LOSS
PLOSS(W)
INPUT POWER
Pin
OUTPUT POWER
Pout
ε
Q f '(J/s)
HEAT DISSIPATION AMOUNT PER UNIT TIME

FIG. 25

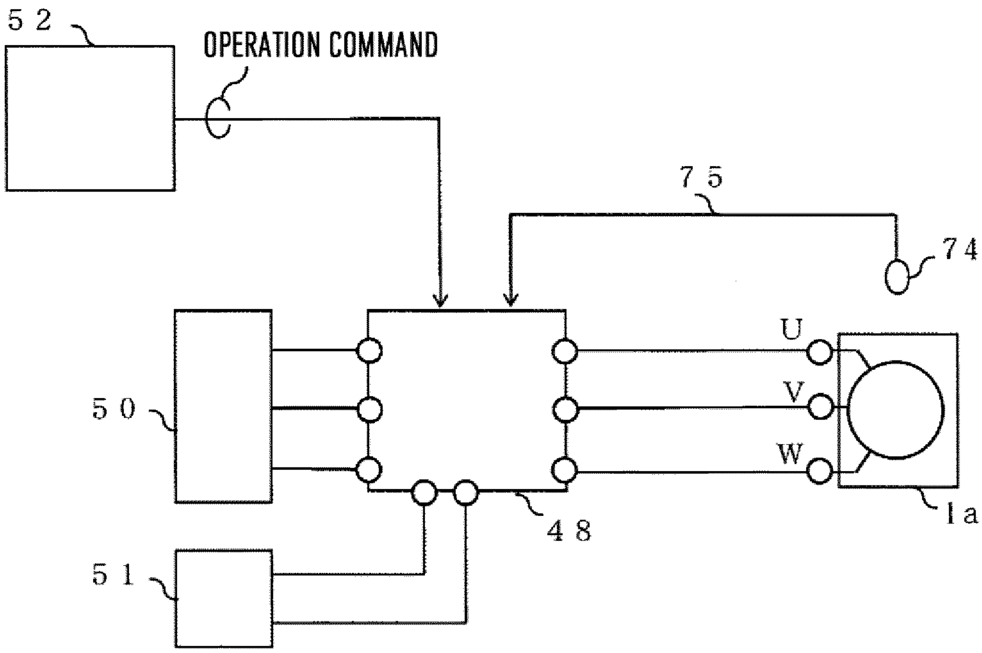

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008172949 A
- JP 10174276 A
- JP 2008220002 A
- US 2012249039 A1
- JP 2007104778 A
- DE 102012200199 A1

### Non-patent literature cited in the description

- **HITACHI HYORONSHA.** Feature 2: Recent industrial motor drive appliances and their applications. *Hitachi review,* March 2001, vol. 83 (3